(19) Europäisches Patentamt
European Patent Office
Office européen des brevets

(11) **EP 4 628 933 A1**

(12) **EUROPEAN PATENT APPLICATION**
published in accordance with Art. 153(4) EPC

(43) Date of publication:
**08.10.2025 Bulletin 2025/41**

(21) Application number: **23897416.6**

(22) Date of filing: **08.11.2023**

(51) International Patent Classification (IPC):
**G01S 13/89** (2006.01)    **G01S 7/02** (2006.01)

(52) Cooperative Patent Classification (CPC):
**G01S 7/02; G01S 13/89**

(86) International application number:
**PCT/JP2023/040268**

(87) International publication number:
**WO 2024/116762 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2022 JP 2022190774**

(71) Applicant: **K-Theory Inc.
Kobe-shi, Hyogo 651-0087 (JP)**

(72) Inventors:
• **KIMURA, Kenjiro
Kobe-shi, Hyogo 651-0056 (JP)**
• **KIMURA, Noriaki
Kobe-shi, Hyogo 651-0056 (JP)**
• **KIMURA, Fumitoshi
Kobe-shi, Hyogo 651-0056 (JP)**

(74) Representative: **KATZAROV S.A.
Geneva Business Center
12 Avenue des Morgines
1213 Petit-Lancy (CH)**

(54) **VISUALIZATION DEVICE AND VISUALIZATION METHOD**

(57)    The present disclosure provides an imaging device capable of imaging a distant object in a wide measurement area with high accuracy. An imaging device (100) includes: transmitters (101) that each transmit a wave from a transmission area to a measurement area; receivers (102) that each receive, in a reception area, a scattered wave from the measurement area; and an information processing circuit (103) that images an object in the measurement area. Each of the transmission area and the reception area has a finite size. The information processing circuit (103): derives, using the measurement data, a scattering field function in which the finite size is reflected; derives an imaging function defined based on an amount output from the scattering field function in response to inputting the imaging target position into the scattering field function as the transmission position and the reception position; and images the object using the imaging function.

FIG. 15

EP 4 628 933 A1

## Description

[Technical Field]

The present disclosure relates to an imaging device, etc., that images an object in a measurement area using measurement data of scattered waves.

[Background Art]

As techniques related to an imaging device or the like for imaging an object in a measurement area using measurement data of scattered waves, there are techniques described in Patent Literatures (PTLs) 1 to 5.

For example, according to the technique described in PTL 1, beams sent out from a microwave sender are incident on an object to be inspected, and the amplitudes and phases of scattered beams are detected by a microwave detector. Then, the distribution of dielectric constants is calculated from output signals output from the microwave detector to display a tomogram of the object to be inspected.

[Citation List]

[Patent Literature]

[PTL 1] Japanese Unexamined Patent Application Publication No. S62-66145
[PTL 2] WO 2014/125815
[PTL 3] WO 2015/136936
[PTL 4] WO 2021/020387
[PTL 5] WO 2021/053971

[Summary of Invention]

[Technical Problem]

However, it is not easy to image an object in a measurement area using measurement data of scattered waves. More specifically, obtaining data on scattered waves radiated from a measurement area in relation to waves that are incident on the measurement area when the condition in the measurement area is known is called a forward problem and easy. On the other hand, obtaining the condition in an area when data on scattered waves is known is called an inverse problem and not easy.

Transmitting a wave to a distant object and receiving a scattered wave from the distant object is difficult. Therefore, imaging a distant object in a wide measurement area with high accuracy is not easy.

In view of this, the present disclosure provides an imaging device or the like that is capable of imaging a distant object in a wide measurement area with high accuracy.

[Solution to Problem]

An imaging device according to one aspect of the present disclosure includes: a plurality of transmitters each of which includes a transmission area and transmits a wave from the transmission area to a measurement area; a plurality of receivers each of which includes a reception area and receives, in the reception area, a scattered wave of the wave from the measurement area; and an information processing circuit that images an object in the measurement area using measurement data of the scattered wave. Each of the transmission area and the reception area has a finite size. The information processing circuit: derives, using the measurement data, a scattering field function that receives a transmission position of the wave and a reception position of the scattered wave as input and outputs an amount of the scattered wave at the reception position, the finite size being reflected in the scattering field function; derives an imaging function that receives an imaging target position as input and outputs an image intensity at the imaging target position, and is defined based on an amount output from the scattering field function in response to inputting the imaging target position into the scattering field function as the transmission position and the reception position; and images the object in the measurement area using the imaging function.

These general or specific aspects may be implemented as a system, a device or apparatus, a method, an integrated circuit, a computer program, or a non-transitory computer-readable recording medium such a CD-ROM, or any combination thereof.

[Advantageous Effects of Invention]

According to the present disclosure, it is possible to image a distant object in a wide measurement area with high accuracy.

[Brief Description of Drawings]

[FIG. 1]

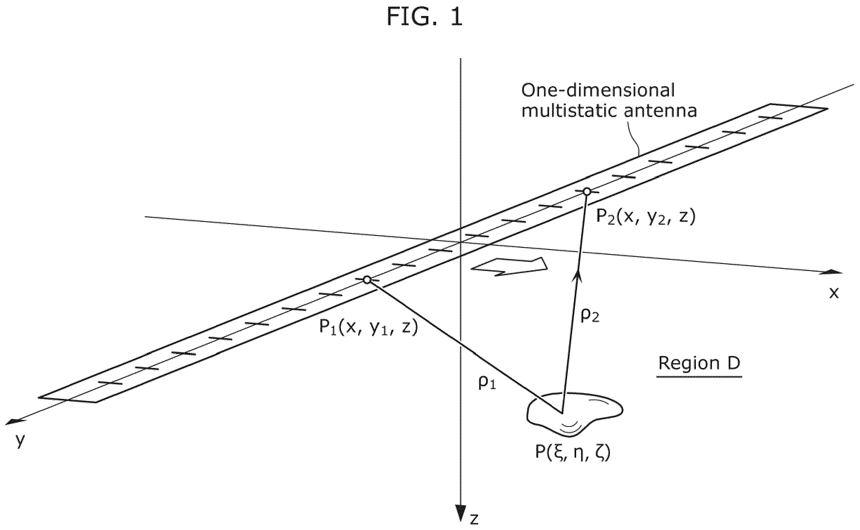

FIG. 1 is a conceptual diagram showing a one-dimensional multistatic array antenna.
[FIG. 2]

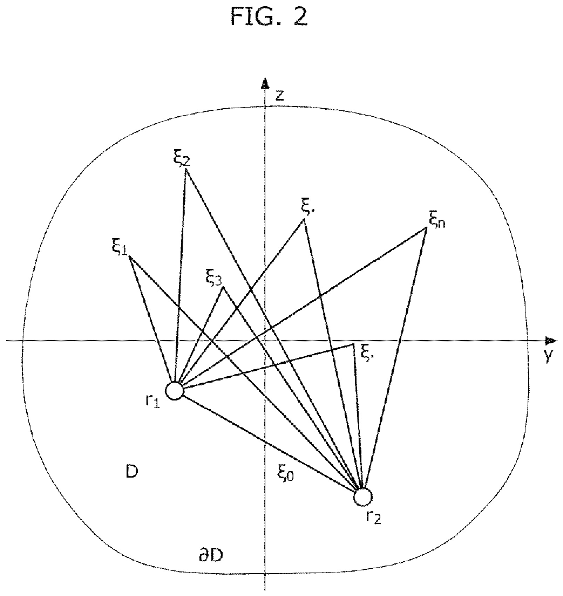

FIG. 2 is a conceptual diagram showing the relationship between a transmission point and a reception point.
[FIG. 3]

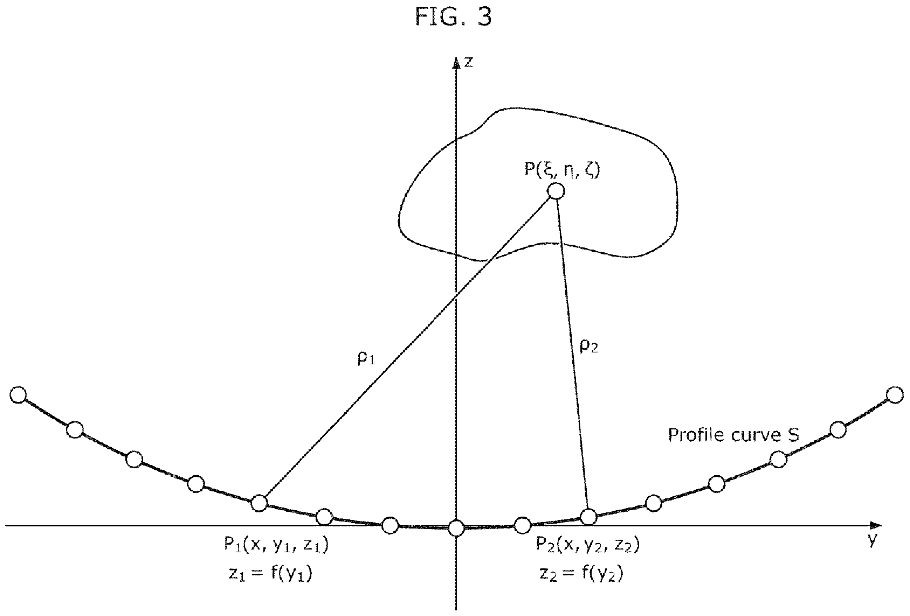

FIG. 3 is a conceptual diagram showing the coordinates of a transmission point and a reception point.
[FIG. 4]

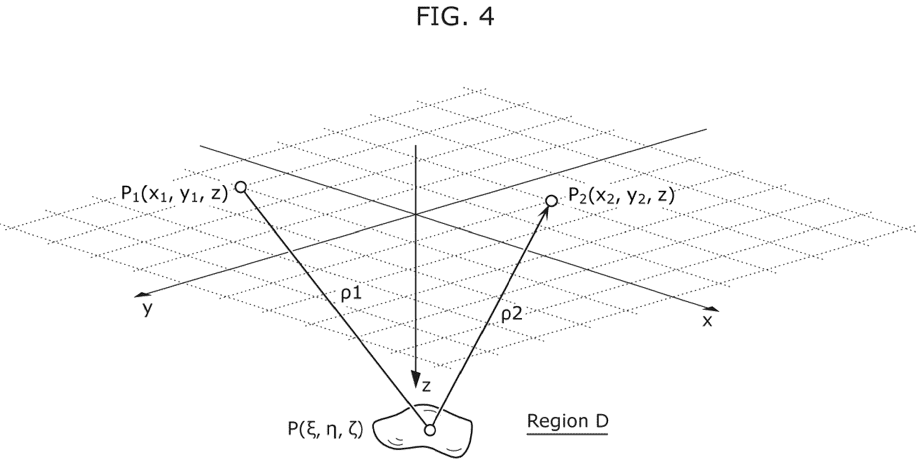

FIG. 4 is a conceptual diagram showing the relationship between a transmission point and a reception point in a plane.
[FIG. 5]

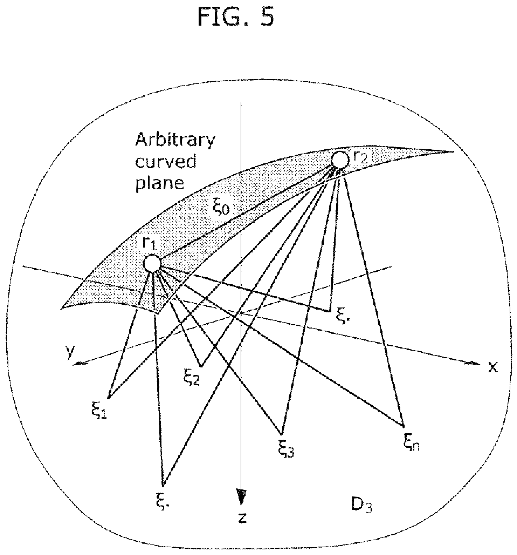

FIG. 5 is a conceptual diagram showing the relationship between a transmission point and a reception point on a curved plane.
[FIG. 6]

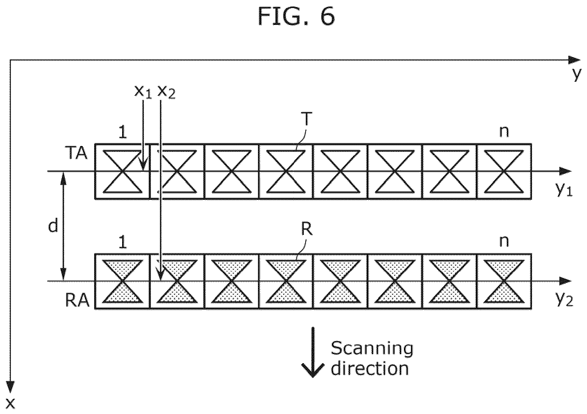

FIG. 6 is a conceptual diagram showing an example of coordinates relating to a semi-two-dimensional array antenna.
[FIG. 7]

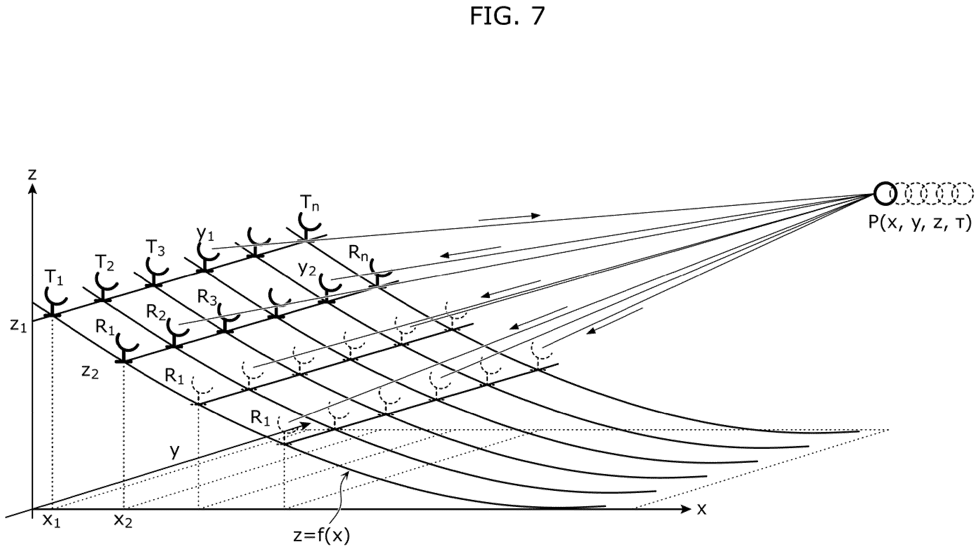

FIG. 7 is a conceptual diagram showing a semi-two-dimensional array antenna on a curved plane.
[FIG. 8]

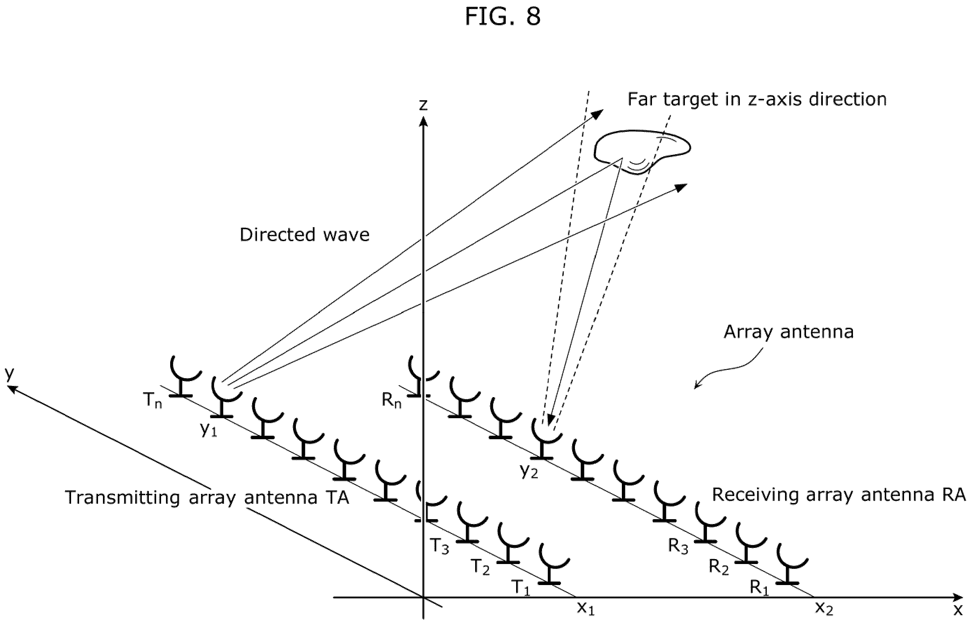

FIG. 8 is a conceptual diagram showing a semi-two-dimensional array antenna including a plurality of directional antennas arranged on a plane.
[FIG. 9]

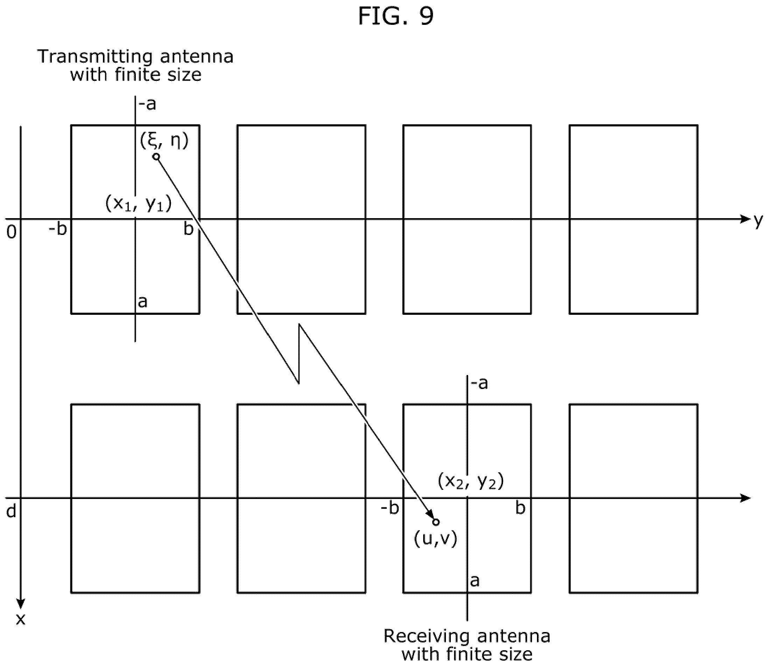

FIG. 9 is a conceptual diagram showing a transmitting antenna and a receiving antenna that have a finite size.
[FIG. 10]

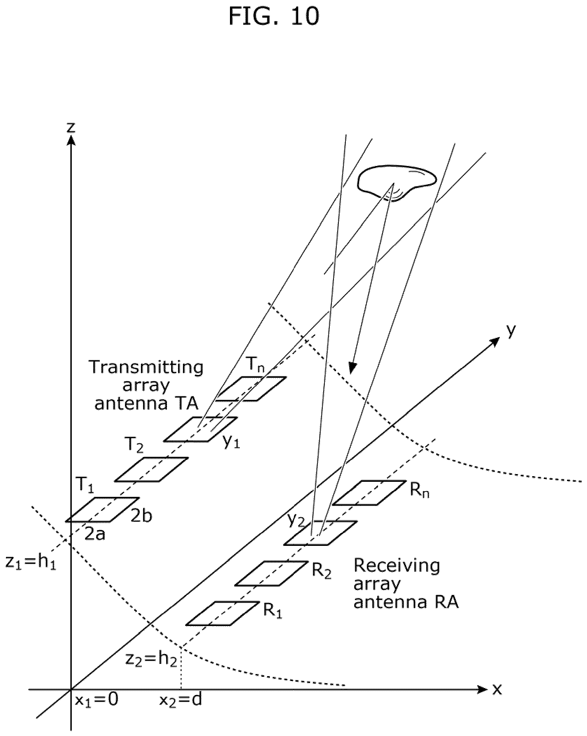

FIG. 10 is a conceptual diagram showing a semi-two-dimensional array antenna including a plurality of directional antennas arranged on a slope.
[FIG. 11]

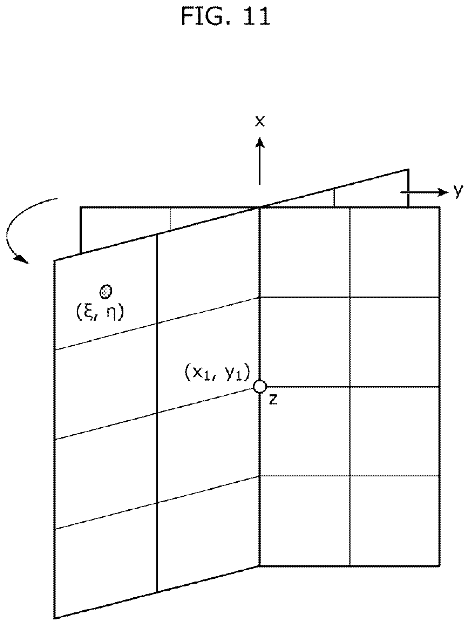

FIG. 11 is a conceptual diagram showing the rotation of the antenna.
[FIG. 12]

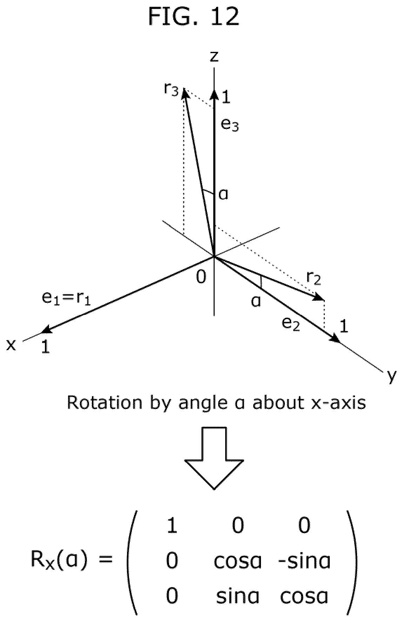

FIG. 12 is a conceptual diagram showing the matrix representation of rotation about the x-axis.
[FIG. 13]

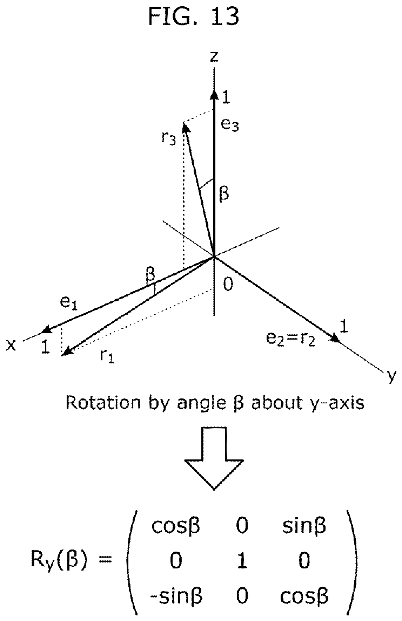

FIG. 13 is a conceptual diagram showing the matrix representation of rotation about the y-axis.
[FIG. 14]

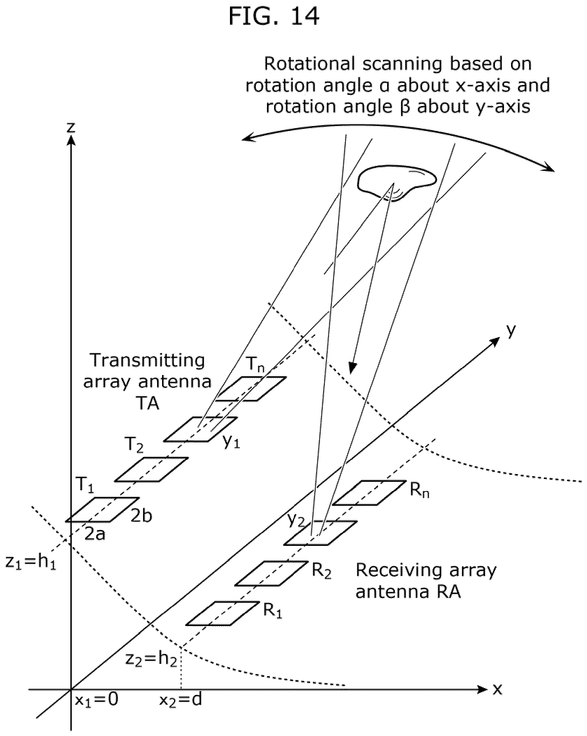

FIG. 14 is a conceptual diagram showing rotational scanning.
[FIG. 15]

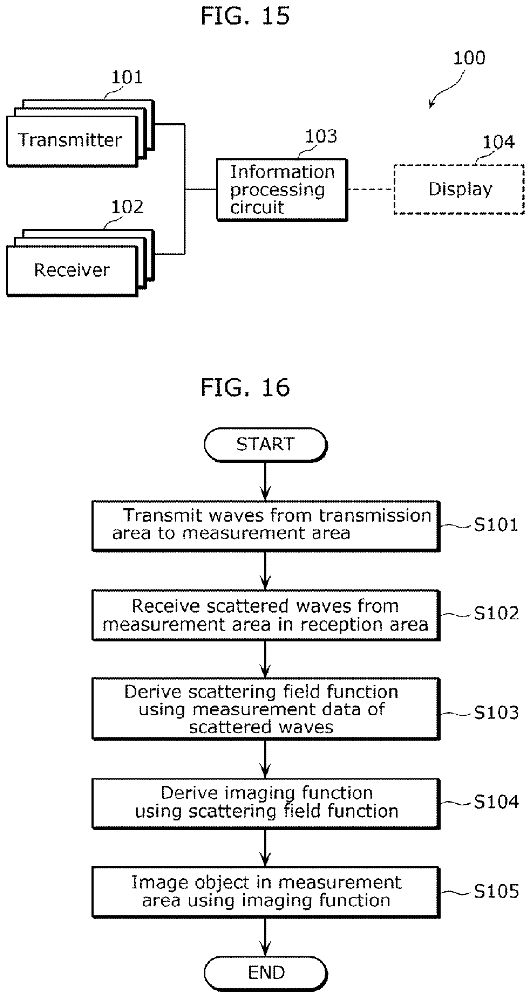

FIG. 15 is a block diagram showing a basic configuration of an imaging device.
[FIG. 16]
FIG. 16 is a flowchart showing basic operations of an imaging device.

[Description of Embodiments]

An imaging device according to one aspect of the present disclosure includes: a plurality of transmitters each of which includes a transmission area and transmits a wave from the transmission area to a measurement area; a plurality of receivers each of which includes a reception area and receives, in the reception area, a scattered wave of the wave from the measurement area; and an information processing circuit that images an object in the measurement area using measurement data of the scattered wave. Each of the transmission area and the reception area has a finite size. The information processing circuit: derives, using the measurement data, a scattering field function that receives a transmission position of the wave and a reception position of the scattered wave as input and outputs an amount of the scattered wave at the reception position, the finite size being reflected in the scattering field function; derives an imaging function that receives an imaging target position as input and outputs an image intensity at the imaging target position, and is defined based on an amount output from the scattering field function in response to inputting the imaging target position into the scattering field function as the transmission position and the reception position; and images the object in the measurement area using the imaging function.

This allows the imaging device to derive the condition of scattering in the measurement area using the measurement data. Accordingly, the imaging device is capable of imaging the object in the measurement area with high accuracy. The imaging device is capable of transmitting a wave to a distant object and receiving a scattered wave from the distant object in accordance with the directivity of the transmission area and reception area having finite sizes. Accordingly, the imaging device is capable of imaging a distant object in a wide measurement area with high accuracy.

For example, the finite size is the same for the plurality of transmitters and the plurality of receivers.

This allows the imaging device to apply the same computational processing in the plurality of transmitters and the plurality of receivers. Accordingly, the imaging device is capable of avoiding complication of computational processing.

For example, each of the transmission area and the reception area is a rectangular area.

This allows the imaging device to perform computational processing corresponding to simple shapes. Accordingly, the imaging device is capable of avoiding complication of computational processing.

For example, the plurality of transmitters are arranged along a straight line, the plurality of receivers are arranged along a straight line that is different from and parallel to the straight line along which the plurality of transmitters are arranged, and a distance between the straight line along which the plurality of transmitters are arranged and the straight line along which the plurality of receivers are arranged is reflected in the scattering field function.

In this way, the imaging device is capable of obtaining enough measurement data in accordance with a variety of combinations of the plurality of transmitters arranged in a semi-two-dimensional manner and the plurality of receivers. Since there is spacing between the plurality of transmitters and the plurality of receivers, the imaging device is capable of efficiently transmitting waves to the measurement area and efficiently receiving scattered waves from the measurement area.

By using the scattering field function derived in accordance with the measurement data on scattered waves and the distance between the plurality of transmitters and the plurality of receivers, the imaging device is capable of imaging the object with high accuracy.

For example, the scattering field function is expressed as:

[Math. 1]

$$\Phi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{-ik_{x_2}x_2} e^{ik_z z}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot e^{ik_{x_2}d} \tilde{\Phi}(k_{y_1}, k_{y_2}, k) \, dk_x \, dk_{y_1} \, dk_{y_2}$$

where $x_1$ and $y_1$ respectively represent an x-coordinate and a y-coordinate of the transmission position, $x_2$ and $y_2$ respectively represent an x-coordinate and a y-coordinate of the reception position, z represents a z-coordinate of the transmission position and the reception position, k represents a wavenumber of the wave, $k_x$, $k_{y1}$, and $k_{y2}$ represent integration variables, and d represents the distance,

[Math. 2]

$$\tilde{\Phi}(k_{y_1}, k_{y_2}, k)$$

represents the measurement data Fourier transformed with respect to $y_1$ and $y_2$, and $k_{x1}$, $k_{x2}$, and $k_z$ are defined by:

[Math. 3]

$$k_{x_1} = \frac{k_x \sqrt{k^2 - k_{y_1}^{~2}}}{\sqrt{k^2 - k_{y_1}^{~2}} + \sqrt{k^2 - k_{y_2}^{~2}}}$$

$$k_{x_2} = \frac{k_x \sqrt{k^2 - k_{y_2}^{~2}}}{\sqrt{k^2 - k_{y_1}^{~2}} + \sqrt{k^2 - k_{y_2}^{~2}}}$$

$$k_z = \sqrt{(\sqrt{k^2 - k_{y_1}^{~2}} + \sqrt{k^2 - k_{y_2}^{~2}})^2 - k_x^{~2}}$$

where a represents 1/2 of the finite size in an x-axis direction, and b represents 1/2 of the finite size in a y-axis direction.

This allows the imaging device to image the object with high accuracy by using the scattering field function when the transmission position and the reception position have the same z coordinate.

For example, the imaging function is expressed as:

[Math. 4]

$$\rho(x, y, z)$$

$$= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_z z}$$

$$\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}$$

$$\cdot e^{ik_{x_2} d} \tilde{\Phi}(k_{y_1}, k_{y_2}, k) dk_x dk_{y_1} dk_{y_2} dk$$

where x, y, and z input to the imaging function respectively represent an x-coordinate, a y-coordinate, and a z-coordinate of the imaging target position.

This allows the imaging device to image the object with high accuracy by using the imaging function when the transmission position and the reception position have the same z coordinate.

For example, the scattering field function is expressed as:

[Math. 5]

$$\Phi(x_1, y_1, x_2, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{-ik_{x_2}x_2} e^{ik_{z_1}z_1} e^{ik_{z_2}z_2}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot e^{ik_{x_2}d} e^{-ik_{z_1}h_1} e^{-ik_{z_2}h_2} \tilde{\Phi}(k_{y_1}, k_{y_2}, k) dk_x dk_{y_1} dk_{y_2}$$

where $x_1$, $y_1$, and $z_1$ respectively represent an x-coordinate, a y-coordinate, and a z-coordinate of the transmission position, $x_2$, $y_2$, and $z_2$ respectively represent an x-coordinate, a y-coordinate, and a z-coordinate of the reception position, k represents a wavenumber of the wave, $k_x$, $k_{y1}$, and $k_{y2}$ represent integration variables, d represents the distance in an x-axis direction, $h_1$ represents a z-coordinate of the transmission position corresponding to the measurement data, and $h_2$ represents a z-coordinate of the reception position corresponding to the measurement data,

[Math. 6]

$$\tilde{\Phi}(k_{y_1}, k_{y_2}, k)$$

represents the measurement data Fourier transformed with respect to $y_1$ and $y_2$, and $k_{x1}$, $k_{x2}$, $k_{z1}$, and $k_{z2}$ are defined by:

[Math. 7]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_{z_1} = \frac{\sqrt{k^2 - k_{y_1}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$k_{z_2} = \frac{\sqrt{k^2 - k_{y_2}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

where a represents 1/2 of the finite size in an x-axis direction, and b represents 1/2 of the finite size in a y-axis direction.

This allows the imaging device to image the object with high accuracy by using the scattering field function when the transmission position and the reception position may have different z coordinates.

For example, the imaging function is expressed as:

[Math. 8]

$$
\rho(x, y, z)
$$

$$
= \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)} e^{ik_{z_1} z} e^{ik_{z_2} z}
$$

$$
\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}
$$

$$
\cdot e^{ik_{x_2} d} e^{-ik_{z_1} h_1} e^{-ik_{z_2} h_2} \tilde{\Phi}(k_{y_1}, k_{y_2}, k) dk_x dk_{y_1} dk_{y_2} dk
$$

where x, y, and z input to the imaging function respectively represent an x-coordinate, a y-coordinate, and a z-coordinate of the imaging target position.

This allows the imaging device to image the object with high accuracy by using the imaging function when the transmission position and the reception position may have different z coordinates.

For example, each of the plurality of transmitters changes a normal direction of a surface of the transmission area by mechanically or electrically rotating the transmission area, each of the plurality of receivers changes a normal direction of a surface of the reception area by mechanically or electrically rotating the reception area, and the information processing circuit images the object in the measurement area using the measurement data after rotation of the transmission area and the reception area.

In this way, the imaging device is capable of changing the normal direction of the surface of each of the transmission area and the reception area. Accordingly, the imaging device is capable of changing the direction of directivity of each of the transmission area and the reception area. Accordingly, the imaging device is capable of changing the direction of directivity and imaging a distant object in that direction.

For example, the scattering field function is expressed as:

[Math. 9]

$$
\Phi(x_1, y_1, x_2, y_2, z_1, z_2, k)
$$

$$
= \frac{1}{(2\pi)^3} \int_{-\infty}^\infty \int_{-\infty}^\infty \int_{-\infty}^\infty e^{-i(k_{x_1} x_1 + k_{y_1} y_1 + k_{y_2} y_2)} e^{-ik_{x_2} x_2} e^{ik_{z_1} z_1} e^{ik_{z_2} z_2}
$$

$$
\cdot \left\{ f_1(k_{x_1}, k_{y_1}, k_{z_1}) f_2(k_{x_2}, k_{y_2}, k_{z_2}) \right\}
$$

$$
\cdot e^{ik_{x_2} d} e^{-ik_{z_1} h_1} e^{-ik_{z_2} h_2} \tilde{\Phi}(k_{y_1}, k_{y_2}, k) dk_x dk_{y_1} dk_{y_2}
$$

where $x_1$, $y_1$, and $z_1$ respectively represent an x-coordinate, a y-coordinate, and a z-coordinate of the transmission position, $x_2$, $y_2$, and $z_2$ respectively represent an x-coordinate, a y-coordinate, and a z-coordinate of the reception position, k represents a wavenumber of the wave, $k_x$, $k_{y1}$, and $k_{y2}$ represent integration variables, d represents the distance in an x-axis direction, $h_1$ represents a z-coordinate of the transmission position corresponding to the measurement data, and $h_2$ represents a z-coordinate of the reception position corresponding to the measurement data,

[Math. 10]

$$\tilde{\Phi}(k_{y_1}, k_{y_2}, k)$$

represents the measurement data Fourier transformed with respect to $y_1$ and $y_2$, $k_{x1}$, $k_{x2}$, $k_{z1}$, and $k_{z2}$ are defined by:

[Math. 11]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_{z_1} = \frac{\sqrt{k^2 - k_{y_1}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$k_{z_2} = \frac{\sqrt{k^2 - k_{y_2}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

and $f_1$ and $f_2$ are defined by:

[Math. 12]

$$f_1(k_{x_1}, k_{y_1}, k_{z_1})$$
$$= \frac{2\sin(a(-k_{x_1}\cos\beta - k_{z_1}\cos\alpha\sin\beta))}{-k_{x_1}\cos\beta - k_{z_1}\cos\alpha\sin\beta} \frac{2\sin(b(-k_{y_1}\cos\alpha + k_{z_1}\sin\alpha))}{-k_{y_1}\cos\alpha + k_{z_1}\sin\alpha}$$

$$f_2(k_{x_2}, k_{y_2}, k_{z_2})$$
$$= \frac{2\sin(a(-k_{x_2}\cos\beta - k_{z_2}\cos\alpha\sin\beta))}{-k_{x_2}\cos\beta - k_{z_2}\cos\alpha\sin\beta} \frac{2\sin(b(-k_{y_2}\cos\alpha + k_{z_2}\sin\alpha))}{-k_{y_2}\cos\alpha + k_{z_2}\sin\alpha}$$

where a represents 1/2 of the finite size in an x-axis direction, b represents 1/2 of the finite size in a y-axis direction, $\alpha$ represents a rotation angle for mechanical or electrical rotation of the transmission area and the reception area about an x-axis, and $\beta$ represents a rotation angle for mechanical or electrical rotation of the transmission area and the reception area about a y-axis.

This allows the imaging device to image the object with high accuracy by using the scattering field function when it is capable of changing the direction of directivity.

For example, the imaging function is expressed as:

[Math. 13]

$$\rho(x,y,z)$$

$$= \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)} e^{i k_{z_1} z} e^{i k_{z_2} z}$$

$$\cdot \left\{ f_1(k_{x_1}, k_{y_1}, k_{z_1}) f_2(k_{x_2}, k_{y_2}, k_{z_2}) \right\}$$

$$\cdot e^{i k_{x_2} d} e^{-i k_{z_1} h_1} e^{-i k_{z_2} h_2} \tilde{\Phi}(k_{y_1}, k_{y_2}, k) dk_x dk_{y_1} dk_{y_2} dk$$

where x, y, and z input to the imaging function respectively represent an x-coordinate, a y-coordinate, and a z-coordinate of the imaging target position.

This allows the imaging device to image the object with high accuracy by using the imaging function when it is capable of changing the direction of directivity.

For example, each of the plurality of transmitters changes a normal direction of a surface of the transmission area to a plurality of directions by mechanically or electrically rotating the transmission area at a plurality of rotation angles, each of the plurality of receivers changes a normal direction of a surface of the reception area to the plurality of directions by mechanically or electrically rotating the reception area at the plurality of rotation angles, and the information processing circuit images the object in the measurement area using the measurement data for the plurality of rotation angles for mechanical or electrical rotation

In this way, the imaging device is capable of changing the normal direction of the surface of each of the transmission area and the reception area to a plurality of directions. Accordingly, the imaging device is capable of changing the direction of directivity of each of the transmission area and the reception area to a plurality of directions. Accordingly, the imaging device is capable of changing the direction of directivity to a plurality of directions and imaging a distant object in a plurality of directions.

For example, the scattering field function is expressed as:

[Math. 14]

$$\Phi(x_1, y_1, x_2, y_2, z_1, z_2, k)$$

$$= \frac{1}{(2\pi)^3} \int_{-\infty}^\infty \int_{-\infty}^\infty \int_{-\infty}^\infty e^{-i(k_{x_1} x_1 + k_{y_1} y_1 + k_{y_2} y_2)} e^{-i k_{x_2} x_2} e^{i k_{z_1} z_1} e^{i k_{z_2} z_2}$$

$$\cdot \left\{ \sum_\alpha \sum_\beta f_1(k_{x_1}, k_{y_1}, k_{z_1}, \alpha, \beta) \cdot f_2(k_{x_2}, k_{y_2}, k_{z_2}, \alpha, \beta) \cdot \tilde{\Phi}(k_{y_1}, k_{y_2}, k, \alpha, \beta) \right\}$$

$$\cdot e^{i k_{x_2} d} e^{-i k_{z_1} h_1} e^{-i k_{z_2} h_2} dk_x dk_{y_1} dk_{y_2}$$

where $x_1$, $y_1$, and $z_1$ respectively represent an x-coordinate, a y-coordinate, and a z-coordinate of the transmission position, $x_2$, $y_2$, and $z_2$ respectively represent an x-coordinate, a y-coordinate, and a z-coordinate of the reception position, k represents a wavenumber of the wave, $k_x$, $k_{y1}$, and $k_{y2}$ represent integration variables, d represents the distance in an x-axis direction, $h_1$ represents a z-coordinate of the transmission position corresponding to the measurement data, and $h_2$ represents a z-coordinate of the reception position corresponding to the measurement data,

[Math. 15]

$$\tilde{\Phi}(k_{y_1}, k_{y_2}, k, \alpha, \beta)$$

represents the measurement data Fourier transformed with respect to $y_1$ and $y_2$, $k_{x1}$, $k_{x2}$, $k_{z1}$, and $k_{z2}$ are defined by:

[Math. 16]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_{z_1} = \frac{\sqrt{k^2 - k_{y_1}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$k_{z_2} = \frac{\sqrt{k^2 - k_{y_2}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

and $f_1$ and $f_2$ are defined by:

[Math. 17]

$$f_1(k_{x_1}, k_{y_1}, k_{z_1}, \alpha, \beta)$$

$$= \frac{2\sin(a(-k_{x_1}\cos\beta - k_{z_1}\cos\alpha\sin\beta))}{-k_{x_1}\cos\beta - k_{z_1}\cos\alpha\sin\beta} \frac{2\sin(b(-k_{y_1}\cos\alpha + k_{z_1}\sin\alpha))}{-k_{y_1}\cos\alpha + k_{z_1}\sin\alpha}$$

$$f_2(k_{x_2}, k_{y_2}, k_{z_2}, \alpha, \beta)$$

$$= \frac{2\sin(a(-k_{x_2}\cos\beta - k_{z_2}\cos\alpha\sin\beta))}{-k_{x_2}\cos\beta - k_{z_2}\cos\alpha\sin\beta} \frac{2\sin(b(-k_{y_2}\cos\alpha + k_{z_2}\sin\alpha))}{-k_{y_2}\cos\alpha + k_{z_2}\sin\alpha}$$

where a represents 1/2 of the finite size in an x-axis direction, b represents 1/2 of the finite size in a y-axis direction, $\alpha$ represents a rotation angle for mechanical or electrical rotation of the transmission area and the reception area about an x-axis, and $\beta$ represents a rotation angle for mechanical or electrical rotation of the transmission area and the reception area about a y-axis.

This allows the imaging device to image the object with high accuracy by using the scattering field function when it is capable of changing the direction of directivity to a plurality of directions.

For example, the imaging function is expressed as:

[Math. 18]

$$\rho(x,y,z)$$

$$= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_{z_1} z} e^{ik_{z_2} z}$$

$$\cdot \left\{ \sum_\alpha \sum_\beta f_1(k_{x_1}, k_{y_1}, k_{z_1}, \alpha, \beta) \cdot f_2(k_{x_2}, k_{y_2}, k_{z_2}, \alpha, \beta) \cdot \tilde{\Phi}(k_{y_1}, k_{y_2}, k, \alpha, \beta) \right\}$$

$$\cdot e^{ik_{x_2} d} e^{-ik_{z_1} h_1} e^{-ik_{z_2} h_2} dk_x dk_{y_1} dk_{y_2} dk$$

where x, y, and z input to the imaging function respectively represent an x-coordinate, a y-coordinate, and a z-coordinate of the imaging target position.

This allows the imaging device to image the object with high accuracy by using the imaging function when it is capable of changing the direction of directivity to a plurality of directions.

An imaging method according to one aspect of the present disclosure includes: transmitting, by a plurality of transmitters each of which includes a transmission area, a wave from the transmission area of each of the plurality of transmitters to a measurement area; receiving, by a plurality of receivers each of which includes a reception area, a scattered wave of the wave from the measurement area, in the reception area of each of the plurality of receivers; and imaging an object in the measurement area using measurement data of the scattered wave. Each of the transmission area and the reception area has a finite size. The imaging of the object in the measurement area includes: deriving, using the measurement data, a scattering field function that receives a transmission position of the wave and a reception position of the scattered wave as input and outputs an amount of the scattered wave at the reception position, the finite size being reflected in the scattering field function; deriving an imaging function that receives an imaging target position as input and outputs an image intensity at the imaging target position, and is defined based on an amount output from the scattering field function in response to inputting the imaging target position into the scattering field function as the transmission position and the reception position; and imaging the object in the measurement area using the imaging function.

This makes it possible to derive the condition of scattering in the measurement area using the measurement data. This in turn makes it possible to image the object in the measurement area with high accuracy. This also makes it possible to transmit a wave to a distant object and to receive a scattered wave from the distant object in accordance with the directivity of the transmission area and reception area having finite sizes. Accordingly, it becomes possible to image a distant object in a wide measurement area with high accuracy.

Hereinafter, embodiments will be described with reference to the drawings. Each of the following embodiments describes a general or specific example. The numerical values, shapes, materials, elements, the arrangement and connection of the elements, steps, the order of the steps etc., presented in the following embodiments are mere examples, and do not limit the scope of the claims.

In the following description, in particular the techniques or the like described in PTLs 2 to 5 given above may be referenced to as existing techniques. Although radio waves such as microwaves are primarily assumed as the waves in the following description, the waves are not limited to radio waves such as microwaves. Imaging based on scattering may be expressed as scattering tomography. Thus, the imaging device and imaging method described below may also be expressed as a scattering tomographic device and a scattering tomographic method, respectively.

[Embodiment]

An imaging device according to the present embodiment images an object in a measurement area using measurement data of scattered waves. Hereinafter, the imaging device according to the present embodiment, including techniques and theories serving as the basis of the imaging device, will be described in detail.

< 1. Overview>

The present disclosure presents a scattering field theory using directional antennas. For example, a scattering field theory using non-directional antennas is used for imaging the interior of a dielectric. For example, in imaging the interior of a dielectric, the surface of the dielectric is scanned, and a three-dimensional image of the interior of the dielectric is reconstructed. A scattering field theory using directional antennas is used for imaging objects in the air.

For example, due to the vast expanse of airspace, scanning techniques involving physically moving the antennas are not used. Instead, objects are imaged using antennas with high directivity. Examples of using directional antennas for imaging objects include laser radar and millimeter-wave radar. These devices are easy to implement. However, in these devices, since the wavelength is short, the properties of the beam are stronger than the properties of the wave, and from the viewpoint of the frequency of the electromagnetic waves, the attenuation of the signal is large due to the influence of moisture in the air. These devices are therefore not used except at short distances.

The present disclosure presents an imaging technique using microwaves that have both the properties of a beam (i.e., directionality) and the properties of a wave. In particular, a scattering field theory using directional antennas is presented in Chapter 3. Specific mathematical formulas are presented for generating an image showing an object in the measurement area from the measurement data in a case where the transmitting antenna and the receiving antenna are fixed.

<2. Non-directional Antennas>

First, in this chapter, a scattering field theory using non-directional antennas will be described.

<2-1. One-Dimensional Array and Plane Boundary>

When employing a method of arranging transmitting and receiving antenna elements in a single row, there is a limit to the spatial resolution.

FIG. 1 is a conceptual diagram showing a one-dimensional multistatic array antenna. When arbitrary two elements are selected as a transmitting element and a receiving element from among n elements as illustrated in FIG. 1, it is possible to obtain the above-mentioned double in resolution. Moreover, singles can be received with a high S/N ratio at a range of distances from short distance to long distance. This considerably improves the quality of an ultimate image. Whereas, as a matter of course, the amount of data is increased to n times, the time required for reconstruction is also shortened dramatically according to the theory described below.

Here, a situation is examined in which a radio wave radiated from point $P_1(x, y_1, z)$ is reflected at point $P(\xi, \eta, \zeta)$ and received at point $P_2(x, y_2, z)$ as shown in FIG. 1. In the case where point P is assumed to move in entire region D, the signal received at point $P_2$ is represented by expression (2-1-1) below.

[Math. 19]

$$\varphi(x, y_1, y_2, z) = \iint_D \frac{e^{ik\rho_1}}{\rho_1} \frac{e^{ik\rho_2}}{\rho_2} \varepsilon(\xi, \eta, \zeta) d\xi d\eta d\zeta$$

$$\rho_1 = \sqrt{(x-\xi)^2 + (y_1-\eta)^2 + (z-\zeta)^2}$$

$$\rho_2 = \sqrt{(x-\xi)^2 + (y_2-\eta)^2 + (z-\zeta)^2}$$

$$\cdots (2-1-1)$$

Here, $\varepsilon(\xi, \eta, \zeta)$ represents the function of the dielectric constant at point $P(\xi, \eta, \zeta)$ and corresponds to the reflectance at point $P(\xi, \eta, \zeta)$. Point $P(\xi, \eta, \zeta)$ corresponds to the reflection point. Note that $\varepsilon(\xi, \eta, \zeta)$ is unknown. It is assumed that the time factor is proportional to exp(-iwt). The kernel function in the integrand term of the above equation is represented as $\varphi$ in expression (2-1-2) below.

[Math. 20]

$$\phi = \frac{e^{ik\rho_1}}{\rho_1} \frac{e^{ik\rho_2}}{\rho_2}$$

$$\cdots (2-1-2)$$

Next, a partial differential equation that has expression (2-1-2) as an asymptotical solution is examined. Thus, calculation is performed while ignoring a high-order term with respect to $1/\rho$ obtained as a result of differentiation. Here, an abridged notation for differentiation is defined by expression (2-1-3).
[Math. 21]

$$\frac{\partial}{\partial t} \to \partial_t, \frac{\partial}{\partial x} \to \partial_x, \frac{\partial}{\partial y_1} \to \partial_{y_1}, \frac{\partial}{\partial y_2} \to \partial_{y_2}, \frac{\partial}{\partial z} \to \partial_z$$

$$\cdots (2-1-3)$$

Here, a partial differential equation that has expression (2-1-2) as an asymptotical solution at short wavelengths (at high frequency or when k is large) is examined. This solution to the partial differential equation may be regarded as almost an exact solution in imaging using microwaves. First, the result of differentiation of each order of φ is represented by expression (2-1-4) below.
[Math. 22]

$$\partial_x\phi = ik(x-\xi)(\frac{1}{\rho_1}+\frac{1}{\rho_2})\phi + o(\rho^{-3}) \qquad \partial_{y_1}\phi = ik\frac{y_1-\eta}{\rho_1}\phi + o(\rho^{-3})$$

$$\partial_{y_2}\phi = ik\frac{y_2-\eta}{\rho_2}\phi + o(\rho^{-3}) \qquad \partial_z\phi = ik(z-\zeta)(\frac{1}{\rho_1}+\frac{1}{\rho_2})\phi + o(\rho^{-3})$$

$$\partial_x\partial_x\phi = (ik)^2(x-\xi)^2(\frac{1}{\rho_1}+\frac{1}{\rho_2})^2\phi + o(\rho^{-3})$$

$$\partial_z\partial_z\phi = (ik)^2(z-\zeta)^2(\frac{1}{\rho_1}+\frac{1}{\rho_2})^2\phi + o(\rho^{-3})$$

$$\partial_{y_1}\partial_{y_1}\phi = (ik)^2(\frac{y_1-\eta}{\rho_1})^2\phi + o(\rho^{-3})$$

$$\partial_{y_2}\partial_{y_2}\phi = (ik)^2(\frac{y_2-\eta}{\rho_2})^2\phi + o(\rho^{-3})$$

$$\cdots (2-1-4)$$

Hereinafter, complexity o(*) is omitted. In accordance with the sum of four differential equations of the second order, expression (2-1-5) below is obtained.
[Math. 23]

$$\Delta_4 \phi = (\partial_x{}^2 + \partial_{y_1}{}^2 + \partial_{y_2}{}^2 + \partial_z{}^2)\phi$$

$$= (ik)^2\{2 + 2\frac{(x-\xi)^2 + (z-\zeta)^2}{\rho_1 \rho_2}\}\phi$$

$$\cdots (2-1-5)$$

Accordingly, expression (2-1-6) below is obtained from expression (2-1-5).
[Math. 24]

$$\{\Delta_4 - 2(ik)^2\}\phi = 2(ik)^2 \frac{\rho_1{}^2 - (y_1 - \eta)^2}{\rho_1 \rho_2}\phi$$

$$= 2(ik)^2 \frac{\rho_2{}^2 - (y_2 - \eta)^2}{\rho_1 \rho_2}\phi$$

$$\cdots (2-1-6)$$

By acting the operation of expression (2-1-6) two times, expression (2-1-7) below is obtained.
[Math. 25]

$$\{\Delta_4 - 2(ik)^2\}^2 \phi = 4(ik)^4 \frac{\{\rho_1{}^2 - (y_1 - \eta)^2\}\{\rho_2{}^2 - (y_2 - \eta)^2\}}{\rho_1{}^2 \rho_2{}^2}\phi$$

$$= 4(ik)^4\{1 - (ik)^{-2}\partial_{y_1}{}^2\}\{1 - (ik)^{-2}\partial_{y_2}{}^2\}\phi$$

$$\cdots (2-1-7)$$

Expression (2-1-7) is summarized to obtain expression (2-1-8) below.
[Math. 26]

$$[\frac{1}{4}\{\Delta_4 - 2(ik)^2\}^2 - \partial_{y_1}{}^2\partial_{y_2}{}^2 + (ik)^2(\partial_{y_1}{}^2 + \partial_{y_2}{}^2) - (ik)^4]\phi = 0$$

$$\cdots (2-1-8)$$

Although expression (2-1-8) is derived assuming a steady state, it is easy to extend expression (2-1-8) to a non-steady state. Thus, variables are substituted as given by expression (2-1-9) below, using partial differential $\partial_t$ with respect to time t and using propagation velocity c of radio waves.
[Math. 27]

$$-ik \rightarrow \frac{1}{c}\partial_t$$

$$\cdots (2-1-9)$$

Through the process described above, an equation represented by expression (2-1-10) below is ultimately obtained.
[Math. 28]

$$\{\Delta_4{}^2 - \frac{4}{c^2}(\partial_t{}^2\partial_x{}^2 + \partial_t{}^2\partial_z{}^2) - 4\partial_{y_1}{}^2\partial_{y_2}{}^2\}\phi = 0$$

$$\Delta_4 = \partial_x{}^2 + \partial_{y_1}{}^2 + \partial_{y_2}{}^2 + \partial_z{}^2$$

$$\cdots (2-1-10)$$

Expression (2-1-10) described above is a partial differential equation that has φ in expression (2-1-2) as a solution. By applying differentiation to the kernel of expression (2-1-1),

[Math. 29]

$$\varphi$$

of expression (2-1-1) also satisfies the partial differential equation described above. This equation is a four-dimensional pseudo wave equation configured by five variables (t, x, $y_1$, $y_2$, z).

Next, this equation is solved by Fourier transform. First,

[Math. 30]

$$\varphi$$

is subjected to multiplex Fourier transform with respect to t, x, $y_1$, $y_2$ as given by expression (2-1-11) below.

[Math. 31]

$$\tilde{\varphi}(k_x, k_{y_1}, k_{y_2}, z, \omega) = \int_{-\infty}^{\infty} e^{i\omega t}dt \int_{-\infty}^{\infty} \int_{-\infty}^{\infty} \int_{-\infty}^{\infty} e^{i(k_x x + k_{y_1} y_1 + k_{y_2} y_2)}\varphi(x, y_1, y_2, z, t)dxdy_1dy_2$$

$$\cdots (2-1-11)$$

When the differential with respect to z is expressed as $D_z$, expression (2-1-12) below is obtained from expressions (2-1-10) and (2-1-11).

[Math. 32]

$$\{(D_z{}^2 - k_x{}^2 - k_{y_1}{}^2 - k_{y_2}{}^2)^2 + 4k^2(D_z{}^2 - k_x{}^2) - 4k_{y_1}{}^2 k_{y_2}{}^2\}\tilde{\varphi} = 0$$

$$\cdots (2-1-12)$$

Here, the relationship of ω = ck is used. Four basic solutions to this equation are expressed as given by expression (2-1-13) below.

[Math. 33]

$$E_1 = e^{i\{\sqrt{(\sqrt{k^2-k_{y_1}{}^2}+\sqrt{k^2-k_{y_2}{}^2})^2-k_x{}^2}\}z}$$

$$E_2 = e^{-i\{\sqrt{(\sqrt{k^2-k_{y_1}{}^2}+\sqrt{k^2-k_{y_2}{}^2})^2-k_x{}^2}\}z}$$

$$E_3 = e^{i\{\sqrt{(\sqrt{k^2-k_{y_1}{}^2}-\sqrt{k^2-k_{y_2}{}^2})^2-k_x{}^2}\}z}$$

$$E_4 = e^{-i\{\sqrt{(\sqrt{k^2-k_{y_1}{}^2}-\sqrt{k^2-k_{y_2}{}^2})^2-k_x{}^2}\}z}$$

$$\cdots (2-1-13)$$

Considering the facts that the time factor is $e^{-i\omega t}$, the phase is added using the path of radiated radio waves, and radio waves reflected off the object are bounced off toward a measurement surface (measurement plane), $E_1$ is the unique meaningful solution. Accordingly, expression (2-1-14) below is obtained.
[Math. 34]

$$\tilde{\varphi}(k_x, k_{y_1}, k_{y_2}, z, k) = a(k_x, k_{y_1}, k_{y_2}, k)e^{i\{\sqrt{(\sqrt{k^2-k_{y_1}^2}+\sqrt{k^2-k_{y_2}^2})^2-k_x^2}\}z}$$

$$\cdots (2-1-14)$$

By substituting z = 0 in expression (2-1-14), $a(k_x, k_{y1}, k_{y2}, k)$ is obtained as given by expression (2-1-15) below.
[Math. 35]

$$a(k_x, k_{y_1}, k_{y_2}, k) = \tilde{\varphi}(k_x, k_{y_1}, k_{y_2}, 0, k)$$

$$\cdots (2-1-15)$$

Ultimately,

[Math. 36]
$$\varphi$$

is obtained as given by expression (2-1-16) below.
[Math. 37]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k)$$

$$\cdot e^{i\{\sqrt{(\sqrt{k^2-k_{y_1}^2}+\sqrt{k^2-k_{y_2}^2})^2-k_x^2}\}z} dk_x dk_{y_1} dk_{y_2}$$

$$\cdots (2-1-16)$$

By applying a limit operation ($y_2 \to y_1 = y$) to expression (2-1-16) on condition that k and z are fixed and integrating the result with respect to k, the imaging function is obtained as given by expression (2-1-17) below.
[Math. 38]

$$\phi(x, y, y, z, k) = \lim_{y_2 \to y_1 = y} [\phi(x, y, y_2, z, k)]$$

$$= \lim_{y_2 \to y_1 = y} [\frac{1}{(2\pi)^3} \int_{-\infty}^{\infty} \int_{-\infty}^{\infty} \int_{-\infty}^{\infty} e^{-i(k_x x + k_{y_1} y + k_{y_2} y_2)} a(k_x, k_{y_1}, k_{y_2}, k)$$

$$\cdot e^{i\{\sqrt{(\sqrt{k^2-k_{y_1}^2}+\sqrt{k^2-k_{y_2}^2})^2-k_x^2}\}z} dk_x dk_{y_1} dk_{y_2}]$$

$$\rho(x, y, z) = \int_0^{\infty} \phi(x, y, y, z, k)dk$$

$$\cdots (2-1-17)$$

As described above, it becomes possible to analytically solve a multistatic inverse scattering problem with a one-dimensional array. However, there is the considerable constraint that transmitting elements and receiving elements be arranged in a one-dimensional array. Besides, there are hardware challenges such as a requirement for provision of a gap in order to avoid inductive coupling between transmitting elements and receiving elements, and an inability to switch the role of transmission and reception when an active balun is employed. Furthermore, there is also a challenge that the time required to acquire data becomes long due to difficulty in parallelization of measurements.

<2-2. One-Dimensional Array and Curved Boundary>

An inverse scattering theory for the case where a region has a curved boundary surface will be described.

FIG. 2 is a conceptual diagram showing the relationship between a transmission point and a reception point. FIG. 2 shows a situation in which a wave radiated from point $r_1$ is reflected at point $\xi(\xi_1, \xi_2, ...)$ and returns to point $r_2$.

For example, transmission point $r_1$ and reception point $r_2$ of the wave freely and independently move in x-section D while satisfying a certain constraint on condition that angular frequency $\omega$ (= 2nf) is constant. If data obtained at this time is expressed as function $G(r_1, r_2, \omega)$, function $G(r_1, r_2, \omega)$ is supposed to be related to the distribution of reflection points in the region.

Here, $G(r_1, r_2, \omega)$ is the sum of reflected signals from all points $\xi$. Since there is a large number of reflection points in the region, $G(r_1, r_2, \omega)$ may be represented by expression (2-2-1) below.

[Math. 39]

$$G(\mathbf{r}_1, \mathbf{r}_2, \omega) = \iiint_D \varphi(\mathbf{r}_1 \to \xi \to \mathbf{r}_2, \omega) d\xi$$
$$\cdots (2-2-1)$$

Here,

[Math. 40]

$$\varphi(\mathbf{r}_1 \to \xi \to \mathbf{r}_2, \omega)$$

represents the signal strength of the wave that comes out from point $r_1$ and returns to point $r_2$ by being reflected at point $\xi$.

The constraint imposed on transmission point $r_1$ and reception point $r_2$ of the wave is that points $r_1$ and $r_2$ always have the same x coordinate.

Hereinafter, a theoretical structure of an inverse scattering problem will be described using function $G(r_1, r_2, \omega)$. Here, a partial region in a three-dimensional space is expressed as D, and a boundary of the partial region is expressed as $\partial D$. In this case, function $G(r_1, r_2, \omega)$ becomes a solution in region D to the differential equation as given by expression (2-2-2) below.

[Math. 41]

$$L\left(\frac{\partial}{\partial t}, \frac{\partial}{\partial \mathbf{r}_1}, \frac{\partial}{\partial \mathbf{r}_2}\right)\overline{G}(\mathbf{r}_1, \mathbf{r}_2, t) = 0$$
$$\cdots (2-2-2)$$

Here,

[Math. 42]

$$\overline{G}(\mathbf{r}_1, \mathbf{r}_2, t)$$

represents the function obtained by Fourier transform of function $G(r_1, r_2, \omega)$ with respect to $\omega$. The value of $G(r_1, r_2, \omega)$ at boundary $\partial D$ is the value measured by the receiving elements. The above equation is solved under this boundary condition. From this result, $\rho(r)$ is defined as given by expression (2-2-3) below.

[Math. 43]

$$\rho(\mathbf{r}) = \underset{t \to 0}{Lim} \left[ Tr \left[ \overline{G}(\mathbf{r}_1, \mathbf{r}_2, t) \right] \right] = \overline{G}(\mathbf{r}, \mathbf{r}, 0)$$

$$\cdots (2-2-3)$$

Here, Tr represents the trace operation. This $\rho(r)$ is the function relating to the gradient of the dielectric constant that is to be obtained in region D. In actuality, it is difficult to obtain differential operator $L(\delta/\delta t, \partial/\partial r_1, \delta/\delta r_2)$ appearing here.

Hereinafter, a method for obtaining this differential operator will be described. On an arbitrary curve, $r_1$ and $r_2$ do not always have the same y and z coordinates. Specifically, $r_1$ and $r_2$ are respectively expressed as follows: $r_1 = (x, y_1, z_1)$ and $r_2 = (x, y_2, z_2)$. Then, function G is defined as follows.

[Math. 44]

$$G(\mathbf{r}_1, \mathbf{r}_2, \omega) = \iiint_D \varphi(\mathbf{r}_1 \to \xi \to \mathbf{r}_2, \omega) d\xi$$

$$\cdots (2-2-4)$$

Next, an equation satisfied by function $G(r_1, r_2, \omega)$ is examined. Here, $\omega = ck$. Also, c represents the velocity of propagation and k represents the wave number. When $\lambda$ represents the wavelength, the relationship of $k = 2\pi/\lambda$ holds true.

FIG. 3 is a conceptual diagram showing the coordinates of a transmission point and a reception point. In FIG. 3, the transmission point is located at $P_1(x, y_1, z_1)$ and the reception point is located at $P_2(x, y_2, z_2)$. The wave radiated from transmission point $P_1$ is reflected at point $P(\xi, \eta, \zeta)$ and reaches reception point $P_2$.

For example, $z_1$ and $z_2$ are arbitrary. Measurement points that correspond to transmission point $P_1$ and reception point $P_2$ move on profile curve S. Profile curve S may be expressed by $z = f(y)$. Thus, $z_1 = f(y_1)$ and $z_2 = f(y_2)$ hold true. The distance between $P_1$ and P is expressed as $\rho_1$, and the distance between $P_2$ and P is expressed as $\rho_2$.

In the above-described case, function $\varphi$ as given by expression (2-2-5) below is introduced as the scattering field function.

[Math. 45]

$$\phi(x, y_1, y_2, z_1, z_2, \omega) = \iint_D \frac{e^{ik\rho_1}}{\rho_1} \frac{e^{ik\rho_2}}{\rho_2} \varepsilon(\xi, \eta, \zeta) d\xi d\eta d\zeta$$

$$\rho_1 = \sqrt{(x - \xi)^2 + (y_1 - \eta)^2 + (z_1 - \zeta)^2}$$

$$\rho_2 = \sqrt{(x - \xi)^2 + (y_2 - \eta)^2 + (z_2 - \zeta)^2}$$

$$\cdots (2-2-5)$$

Here, $\varepsilon(\xi, \eta, \zeta)$ represents the function of the dielectric constant at point $(\xi, \eta, \zeta)$ and corresponds to the reflectance at point $(\xi, \eta, \zeta)$. Point $(\xi, \eta, \zeta)$ corresponds to the reflection point. Note that $\varepsilon(\xi, \eta, \zeta)$ is unknown. Also, k represents the wave number. It is assumed that the time factor is proportional to $\exp(-iwt)$. The function in the integrand term of expression (2-2-5) described above corresponds to:

$$[\text{Math. 46}]$$

$$\varphi$$

in expression (2-2-1). That is, expression (2-2-6) below holds true.

[Math. 47]

$$\varphi = \frac{e^{ik\rho_1}}{\rho_1} \frac{e^{ik\rho_2}}{\rho_2} \varepsilon(\xi, \eta, \varsigma)$$

$$\cdots (2-2-6)$$

Next, a partial differential equation that has expression (2-2-6) as an asymptotical solution at high frequency is examined. Thus, calculation is performed while ignoring a high-order term with respect to 1/ρ obtained as a result of differentiation. Here, an abridged notation for differentiation is defined by expression (2-2-7) below.
[Math. 48]

$$\frac{\partial}{\partial t} \to \partial_t, \frac{\partial}{\partial x} \to \partial_x, \frac{\partial}{\partial y_1} \to \partial_{y_1}, \frac{\partial}{\partial y_2} \to \partial_{y_2}, \frac{\partial}{\partial z_1} \to \partial_{z_1}, \frac{\partial}{\partial z_2} \to \partial_{z_2}$$

$$\cdots (2-2-7)$$

As a result of the calculation, the fact that φ satisfies expression (2-2-8) below is derived.
[Math. 49]

$$\left[ \frac{1}{4} \Delta_5^2 - (ik)^2 \partial_x^2 - (\partial_{y_1}^2 + \partial_{z_1}^2)(\partial_{y_2}^2 + \partial_{z_2}^2) \right] \phi = 0$$

$$\cdots (2-2-8)$$

Although expression (2-2-8) is derived assuming a steady state, it is easy to extend expression (2-2-8) to a non-steady state. Thus, variables are substituted as given by expression (2-2-9) below.
[Math. 50]

$$-ik \to \frac{1}{c} \partial_t$$

$$\cdots (2-2-9)$$

Ultimately, expression (2-2-10) below is obtained.
[Math. 51]

$$\left[ \frac{1}{4} \Delta_5^2 - \frac{1}{c^2} \partial_t^2 \partial_x^2 - (\partial_{y_1}^2 + \partial_{z_1}^2)(\partial_{y_2}^2 + \partial_{z_2}^2) \right] \phi = 0$$

$$\cdots (2-2-10)$$

Next, a solution to expression (2-2-10) is examined on the assumption that the time factor of φ is proportional to exp(-iwt). First, expression (2-2-11) below is obtained by multiplex Fourier transform of φ with respect to t, x, $y_1$, and $y_2$.
[Math. 52]

$$\tilde{\phi}(k_x, k_{y_1}, k_{y_2}, z_1, z_2, \omega)$$

$$= \int_{-\infty}^{\infty} e^{i\omega t} dt \int_{-\infty}^{\infty} e^{ik_{y_1}y_1} dy_1 \int_{-\infty}^{\infty} e^{ik_{y_2}y_2} dy_2 \int_{-\infty}^{\infty} e^{ik_x x} \phi(x, y_1, y_2, z_1, z_2, t) dx$$

$$\cdots (2-2-11)$$

By expressing partial differentials with respect to $z_1$ and $z_2$ as $D_{z1}$ and $D_{z2}$, respectively, expression (2-2-12) below is obtained.
[Math. 53]

$$\{(D_{z_1}^2 + D_{z_2}^2 - k_x^2 - k_{y_1}^2 - k_{y_2}^2)^2 - 4k^2k_x^2 - 4(D_{z_1}^2 - k_{y_1}^2)(D_{z_2}^2 - k_{y_2}^2)\}\tilde{\phi} = 0$$
$$\cdots (2-2-12)$$

Next, solving the equation given by expression (2-2-12) is examined. However, there are two variables $z_1$ and $z_2$. Thus, it is difficult to solve the equation given by expression (2-2-12) unless boundary conditions are given to a region with one-dimensional degree of freedom in ($z_1$, $z_2$) space with respect to fixed point (x, $y_1$, $y_2$) or ($k_x$, $k_{y1}$, $k_{y2}$). However, boundary conditions obtained by radar measurement are merely given at one point ($f(y_1)$, $f(y_2)$) in ($z_1$, $z_2$) space.

To solve this problem, consistency between the theory used in the case where $z_1 = z$ and $z_2 = z$ and the theory described in this chapter is used. That is, the solution derived from the theory described in this chapter, in which $z_1$ and $z_2$ are independent, includes the solution derived in the special case where $z_1 = z$ and $z_2 = z$. In view of this, firstly, a solution to expression (2-2-12) is assumed as given by expression (2-2-13) below.
[Math. 54]

$$E(k_x, k_{y_1}, k_{y_2}, z_1, z_2) = \exp(is_1 z_1)\exp(is_2 z_2)$$
$$\cdots (2-2-13)$$

When $z_1 = z_2 = z$, expression (2-2-14) below is obtained.
[Math. 55]

$$E(k_x, k_{y_1}, k_{y_2}, z_1, z_2) = \exp\{i(s_1 + s_2)z\}$$
$$\cdots (2-2-14)$$

By substituting expression (2-2-13) in expression (2-2-12), expression (2-2-15) below is obtained.
[Math. 56]

$$(s_1^2 + s_2^2 + k_x^2 + k_{y_1}^2 + k_{y_2}^2)^2 - 4k^2k_x^2 - 4(s_1^2 + k_{y_1}^2)(s_2^2 + k_{y_2}^2) = 0$$
$$\cdots (2-2-15)$$

Another equation is further used. Specifically, expression (2-2-16) below is obtained from expression (2-1-15) in the previous chapter in accordance with the consistency described above.
[Math. 57]

$$s_1 + s_2 = \sqrt{(\sqrt{k^2 - k_{y_1}^2} + \sqrt{k^2 - k_{y_2}^2})^2 - k_x^2}$$
$$\cdots (2-2-16)$$

From expressions (2-2-15) and (2-2-16), $s_1(k_x, k_{y1}, k_{y2}, k)$ and $s_2(k_x, k_{y1}, k_{y2}, k)$ are determined as given by expression (2-2-17) below.
[Math. 58]

$$s_1(k_x, k_{y_1}, k_{y_2}, k) = \frac{\sqrt{k^2 - k_{y_1}^2}\sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$s_2(k_x, k_{y_1}, k_{y_2}, k) = \frac{\sqrt{k^2 - k_{y_2}^2}\sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$\cdots (2-2-17)$$

Using $s_1(k_x, k_{y1}, k_{y2}, k)$ and $s_2(k_x, k_{y1}, k_{y2}, k)$ described above, a solution to the equation given by expression (2-2-10) is derived as given by expression (2-2-18) below.
[Math. 59]

$$\phi(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k)$$

$$\cdot e^{is_1(k_x, k_{y_1}, k_{y_2}, k)z_1} e^{is_2(k_x, k_{y_1}, k_{y_2}, k)z_2} dk_x dk_{y_1} dk_{y_2}$$

$$\cdots (2-2-18)$$

<2-3. Two-Dimensional Array and Plane Boundary>

This section describes the theory for a case pertaining to a two-dimensional array and plane boundary.

FIG. 4 is a conceptual diagram showing the relationship between a transmission point and a reception point in a plane. As shown in FIG. 4, a microwave radiated from point $P_1$ is reflected at point P on a target and received at point $P_2$. Points $P_1$ and $P_2$ move to arbitrary points on a grading (two-dimensional array antenna) in a plane. Under this assumption, there are $n^4$ different microwave paths passing through point P on the target. This large number of paths considerably contributes to an improvement in the quality of an ultimate image. A method for processing such complex data to obtain an image will be described below.

For example, as shown in FIG. 4, the radio wave radiated from point $P_1(x_1, y_1, z)$ is reflected at point $P(\xi, \eta, \zeta)$ and received at point $P_2(x_2, y_2, z)$. When point P is assumed to move in entire region D, a signal received at $P_2$ is expressed by the following expression.
[Math. 60]

$$\phi(x_1, y_1, x_2, y_2, z) = \iiint_D \frac{e^{ik\rho_1}}{\rho_1} \frac{e^{ik\rho_2}}{\rho_2} \varepsilon(\xi, \eta, \zeta) d\xi d\eta d\zeta$$

$$\rho_1 = \sqrt{(x_1 - \xi)^2 + (y_1 - \eta)^2 + (z - \zeta)^2}$$

$$\rho_2 = \sqrt{(x_2 - \xi)^2 + (y_2 - \eta)^2 + (z - \zeta)^2}$$

$$\cdots (2-3-1)$$

It is assumed here that the time factor is proportional to exp(-iωt). The kernel function in the integrand term of the above expression is expressed as given by expression (2-3-2) below.

[Math. 61]

$$\varphi = \frac{e^{ik\rho_1}}{\rho_1} \frac{e^{ik\rho_2}}{\rho_2}$$

$$\cdots (2-3-2)$$

Next, a partial differential equation that has expression (2-3-2) as an asymptotical solution at short wavelengths is examined. Thus, calculation is performed while ignoring a high-order term with respect to $1/\rho$ obtained as a result of differentiation. Here, an abridged notation for differentiation is defined by expression (2-3-3).

[Math. 62]

$$\frac{\partial}{\partial t} \to \partial_t, \frac{\partial}{\partial x_1} \to \partial_{x_1}, \frac{\partial}{\partial x_2} \to \partial_{x_2}, \frac{\partial}{\partial y_1} \to \partial_{y_1}, \frac{\partial}{\partial y_2} \to \partial_{y_2}, \frac{\partial}{\partial z} \to \partial_z$$

$$\cdots (2-3-3)$$

Using expression (2-3-3), differentiation of each order of the kernel function is expressed as given by expression (2-3-4) below.

[Math. 63]

$$\partial_{x_1}\varphi = ik\frac{x_1-\xi}{\rho_1}\varphi + o(\rho^{-3}) \qquad \partial_{x_2}\varphi = ik\frac{x_2-\xi}{\rho_2}\varphi + o(\rho^{-3})$$

$$\partial_{y_1}\varphi = ik\frac{y_1-\eta}{\rho_1}\varphi + o(\rho^{-3}) \qquad \partial_{y_2}\varphi = ik\frac{y_2-\eta}{\rho_2}\varphi + o(\rho^{-3})$$

$$\partial_z\varphi = ik(z-\zeta)(\frac{1}{\rho_1} + \frac{1}{\rho_2})\varphi + o(\rho^{-3})$$

$$\partial_{x_1}\partial_{x_1}\varphi = (ik)^2\left(\frac{x_1-\xi}{\rho_1}\right)^2\varphi + o(\rho^{-3})$$

$$\partial_{y_1}\partial_{y_1}\varphi = (ik)^2\left(\frac{y_1-\eta}{\rho_1}\right)^2\varphi + o(\rho^{-3})$$

$$\partial_{x_2}\partial_{x_2}\varphi = (ik)^2\left(\frac{x_2-\xi}{\rho_2}\right)^2\varphi + o(\rho^{-3})$$

$$\partial_{y_2}\partial_{y_2}\varphi = (ik)^2\left(\frac{y_2-\eta}{\rho_2}\right)^2\varphi + o(\rho^{-3})$$

$$\partial_z\partial_z\varphi = (ik)^2(z-\zeta)^2(\frac{1}{\rho_1} + \frac{1}{\rho_2})^2\varphi + o(\rho^{-3})$$

$$\cdots (2-3-4)$$

Hereinafter, the complexity o(*) is omitted. In accordance with the sum of five differential equations of the second order, expression (2-3-5) below is obtained.
[Math. 64]

$$\Delta_5 \varphi = (\partial_{x_1}{}^2 + \partial_{y_1}{}^2 + \partial_{x_2}{}^2 + \partial_{y_2}{}^2 + \partial_z{}^2)\varphi$$

$$= (ik)^2 \{2 + 2\frac{(z-\zeta)^2}{\rho_1\rho_2}\}\varphi$$

$$\cdots (2-3-5)$$

Accordingly, expression (2-3-6) below is obtained from expression (2-3-5).
[Math. 65]

$$\{\Delta_5 - 2(ik)^2\}\varphi = 2(ik)^2 \frac{(z-\xi)^2}{\rho_1\rho_2}\varphi$$

$$= 2(ik)^2 \frac{\rho_1{}^2 - (x_1-\xi)^2 - (y_1-\eta)^2}{\rho_1\rho_2}\varphi$$

$$= 2(ik)^2 \frac{\rho_2{}^2 - (x_2-\xi)^2 - (y_2-\eta)^2}{\rho_1\rho_2}\varphi$$

$$\cdots (2-3-6)$$

By acting the operation of expression (2-3-6) two times, expression (2-3-7) below is obtained.
[Math. 66]

$$\{\Delta_5 - 2(ik)^2\}^2 \varphi$$

$$= 4(ik)^4 \frac{\{\rho_1{}^2 - (x_1-\xi)^2 - (y_1-\eta)^2\}\{\rho_2{}^2 - (x_2-\xi)^2 - (y_2-\eta)^2\}}{\rho_1{}^2\rho_2{}^2}\varphi$$

$$= 4(ik)^4 \{1 - (ik)^{-2}\partial_{x_1}{}^2 - (ik)^{-2}\partial_{y_1}{}^2\}\{1 - (ik)^{-2}\partial_{x_2}{}^2 - (ik)^2\partial_{y_2}{}^2\}\varphi$$

$$\cdots (2-3-7)$$

Expression (2-3-7) is summarized to obtain expression (2-3-8) below.
[Math. 67]

$$[\frac{1}{4}\{\Delta_5 - 2(ik)^2\}^2 - (\partial_{x_1}{}^2 + \partial_{y_1}{}^2)(\partial_{x_2}{}^2 + \partial_{y_2}{}^2)$$

$$+ (ik)^2 (\partial_{x_1}{}^2 + \partial_{y_1}{}^2 + \partial_{x_2}{}^2 + \partial_{y_2}{}^2) - (ik)^4]\varphi = 0$$

$$\cdots (2-3-8)$$

Although expression (2-3-8) is derived assuming a steady state, it is easy to extend expression (2-3-8) to a non-steady state. Thus, variables are substituted as given by expression (2-3-9) below.
[Math. 68]

$$-ik \rightarrow \frac{1}{c}\partial t$$

$$\cdots (2-3-9)$$

By this substitution, expression (2-3-8) is converted into expression (2-3-10) below that includes time.
[Math. 69]

$$\{\Delta_5^2 - \frac{4}{c^2}\partial_t^2\partial_z^2 - 4(\partial_{x_1}^2 + \partial_{y_1}^2)(\partial_{x_2}^2 + \partial_{y_2}^2)\}\varphi = 0$$

$$\Delta_5 = \partial_{x_1}^2 + \partial_{y_1}^2 + \partial_{x_2}^2 + \partial_{y_2}^2 + \partial_z^2$$

$$\cdots (2-3-10)$$

Expression (2-3-10) described above is a partial differential equation that has the kernel function given by expression (2-3-2) as a solution, and $\varphi$ also satisfies the above-described partial differential equation by applying differentiation to the kernel of expression (2-3-1). This equation is a five-dimensional pseudo wave equation configured by six variables (t, $x_1$, $y_1$, $x_2$, $y_2$, z).

Next, this equation is solved by Fourier transform. First, $\varphi$ is subjected to multiplex Fourier transform with respect to t, $x_1$, $y_1$, $x_2$, and $y_2$ as given by expression (2-3-11) below.
[Math. 70]

$$\tilde{\phi}(k_{x_1}, k_{y_1}, k_{x_2}, k_{y_2}, z, \omega)$$

$$= \int_{-\infty}^{\infty} e^{i\omega t} dt \int_{-\infty}^{\infty} \int_{-\infty}^{\infty} \int_{-\infty}^{\infty} \int_{-\infty}^{\infty} e^{i(k_{x_1}x_1 + k_{y_1}y_1)} e^{i(k_{x_2}x_2 + k_{y_2}y_2)} \phi(x_1, y_1, x_2, y_2, z, t) dx_1 dy_1 dx_2 dy_2$$

$$\cdots (2-3-11)$$

When the differential with respect to z is expressed as $D_z$, expression (2-3-12) below is obtained from expressions (2-3-10) and (2-3-11).
[Math. 71]

$$\{(D_z^2 - k_{x_1}^2 - k_{y_1}^2 - k_{x_2}^2 - k_{y_2}^2)^2 + 4k^2 D_z^2 - 4(k_{x_1}^2 + k_{y_1}^2)(k_{x_2}^2 + k_{y_2}^2)\}\tilde{\phi} = 0$$

$$\cdots (2-3-12)$$

Here, the relationship of $\omega = ck$ is used. Four basic solutions to this equation are expressed as given by expression (2-3-13) below.
[Math. 72]

$$E_1 = e^{i\left\{\sqrt{k^2 - k_{x_1}^2 - k_{y_1}^2} + \sqrt{k^2 - k_{x_2}^2 - k_{y_2}^2}\right\}z}$$

$$E_2 = e^{-i\left\{\sqrt{k^2 - k_{x_1}^2 - k_{y_1}^2} + \sqrt{k^2 - k_{x_2}^2 - k_{y_2}^2}\right\}z}$$

$$E_3 = e^{i\left\{\sqrt{k^2 - k_{x_1}^2 - k_{y_1}^2} - \sqrt{k^2 - k_{x_2}^2 - k_{y_2}^2}\right\}z}$$

$$E_4 = e^{-i\left\{\sqrt{k^2 - k_{x_1}^2 - k_{y_1}^2} - \sqrt{k^2 - k_{x_2}^2 - k_{y_2}^2}\right\}z}$$

$$\cdots (2-3-13)$$

Considering the facts that the time factor is $e^{-i\omega t}$, the phase is added using the path of radiated radio waves, and radio waves reflected off the object are bounced off toward a measurement plane, $E_1$ is the unique meaningful solution. Accordingly, expression (2-3-14) below is obtained.
[Math. 73]

$$\tilde{\phi}(k_{x_1}, k_{y_1}, k_{x_2}, k_{y_2} z, k) = a(k_{x_1}, k_{y_1}, k_{x_2}, k_{y_2}, k)e^{i\left\{\sqrt{k^2 - k_{x_1}^2 - k_{y_1}^2} + \sqrt{k^2 - k_{x_2}^2 - k_{y_2}^2}\right\}z}$$

$$\cdots (2-3-14)$$

By substituting z = 0 in expression (2-3-14), $a(k_{x1}, k_{y1}, k_{x2}, k_{y2}, k)$ is obtained as given by expression (2-3-15) below.
[Math. 74]

$$a(k_{x_1}, k_{y_1}, k_{x_2}, k_{y_2}, k) = \tilde{\phi}(k_{x_1}, k_{y_1}, k_{x_2}, k_{y_2}, 0, k)$$

$$\cdots (2-3-15)$$

From the above, φ is obtained as given by expression (2-3-16) below.
[Math. 75]

$$\phi(x_1, y_1, x_2, y_2, z, k)$$

$$= \frac{1}{(2\pi)^4} \int_{-\infty}^{\infty} \int_{-\infty}^{\infty} \int_{-\infty}^{\infty} \int_{-\infty}^{\infty} e^{-i(k_{x_1}x_1 + k_{y_1}y_1)} e^{-i(k_{x_2}x_2 + k_{y_2}y_2)} e^{i\left(\sqrt{k^2 - k_{x_1}^2 - k_{y_1}^2} + \sqrt{k^2 - k_{x_2}^2 - k_{y_2}^2}\right)z}$$

$$\cdot a(k_{x_1}, k_{y_1}, k_{x_2}, k_{y_2}, k) dk_{x_1} dk_{y_1} dk_{x_2} dk_{y_2}$$

$$\cdots (2-3-16)$$

Next, under the condition where k and z are fixed, by applying a limit operation ($y_1 \to y$ and $y_2 \to y$) to expression (2-3-16), we obtain the expression (2-3-17).
[Math. 76]

$$\Phi(x,y,z,k) = \phi(x,y,x,y,z,k)$$

$$= \underset{\substack{x_2 \to x_1 = x \\ y_2 \to y_1 = y}}{Lim} [\phi(x_1, y_1, x_2, y_2, z, k)]$$

$$= \underset{\substack{x_2 \to x_1 = x \\ y_2 \to y_1 = y}}{Lim} [\frac{1}{(2\pi)^4} \int_{-\infty}^{\infty}\int_{-\infty}^{\infty}\int_{-\infty}^{\infty}\int_{-\infty}^{\infty} e^{-i(k_{x_1}x_1 + k_{y_1}y_1)} e^{-i(k_{x_2}x_2 + k_{y_2}y_2)} e^{iz\left(\sqrt{k^2 - k_{x_1}^2 - k_{y_1}^2} + \sqrt{k^2 - k_{x_2}^2 - k_{y_2}^2}\right)}$$

$$\cdot a(k_{x_1}, k_{y_1}, k_{x_2}, k_{y_2}, k) dk_{x_1} dk_{y_1} dk_{x_2} dk_{y_2} ]$$

$$\cdot\cdot\cdot (2-3-17)$$

Next, expression (2-3-17) is integrated with respect to k to obtain expression (2-3-18) below as an imaging function.
[Math. 77]

$$\rho(x,y,z) = \int_0^{\infty} \Phi(x,y,z,k)dk = \int_0^{\infty} \phi(x,y,x,y,z,k)dk$$

$$= \underset{\substack{x_2 \to x_1 = x \\ y_2 \to y_1 = y}}{Lim} [\int_0^{\infty} \phi(x_1, y_1, x_2, y_2, z, k)dk]$$

$$= \underset{\substack{x_2 \to x_1 = x \\ y_2 \to y_1 = y}}{Lim} [\frac{1}{(2\pi)^4} \int_0^{\infty}\int_{-\infty}^{\infty}\int_{-\infty}^{\infty}\int_{-\infty}^{\infty}\int_{-\infty}^{\infty} e^{-i(k_{x_1}x_1 + k_{y_1}y_1)} e^{-i(k_{x_2}x_2 + k_{y_2}y_2)} e^{iz\left(\sqrt{k^2 - k_{x_1}^2 - k_{y_1}^2} + \sqrt{k^2 - k_{x_2}^2 - k_{y_2}^2}\right)}$$

$$\cdot a(k_{x_1}, k_{y_1}, k_{x_2}, k_{y_2}, k) dk_{x_1} dk_{y_1} dk_{x_2} dk_{y_2} dk ]$$

$$\cdot\cdot\cdot (2-3-18)$$

In expression (2-3-18), the integration with respect to $k_{x1}$, $k_{y1}$, $k_{x2}$, and $k_{y2}$ are in the form of Fourier transform and suitable for processing performed by a calculator. On the other hand, the term exp(iz...) of the integrand is not in the form of Fourier transform. Thus, ordinary integration is done with respect to k while specifying, for example, the value of z. Alternatively, in order to reduce the calculation time, expression (2-3-18) may be modified so as to express the whole by only Fourier transform.
For example, the coefficient of iz in the term exp(iz...) of expression (2-3-17) is expressed by expression (2-3-19) below using new variable u.
[Math. 78]

$$u = \sqrt{k^2 - k_{x_1}^2 - k_{y_1}^2} + \sqrt{k^2 - k_{x_2}^2 - k_{y_2}^2}$$

$$\cdot\cdot\cdot (2-3-19)$$

By rationalizing the right-hand side of expression (2-3-19), expression (2-3-20) below is obtained.
[Math. 79]

$$\frac{k_{x_2}^2 + k_{y_2}^2 - k_{x_1}^2 - k_{y_1}^2}{u} = \sqrt{k^2 - k_{x_1}^2 - k_{y_1}^2} - \sqrt{k^2 - k_{x_2}^2 - k_{y_2}^2}$$

$$\cdot\cdot\cdot (2-3-20)$$

By solving each square root from the two expressions including expressions (2-3-19) and (2-3-20), expression (2-3-21) below is obtained.
[Math. 80]

$$2\sqrt{k^2 - k_{x_1}^2 - k_{y_1}^2} = u + \frac{k_{x_2}^2 + k_{y_2}^2 - k_{x_1}^2 - k_{y1}^2}{u}$$

$$2\sqrt{k^2 - k_{x_2}^2 - k_{y_2}^2} = u - \frac{k_{x_2}^2 + k_{y_2}^2 - k_{x_1}^2 - k_{y1}^2}{u}$$

$$\cdots (2-3-21)$$

Accordingly, k is expressed as given by expression (2-3-22) below.
[Math. 81]

$$k = \frac{1}{2}\sqrt{u^2 + \frac{(k_{x_2}^2 + k_{y_2}^2 - k_{x_1}^2 - k_{y_1}^2)^2}{u^2} + 2(k_{x_2}^2 + k_{y_2}^2 + k_{x_1}^2 + k_{y_1}^2)}$$

$$\cdots (2-3-22)$$

Next, expression (2-3-23) below is obtained by differentiation of both sides of expression (2-3-19) with respect to k and u.
[Math. 82]

$$du = kdk\left(\frac{1}{\sqrt{k^2 - k_{x_1}^2 - k_{y_1}^2}} + \frac{1}{\sqrt{k^2 - k_{x_2}^2 - k_{y_2}^2}}\right)$$

$$\cdots (2-3-23)$$

By solving dk from expression (2-3-23), expression (2-3-24) below is obtained.
[Math. 83]

$$dk = \frac{1}{ku}\sqrt{k^2 - k_{x_1}^2 - k_{y_1}^2}\sqrt{k^2 - k_{x_2}^2 - k_{y_2}^2}\, du$$

$$\cdots (2-3-24)$$

At last in summary, expression (2-3-18) is converted as given by expression (2-3-25) below.
[Math. 84]

$$\rho(x,y,z) = \int_0^\infty \Phi(x,y,z,k)dk = \int_0^\infty \phi(x,y,x,y,z,k)dk$$

$$= \underset{\substack{x_2 \to x_1 = x \\ y_2 \to y_1 = y}}{Lim} [\int_0^\infty \phi(x_1,y_1,x_2,y_2,z,k)dk]$$

$$= \underset{\substack{x_2 \to x_1 = x \\ y_2 \to y_1 = y}}{Lim} [\frac{1}{(2\pi)^4} \int_0^\infty \int_{-\infty}^\infty \int_{-\infty}^\infty \int_{-\infty}^\infty \int_{-\infty}^\infty e^{-i(k_{x_1}x_1 + k_{y_1}y_1)} e^{-i(k_{x_2}x_2 + k_{y_2}y_2)} e^{izu}$$

$$\cdot a(k_{x_1}, k_{y_1}, k_{x_2}, k_{y_2}, k)dk_{x_1} dk_{y_1} dk_{x_2} dk_{y_2} dk]$$

$$\cdots (2-3-25)$$

When this result is applied to a semi-two-dimensional array antenna array, which will be described later, the dimension of the integral becomes higher by an amount corresponding to $dk_{x2}$. Accordingly, a calculation time that is nowhere near real-time calculation is required for the computational ability of an existing calculator.

<2-4. Two-Dimensional Array and Curved Boundary>

FIG. 5 is a conceptual diagram showing the relationship between a transmission point and a reception point on a curved plane. Since boundary conditions for curved plane are used, it is assumed that the transmission point and the reception point have different z coordinates. Accordingly, the scattering field function is expressed as given by expression (2-4-1) below.
[Math. 85]

$$\varphi(x_1,y_1,x_2,y_2,z_1,z_2,\omega) = \iint_D \frac{e^{ik\rho_1}}{\rho_1} \frac{e^{ik\rho_2}}{\rho_2} \varepsilon(\xi,\eta,\zeta)d\xi d\eta d\zeta$$

$$\rho_1 = \sqrt{(x_1 - \xi)^2 + (y_1 - \eta)^2 + (z_1 - \zeta)^2}$$

$$\rho_2 = \sqrt{(x_2 - \xi)^2 + (y_2 - \eta)^2 + (z_2 - \zeta)^2}$$

$$\cdots (2-4-1)$$

Here, k represents the wave number. It is assumed that the time factor is proportional to exp(-iwt). Also, D represents the region and corresponds to $D_3$ in FIG. 5. The kernel function in the integrand term of the above expression is expressed as given by expression (2-4-2) below.
[Math. 86]

$$\varphi = \frac{e^{ik\rho_1}}{\rho_1} \frac{e^{ik\rho_2}}{\rho_2} \varepsilon(\xi,\eta,\varsigma)$$

$$\cdots (2-4-2)$$

Next, a partial differential equation that has expression (2-4-2) as a solution, excluding regions in close vicinity of the transmission point and the reception point, is examined. Thus, calculation is performed while ignoring a high-order term with respect to $1/\rho$ obtained as a result of differentiation. Here, an abridged notation for differentiation is defined by expression (2-4-3) below.
[Math. 87]

$$\frac{\partial}{\partial t} \rightarrow \partial_t, \frac{\partial}{\partial x_1} \rightarrow \partial_{x_1}, \frac{\partial}{\partial x_2} \rightarrow \partial_{x_2}, \frac{\partial}{\partial y_1} \rightarrow \partial_{y_1}, \frac{\partial}{\partial y_2} \rightarrow \partial_{y_2}, \frac{\partial}{\partial z_1} \rightarrow \partial_{z_1}, \frac{\partial}{\partial z_2} \rightarrow \partial_{z_2}$$
$$\cdots (2-4-3)$$

In this case, the fact that the kernel function satisfies the equation given by expression (2-4-4) below is derived by similar calculation to that in the previous chapter.
[Math. 88]

$$\left\{ \Delta_6 - 2(ik)^2 \right\} \varphi = \left\{ (\partial_{x_1}{}^2 + \partial_{x_2}{}^2 + \partial_{y_1}{}^2 + \partial_{y_2}{}^2 + \partial_{z_1}{}^2 + \partial_{z_2}{}^2) - 2(ik)^2 \right\} \varphi = 0$$
$$\cdots (2-4-4)$$

Assuming that the time factor is proportional to exp(-i$\omega$t), a solution to expression (2-4-4) described above is examined. First, the kernel function is subjected to multiplex Fourier transform with respect to t, $x_1$, $x_2$, $y_1$, and $y_2$ to obtain the following expression.
[Math. 89]

$$\tilde{\varphi}(k_{x_1}, k_{y_1}, k_{x_2}, k_{y_2}, z_1, z_2, \omega)$$
$$= \int_{-\infty}^{\infty} e^{i\omega t} dt \int_{-\infty}^{\infty} e^{ik_{y_1} y_1} dy_1 \int_{-\infty}^{\infty} e^{ik_{y_2} y_2} dy_2 \int_{-\infty}^{\infty} e^{ik_{x_1} x_1} dx_1 \int_{-\infty}^{\infty} e^{ik_{x_2} x_2} \varphi(x_1, y_1, x_2, y_2, z_1, z_2, t) dx_2$$
$$\cdots (2-4-5)$$

Like expression (2-3-12) in the previous chapter, expression (2-4-6) below is obtained from expression (2-4-4).
[Math. 90]

$$\left\{ (D_{z_1}{}^2 + D_{z_2}{}^2 - k_{x_1}{}^2 - k_{x_2}{}^2 - k_{y_1}{}^2 - k_{y_2}{}^2) + 2k^2 \right\} \tilde{\varphi} = 0$$
$$\cdots (2-4-6)$$

Next, solving this equation is examined. However, there are two variables $z_1$ and $z_2$. Thus, it is difficult to solve the equation given by expression (2-4-6) unless boundary conditions are given to a region with one-dimensional degree of freedom in ($z_1$, $z_2$) space with respect to fixed point ($x_1$, $x_2$, $y_1$, $y_2$) or ($k_{x1}$, $k_{x2}$, $k_{y1}$, $k_{y2}$). However, boundary conditions obtained by radar measurement are merely given at one point {f($x_1$, $y_1$), f($x_2$, $y_2$)} in ($z_1$, $z_2$) space.
To solve this problem, consistency between the theory used in the case where $z_1 = z$ and $z_2 = z$ and the theory described in this chapter is used. That is, the solution derived from the theory described in this chapter, in which $z_1$ and $z_2$ are independent, includes the solution derived in the special case where $z_1 = z$ and $z_2 = z$. In view of this, firstly, a solution to expression (2-4-6) is assumed as given by expression (2-4-7) below.
[Math. 91]

$$E(k_{x_1}, k_{x_2}, k_{y_1}, k_{y_2}, z_1, z_2) = \exp(is_1 z_1) \exp(is_2 z_2)$$
$$\cdots (2-4-7)$$

In accordance with expressions (2-4-6) and (2-4-7) and the consistency described above, expressions (2-4-8) and (2-4-9) below are obtained.
[Math. 92]

$$s_1{}^2 + s_2{}^2 + k_{x_1}{}^2 + k_{x_2}{}^2 + k_{y_1}{}^2 + k_{y_2}{}^2 - 2k^2 = 0$$
$$\cdots (2-4-8)$$

[Math. 93]

$$s_1 + s_2 = \sqrt{k^2 - k_{x_1}^2 - k_{y_1}^2} + \sqrt{k^2 - k_{x_2}^2 - k_{y_2}^2}$$
$$\cdots (2-4-9)$$

From these equations, $s_1$ and $s_2$ are obtained as given by expression (2-4-10) below.
[Math. 94]

$$s_1 = \sqrt{k^2 - k_{x_1}^2 - k_{y_1}^2}$$
$$s_2 = \sqrt{k^2 - k_{x_2}^2 - k_{y_2}^2}$$
$$\cdots (2-4-10)$$

Using $s_1$ and $s_2$ described above, a solution to the equation is expressed as given by expression (2-4-11) below.
[Math. 95]

$$\varphi(x_1, y_1, x_2, y_2, z_1, z_2, k)$$
$$= \frac{1}{(2\pi)^4} \int_{-\infty}^{\infty}\int_{-\infty}^{\infty}\int_{-\infty}^{\infty}\int_{-\infty}^{\infty} e^{-i(k_{x_1}x_1 + k_{y_1}y_1 + k_{x_2}x_2 + k_{y_2}y_2)} a(k_{x_1}, k_{y_1}, k_{x_2}, k_{y_2})$$
$$\cdot e^{is_1(k_{x1}, k_{y_1}, k_{x_2}, k_{y_2})z_1} e^{is_2(k_{x_1}, k_{y_1}, k_{x_2}, k_{y_2})z_2} dk_{x_1} dk_{y_1} dk_{x_2} dk_{y_2}$$
$$\cdots (2-4-11)$$

Moreover, an equation on curved plane S may be assumed as given by, for example, expression (2-4-12) below.
[Math. 96]

$$z = f(x, y)$$
$$\cdots (2-4-12)$$

Boundary conditions given on curved plane S are expressed as given by expression (2-4-13) below.
[Math. 97]

$$\varphi(x_1, y_1, x_2, y_2, f(x_1, y_1), f(x_2, y_2), k)$$
$$= \frac{1}{(2\pi)^4} \int_{-\infty}^{\infty}\int_{-\infty}^{\infty}\int_{-\infty}^{\infty}\int_{-\infty}^{\infty} e^{-i(k_{x_1}x_1 + k_{y_1}y_1 + k_{x_2}x_2 + k_{y_2}y_2)} a(k_{x_1}, k_{y_1}, k_{x_2}, k_{y_2})$$
$$\cdot e^{i\{s_1(k_{x_1}, k_{y_1}, k_{x_2}, k_{y_2})f(x_1, y_1) + s_2(k_{x_1}, k_{y_1}, k_{x_2}, k_{y_2})f(x_2, y_2)\}} dk_{x_1} dk_{y_1} dk_{x_2} dk_{y_2}$$
$$\cdots (2-4-13)$$

The equation given by expression (2-4-13) is used to determine $a(k_{x1}, k_{x2}, k_{y1}, k_{y2})$. Hereinafter, an abridged notation as given by expression (2-4-14) below is used.
[Math. 98]

$$a(\mathbf{k}) = a(k_{x_1}, k_{x_2}, k_{y_1}, k_{y_2})$$

$$s_1(\mathbf{k}) = s_1(k_{x_1}, k_{x_2}, k_{y_1}, k_{y_2})$$

$$s_2(\mathbf{k}) = s_2(k_{x_1}, k_{x_2}, k_{y_1}, k_{y_2})$$

$$\cdots (2-4-14)$$

Using the abridged notation given by expression (2-4-14), an integral equation with respect to a(k), as given by expression (2-4-15) below, is derived.
[Math. 99]

$$\varphi(x_1, x_2, y_1, y_2, f(x_1, y_1), f(x_2, y_2), k)$$

$$= \frac{1}{(2\pi)^4} \int_{-\infty}^{\infty}\int_{-\infty}^{\infty}\int_{-\infty}^{\infty}\int_{-\infty}^{\infty} e^{-i(k_{x_1}x_1 + k_{x_2}x_2 + k_{y_1}y_1 + k_{y_2}y_2)} a(\mathbf{k}) e^{i\{s_1(\mathbf{k})f(x_1,y_1) + s_2(\mathbf{k})f(x_2,y_2)\}} d\mathbf{k}$$

$$\cdots (2-4-15)$$

Once a(k) is obtained from expression (2-4-15) described above, the scattering field function can be expressed as given by expression (2-4-16) below.
[Math. 100]

$$\varphi(x_1, y_1, x_2, y_2, z_1, z_2, k)$$

$$= \frac{1}{(2\pi)^4} \int_{-\infty}^{\infty}\int_{-\infty}^{\infty}\int_{-\infty}^{\infty}\int_{-\infty}^{\infty} e^{-i(k_{x_1}x_1 + k_{y_1}y_1 + k_{x_2}x_2 + k_{y_2}y_2)} a(\mathbf{k}) e^{is_1(\mathbf{k})z_1} e^{is_2(\mathbf{k})z_2} d\mathbf{k}$$

$$\cdots (2-4-16)$$

By applying $z_1 = z_2 = z$ to expression (2-4-16) described above and performing Fourier transform with respect to k, the imaging function is obtained as given by expression (2-4-17) below.
[Math. 101]

$$\rho(\mathbf{r}) = \underset{t \to 0}{Lim}\left[ \frac{1}{2\pi} \int_{-\infty}^{\infty} \varphi(x, y, x, y, z, z, k) e^{-ickt} dk \right]$$

$$\cdots (2-4-17)$$

Through the above-described process, ultimate imaging function ρ(r) is obtained.

<2-5. Semi-Two-Dimensional Array and Plane Boundary>

FIG. 6 is a conceptual diagram showing an example of coordinates relating to a semi-two-dimensional array antenna. In this example, the semi-two-dimensional array antenna is configured by two linear array antennas including single-row transmitting array antenna TA and single-row receiving array antenna RA. Such a semi-two-dimensional array antenna is also referred to as an S-Array (super-array) or an S-Array multistatic antenna.
Transmitting array antenna TA includes n transmitting antenna elements T. Receiving array antenna RA includes n receiving antenna elements R. The x coordinate of transmitting array antenna TA is expressed as $x_1$, the x coordinate of receiving array antenna RA is expressed as $x_2$, and the distance in the x-axis direction between transmitting array antenna TA and receiving array antenna RA is expressed as d. This configuration is capable of obtaining $n^2$ sets of time-series data, each being an arbitrary combination of n transmitting antenna elements and n receiving antenna elements at each point x in the scanning direction.

This section describes the theory for imaging an object from data obtained by a semi-two-dimensional array antenna as illustrated in FIG. 6. First, expression (2-3-10) relating to a two-dimensional array is used as the starting point for examination. Expression (2-5-1) below is the same as expression (2-3-10).

[Math. 102]

$$\{\Delta_5^{\ 2} - \frac{4}{c^2}\partial_t^{\ 2}\partial_z^{\ 2} - 4(\partial_{x_1}^{\ 2} + \partial_{y_1}^{\ 2})(\partial_{x_2}^{\ 2} + \partial_{y_2}^{\ 2})\}\varphi = 0$$

$$\Delta_5 = \partial_{x_1}^{\ 2} + \partial_{y_1}^{\ 2} + \partial_{x_2}^{\ 2} + \partial_{y_2}^{\ 2} + \partial_z^{\ 2}$$

$$\cdot \cdot \cdot (2-5-1)$$

Also,

$$[\text{Math. } 103]$$

$$\varphi$$

with respect to t, $x_1$, $y_1$, and $y_2$ is expressed as given by expression (2-5-2) below.

[Math. 104]

$$\tilde{\varphi}(k_{x_1}, k_{y_1}, x_2, k_{y_2}, z, k)$$

$$= \int_{-\infty}^{\infty} e^{ickt}dt \int_{-\infty}^{\infty}\int_{-\infty}^{\infty}\int_{-\infty}^{\infty} e^{i(k_{x_1}x_1 + k_{y_1}y_1 + k_{y_2}y_2)}\varphi(x_1, y_1, x_2, y_2, z, t)dx_1 dy_1 dy_2$$

$$\cdot \cdot \cdot (2-5-2)$$

In the following description, variable $x_2$ is expressed as u. Expression (2-5-3) below is obtained by Fourier transform of both sides of expression (2-5-1) with respect to t, $x_1$, $y_1$, and $y_2$.

[Math. 105]

$$\left\{\left(\partial_u^{\ 2} + \partial_z^{\ 2} - k_{x_1}^{\ 2} - k_{y_1}^{\ 2} - k_{y_2}^{\ 2}\right)^2 + 4k^2\partial_z^{\ 2} + 4(k_{x_1}^{\ 2} + k_{y_1}^{\ 2})(\partial_u^{\ 2} - k_{y_2}^{\ 2})\right\}\tilde{\varphi} = 0$$

$$\cdot \cdot \cdot (2-5-3)$$

A solution to expression (2-5-3) described above, which is the two-dimensional partial differential equation with respect to u and z, is assumed as given by expression (2-5-4) below.

[Math. 106]

$$\tilde{\varphi} \propto e^{s_3 u}e^{s_4 z}$$

$$\cdot \cdot \cdot (2-5-4)$$

Here, $s_3$ and $s_4$ are functions with respect to $k_{x1}$, $k_{y1}$, $k_{y2}$, and k as given by expression (2-5-5) below. In other words, $s_3$ and $s_4$ are constants defined by $k_{x1}$, $k_{y1}$, $k_{y2}$, and k.

[Math. 107]

$$s_3 = s_3(k_{x_1}, k_{y_1}, k_{y_2}, k)$$

$$s_4 = s_4(k_{x_1}, k_{y_1}, k_{y_2}, k)$$

$$\cdots (2-5-5)$$

By substituting expression (2-5-4) in expression (2-5-3), expression (2-5-6) below is obtained.
[Math. 108]

$$\left(s_3^{\,2} + s_4^{\,2} - k_{x_1}^{\,2} - k_{y_1}^{\,2} - k_{y_2}^{\,2}\right)^2 + 4k^2 s_4^{\,2} + 4(k_{x_1}^{\,2} + k_{y_1}^{\,2})(s_3^{\,2} - k_{y_2}^{\,2}) = 0$$

$$\cdots (2-5-6)$$

However, $s_3$ and $s_4$ cannot be determined from only this algebraic equation. Next, expression (2-5-4) is changed into expression (2-5-7) below.
[Math. 109]

$$\tilde{\varphi}(k_{x_1}, k_{y_1}, u, k_{y_2}, z, k) = b(k_{x_1}, k_{y_1}, k_{y_2}, k)e^{s_3 u} e^{s_4 z}$$

$$\cdots (2-5-7)$$

By inverse Fourier transform of expression (2-5-7) with respect to $k_{x1}$, $k_{y1}$, and $k_{y2}$ and application of the result to $u_\rightarrow x_2$, expression (2-5-8) below is obtained.
[Math. 110]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} b(k_{x_1}, k_{y_1}, k_{y_2}, k)e^{s_3 x_2} e^{s_4 z} dk_{x_1} dk_{y_1} dk_{y_2}$$

$$\cdots (2-5-8)$$

By applying $x_2 = x_1 = x$ to expression (2-5-8), expression (2-5-9) below is obtained.
[Math. 111]

$$\varphi(x, y_1, x, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x + k_{y_1}y_1 + k_{y_2}y_2)} b(k_{x_1}, k_{y_1}, k_{y_2}, k)e^{s_3 x} e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i\{(k_{x_1}+is_3)x + k_{y_1}y_1 + k_{y_2}y_2\}} b(k_{x_1}, k_{y_1}, k_{y_2}, k)e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_x x + k_{y_1}y_1 + k_{y_2}y_2)} b(k_{x_1}, k_{y_1}, k_{y_2}, k)e^{s_4 z} \left(\frac{dk_{x_1}}{dk_x}\right) dk_x dk_{y_1} dk_{y_2}$$

$$\cdots (2-5-9)$$

Here, $k_x$ is expressed as given by expression (2-5-10) below.
[Math. 112]

$$k_x = k_{x_1} + is_3$$
$$\cdots (2-5-10)$$

Expression (2-5-9) described above is supposed to agree with expression (2-1-16) because it agrees with the solution to the scattering field equation for the one-dimensional array. Expression (2-5-11) below is the same as expression (2-1-16).

[Math. 113]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k)$$

$$\cdot e^{i\{\sqrt{(\sqrt{k^2 - k_{y_1}^2} + \sqrt{k^2 - k_{y_2}^2})^2 - k_x^2}\}z} dk_x dk_{y_1} dk_{y_2}$$

$$\cdots (2-5-11)$$

By comparing expressions (2-5-9) and (2-5-11), expression (2-5-12) below is obtained.

[Math. 114]

$$b(k_{x_1}, k_{y_1}, k_{y_2}, k)\left(\frac{dk_{x_1}}{d(k_{x_1} + is_3)}\right) = a(k_{x_1} + is_3, k_{y_1}, k_{y_2}, k)$$

$$s_4 = i\sqrt{(\sqrt{k^2 - k_{y_1}^2} + \sqrt{k^2 - k_{y_2}^2})^2 - (k_{x_1} + is_3)^2}$$

$$\cdots (2-5-12)$$

The second equation given by expression (2-5-12) is raised to second power to obtain expression (2-5-13) below.

[Math. 115]

$$s_4^2 + s_3^2 = 2ik_{x_1}s_3 + k_{x_1}^2 - \left(\sqrt{k^2 - k_{y_1}^2} + \sqrt{k^2 - k_{y_2}^2}\right)^2$$

$$\cdots (2-5-13)$$

By substituting expression (2-5-13) in expression (2-5-6), expression (2-5-14) below is obtained.

[Math. 116]

$$\left\{2ik_{x_1}s_3 - k_{y_1}^2 - k_{y_2}^2 - \left(\sqrt{k^2 - k_{y_1}^2} + \sqrt{k^2 - k_{y_2}^2}\right)^2\right\}^2$$

$$+ 4k^2\left\{-\left(\sqrt{k^2 - k_{y_1}^2} + \sqrt{k^2 - k_{y_2}^2}\right)^2 + (k_{x_1} + is_3)^2\right\}$$

$$+ 4(k_{x_1}^2 + k_{y_1}^2)(s_3^2 - k_{y_2}^2) = 0$$

$$\cdots (2-5-14)$$

Expression (2-5-14) is summarized to obtain expression (2-5-15) below.
[Math. 117]

$$(k^2 - k_{y_1}{}^2)s_3{}^2 + 2\left(ik_{x_1}\sqrt{k^2 - k_{y_1}{}^2}\sqrt{k^2 - k_{y_2}{}^2}\right)s_3 - k_{x_1}{}^2(k^2 - k_{y_2}{}^2) = 0$$

$$\cdots (2-5-15)$$

Since the solution to this equation is a multiple root, the solution expressed as given by expression (2-5-16) is uniquely obtained.
[Math. 118]

$$s_3 = \frac{-ik_{x_1}\sqrt{k^2 - k_{y_2}{}^2}}{\sqrt{k^2 - k_{y_1}{}^2}}$$

$$\cdots (2-5-16)$$

In accordance with expressions (2-5-12) and (2-5-16) obtained through the above-described above, $s_3$ and $s_4$ are obtained analytically. Then, the scattering field function is obtained from expression (2-5-8) as expressed by expression (2-5-17) below.
[Math. 119]

$$\varphi(x_1, y_1, x_2, y_2, z, k)$$

$$= \frac{1}{(2\pi)^3} \int_{-\infty}^{\infty}\int_{-\infty}^{\infty}\int_{-\infty}^{\infty} e^{-i(k_{x_1}x_1 + k_{y_1}y_1 + k_{y_2}y_2)} b(k_{x_1}, k_{y_1}, k_{y_2}, k) e^{s_3 x_2} e^{s_4 z} dk_{x_1} dk_{y_1} dk_{y_2}$$

$$= \frac{1}{(2\pi)^3} \int_{-\infty}^{\infty}\int_{-\infty}^{\infty}\int_{-\infty}^{\infty} e^{-i(k_{x_1}x_1 + k_{y_1}y_1 + k_{y_2}y_2)} a(k_{x_1} + is_3, k_{y_1}, k_{y_2}, k)$$

$$\cdot \left(\frac{d(k_{x_1} + is_3)}{dk_{x_1}}\right) e^{s_3 x_2} e^{s_4 z} dk_{x_1} dk_{y_1} dk_{y_2}$$

$$s_3 = \frac{-ik_{x_1}\sqrt{k^2 - k_{y_2}{}^2}}{\sqrt{k^2 - k_{y_1}{}^2}}$$

$$s_4 = i\sqrt{\left(\sqrt{k^2 - k_{y_1}{}^2} + \sqrt{k^2 - k_{y_2}{}^2}\right)^2 - (k_{x_1} + is_3)^2}$$

$$\cdots (2-5-17)$$

Next, connecting measurement data $\Phi(x_1, y_1,$ and $y_2, k)$ with $a(k_{x1}, k_{y1}, k_{y2}, k)$ is examined. By defining $k_x = k_{x1} + is_3$ and substituting $z = 0$ and $x_2 = x_1 + d$ in expression (2-5-17), an equation as given by expression (2-5-18) holds true. Here, $\Phi(x_1, y_1,$ and $y_2, k)$ represents measurement data on transmission point $(x_1, y_1, 0)$, reception point $(x_1+d, y_2, 0)$, and wave number k.
[Math. 120]

$$\Phi(x_1, y_1, y_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} a(k_{x_1} + is_3, k_{y_1}, k_{y_2}, k)$$

$$\cdot \left( \frac{d(k_{x_1} + is_3)}{dk_{x_1}} \right) e^{s_3(x_1+d)} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i\{(k_{x_1} + is_3)x_1 + k_{y_1}y_1 + k_{y_2}y_2\}} a(k_{x_1} + is_3, k_{y_1}, k_{y_2}, k)$$

$$\cdot \left( \frac{d(k_{x_1} + is_3)}{dk_{x_1}} \right) e^{s_3 d} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_x x_1 + k_{y_1}y_1 + k_{y_2}y_2)} a(k_x, k_{y_1}, k_{y_2}, k) e^{s_3 d} dk_x dk_{y_1} dk_{y_2}$$

$$\cdots (2-5-18)$$

Hereinafter, $k_x$ and $s_3$ defined by expression (2-5-19) below are used.
[Math. 121]

$$k_x = k_{x_1} + is_3$$

$$s_3 = \frac{-ik_{x_1}\sqrt{k^2 - k_{y_2}{}^2}}{\sqrt{k^2 - k_{y_1}{}^2}} = \frac{-ik_x\sqrt{k^2 - k_{y_2}{}^2}}{\sqrt{k^2 - k_{y_1}{}^2} + \sqrt{k^2 - k_{y_2}{}^2}}$$

$$\cdots (2-5-19)$$

Expression (2-5-20) below is obtained by Fourier transform of both sides of expression (2-5-18) with respect to $x_1$, $y_1$, and $y_2$.
[Math. 122]

$$\tilde{\Phi}(k_x{}', k_{y_1}{}', k_{y_2}{}', k)$$

$$= \int_{-\infty}^{\infty} \int_{-\infty}^{\infty} \int_{-\infty}^{\infty} e^{i\left(k_x{}'x_1 + k_{y_1}{}'y_1 + k_{y_2}{}'y_2\right)} \Phi(x_1, y_1, y_2, k) \, dx_1 dy_1 dy_2$$

$$= \frac{1}{(2\pi)^3} \int_{-\infty}^{\infty} \int_{-\infty}^{\infty} \int_{-\infty}^{\infty} e^{i\left(k_x{}'x_1 + k_{y_1}{}'y_1 + k_{y_2}{}'y_2\right)}$$

$$\cdot \int_{-\infty}^{\infty} \int_{-\infty}^{\infty} \int_{-\infty}^{\infty} e^{-i\{(k_x x_1 + k_{y_1} y_1 + k_{y_2} y_2\}} a(k_x, k_{y_1}, k_{y_2}, k) e^{s_3 d} \, dk_x dk_{y_1} dk_{y_2} dx_1 dy_1 dy_2$$

$$= \int_{-\infty}^{\infty} \int_{-\infty}^{\infty} \int_{-\infty}^{\infty} \delta(k_x{}' - k_x) \delta(k_{y_1}{}' - k_{y_1}) \delta(k_{y_2}{}' - k_{y_2}) a(k_x, k_{y_1}, k_{y_2}, k) e^{s_3 d} \, dk_x dk_{y_1} dk_{y_2}$$

$$= a\left(k_x{}', k_{y_1}{}', k_{y_2}{}', k\right) e^{s_3{}'d}$$

$$\cdots (2-5-20)$$

Function $a(k_x, k_{y1}, k_{y2}, k)$ is obtained from expression (2-5-20) as given by expression (2-5-21).
[Math. 123]

$$a\left(k_x, k_{y_1}, k_{y_2}, k\right) = e^{-s_3 d} \, \tilde{\Phi}(k_x, k_{y_1}, k_{y_2}, k)$$

$$= e^{\frac{ik_x d \sqrt{k^2 - k_{y_2}{}^2}}{\sqrt{k^2 - k_{y_1}{}^2} + \sqrt{k^2 - k_{y_2}{}^2}}} \, \tilde{\Phi}(k_x, k_{y_1}, k_{y_2}, k)$$

$$\cdots (2-5-21)$$

Therefore, expression (2-5-17) that represents the scattering field function is obtained in a complete form as given by expression (2-5-22) below.
[Math. 124]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)} a(k_{x_1} + is_3, k_{y_1}, k_{y_2}, k)$$

$$\cdot \left( \frac{d(k_{x_1} + is_3)}{dk_{x_1}} \right) e^{s_3 x_2} e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)} e^{s_3 x_2} e^{s_4 z} e^{\frac{i d(k_{x_1} + is_3) \sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k) \left( \frac{d(k_{x_1} + is_3)}{dk_{x_1}} \right) dk_{x_1} dk_{y_1} dk_{y_2}$$

$$s_3 = \frac{-i k_{x_1} \sqrt{k^2 - k_{y_2}^2}}{\sqrt{k^2 - k_{y_1}^2}} = \frac{-i k_x \sqrt{k^2 - k_{y_2}^2}}{\sqrt{k^2 - k_{y_1}^2} + \sqrt{k^2 - k_{y_2}^2}}$$

$$s_4 = i k_z = i \sqrt{ \left( \sqrt{k^2 - k_{y_1}^2} + \sqrt{k^2 - k_{y_2}^2} \right)^2 - (k_{x_1} + is_3)^2 }$$

$$\cdots (2-5-22)$$

Then, the imaging function is obtained as given by expression (2-5-23) below.
[Math. 125]

$$\rho(x,y,z)$$

$$= \int_0^\infty \lim_{\substack{x_2 \to x_1 = x \\ y_2 \to y_1 = y}} \varphi(x_1, y_1, x_2, y_2, z, k)\,dk$$

$$= \frac{1}{(2\pi)^3} \int_0^\infty dk \int_{-\infty}^\infty \int_{-\infty}^\infty \int_{-\infty}^\infty e^{-i(k_x x + k_{y_1} y + k_{y_2} y)}\, e^{s_4 z}\, e^{\frac{i\,dk_x \sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k)\,dk_x\,dk_{y_1}\,dk_{y_2}$$

$$= \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)}\, e^{i k_z z}\, e^{\frac{i\,dk_x \sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k)\left(\frac{dk}{dk_z}\right) dk_x\,dk_{y_1}\,dk_{y_2}\,dk_z$$

$$k_z = \sqrt{\left(\sqrt{k^2 - k_{y_1}^2} + \sqrt{k^2 - k_{y_2}^2}\right)^2 - k_x^2}$$

$$k = \frac{1}{2}\sqrt{k_x^2 + k_z^2 + 2(k_{y_1}^2 + k_{y_2}^2) + \frac{(k_{y_1}^2 - k_{y_2}^2)^2}{k_x^2 + k_z^2}}$$

$$\frac{dk}{dk_z} = \frac{k_z \sqrt{k^2 - k_{y_1}^2}\,\sqrt{k^2 - k_{y_2}^2}}{k(k_x^2 + k_z^2)}$$

$$\cdots (2-5-23)$$

Moreover, as compared with the one-dimensional array, the semi-two-dimensional array is capable of including a larger number of transmitting elements and a larger number of receiving elements. Accordingly, it is possible to more efficiently acquire information.

<2-6. Semi-Two-Dimensional Array and Curved Boundary>

The following description is given of the theory applied to the case where the boundary of a region, i.e., a boundary surface for measuring scattering data, is a curved plane.

FIG. 7 is a conceptual diagram showing a semi-two-dimensional array antenna on a curved plane. Here, the shape of the curved surface is expressed by z = f(x), which is a simple shape. A plurality of transmitting antennas are arranged on a straight line where $x = x_1$ and $z = z_1$. The plurality of receiving antennas are arranged in a plurality of rows defined by, for example, a straight line where $x = x_2$ and $z = z_2$, and a straight line where $x = x_3$ and $z = z_3$. One row of the plurality of rows of receiving array antennas may be used. Scanning may be performed by moving the semi-two-dimensional array antenna along a curved surface in the x-axis direction.

An inverse scattering theory applied to the semi-two-dimensional array is constructed based on the theory described in Section 4. The scattering field function is a function as given by expression (2-6-1) below.
[Math. 126]

$$\varphi(x_1,y_1,x_2,y_2,z_1,z_2,k)=\iint_D \frac{e^{ik\rho_1}}{\rho_1}\frac{e^{ik\rho_2}}{\rho_2}\varepsilon(\xi,\eta,\zeta)d\xi d\eta d\zeta$$

$$\rho_1=\sqrt{(x_1-\xi)^2+(y_1-\eta)^2+(z_1-\zeta)^2}$$

$$\rho_2=\sqrt{(x_2-\xi)^2+(y_2-\eta)^2+(z_2-\zeta)^2}$$

$$\cdots(2-6-1)$$

An equation satisfied by the scattering field function given by expression (2-6-1) is expression (2-4-4) and expressed as given by expression (2-6-2) below.
[Math. 127]

$$\left\{\Delta_6-2(ik)^2\right\}\varphi(x_1,y_1,x_2,y_2,z_1,z_2,k)$$
$$=\left\{(\partial_{x_1}^{\;2}+\partial_{x_2}^{\;2}+\partial_{y_1}^{\;2}+\partial_{y_2}^{\;2}+\partial_{z_1}^{\;2}+\partial_{z_2}^{\;2})-2(ik)^2\right\}$$
$$\cdot\varphi(x_1,y_1,x_2,y_2,z_1,z_2,k)$$
$$=0$$
$$\cdots(2-6-2)$$

Here, Fourier transform is used as given by expression (2-6-3) below.
[Math. 128]

$$\tilde{\varphi}(k_{x_1},k_{y_1},x_2,k_{y_2},z_1,z_2,k)$$
$$=\int_{-\infty}^{\infty}\int_{-\infty}^{\infty}\int_{-\infty}^{\infty}e^{i(k_{x_1}x_1+k_{y_1}y_1+k_{y_2}y_2)}\varphi(x_1,y_1,x_2,y_2,z_1,z_2,k)dx_1dy_1dy_2$$
$$\cdots(2-6-3)$$

From expressions (2-6-2) and (2-6-3), expression (2-6-4) below is obtained.
[Math. 129]

$$\left\{\partial_{x_2}^{\;2}+\partial_{z_1}^{\;2}+\partial_{z_2}^{\;2}+2k^2-k_{x_1}^{\;2}-k_{y_1}^{\;2}-k_{y_2}^{\;2}\right\}\tilde{\varphi}(k_{x_1},k_{y_1},x_2,k_{y_2},z_1,z_2,k)=0$$
$$\cdots(2-6-4)$$

As a solution to the equation given by expression (2-6-4), expression (2-6-5) below is assumed.
[Math. 130]

$$\tilde{\varphi}(k_{x_1}, k_{y_1}, x_2, k_{y_2}, z_1, z_2, k) = b(k_{x_1}, k_{y_1}, k_{y_2}, k)e^{s_3 x_2} e^{s_4 z_1} e^{s_5 z_2}$$

$$s_3 = s_3(k_{x_1}, k_{y_1}, k_{y_2}, k)$$

$$s_4 = s_4(k_{x_1}, k_{y_1}, k_{y_2}, k)$$

$$s_5 = s_5(k_{x_1}, k_{y_1}, k_{y_2}, k)$$

$$\cdot \cdot \cdot (2-6-5)$$

By substituting expression (2-6-5) in expression (2-6-4), expression (2-6-6) below is obtained.
[Math. 131]

$$s_3{}^2 + s_4{}^2 + s_5{}^2 + 2k^2 - k_{x_1}{}^2 - k_{y_1}{}^2 - k_{y_2}{}^2 = 0$$

$$\cdot \cdot \cdot (2-6-6)$$

Next,

[Math. 132]

$$\varphi$$

is expressed as given by expression (2-6-7) below.

[Math. 133]

$$\varphi(x_1, y_1, x_2, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)} b(k_{x_1}, k_{y_1}, k_{y_2}, k)e^{s_3 x_2} e^{s_4 z_1} e^{s_5 z_2} dk_{x_1} dk_{y_1} dk_{y_2}$$

$$\cdot \cdot \cdot (2-6-7)$$

In the case of $x_2 \to x_1$, expression (2-6-7) agrees with expression (2-2-18). In the case of $x_2 \to x_1$, expression (2-6-7) is expressed as given by expression (2-6-8) below.
[Math. 134]

$$\varphi(x_1, y_1, x_1, y_2, z_1, z_2, k)$$

$$= \frac{1}{(2\pi)^3} \int_{-\infty}^{\infty} \int_{-\infty}^{\infty} \int_{-\infty}^{\infty} e^{-i\{(k_{x_1} + is_3)x_1 + k_{y_1} y_1 + k_{y_2} y_2\}} b(k_{x_1}, k_{y_1}, k_{y_2}, k)e^{s_4 z_1} e^{s_5 z_2} dk_{x_1} dk_{y_1} dk_{y_2}$$

$$\cdot \cdot \cdot (2-6-8)$$

Moreover, the same expression as expression (2-2-18) is expressed as given by expression (2-6-9) below.
[Math. 135]

$$\phi(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k)$$

$$\cdot e^{is_1(k_x, k_{y_1}, k_{y_2}, k) z_1} e^{is_2(k_x, k_{y_1}, k_{y_2}, k) z_2} dk_x dk_{y_1} dk_{y_2}$$

$$s_1(k_x, k_{y_1}, k_{y_2}, k) = \frac{\sqrt{k^2 - k_{y_1}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$s_2(k_x, k_{y_1}, k_{y_2}, k) = \frac{\sqrt{k^2 - k_{y_2}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$\cdots (2-6-9)$$

Since expression (2-6-8) agrees with expression (2-6-9), expression (2-6-10) below is obtained.
[Math. 136]

$$k_x = k_{x_1} + is_3(k_{x_1}, k_{y_1}, k_{y_2}, k)$$

$$b(k_{x_1}, k_{y_1}, k_{y_2}, k) \left( \frac{dk_{x_1}}{dk_x} \right) = a(k_x, k_{y_1}, k_{y_2}, k)$$

$$s_4(k_{x_1}, k_{y_1}, k_{y_2}, k) = is_1(k_x, k_{y_1}, k_{y_2}, k)$$

$$s_5(k_{x_1}, k_{y_1}, k_{y_2}, k) = is_2(k_x, k_{y_1}, k_{y_2}, k)$$

$$\cdots (2-6-10)$$

Next, from expressions (2-6-6), (2-6-9), and (2-6-10), an algebraic equation with respect to $s_3$ is obtained as given by expression (2-6-11) below.
[Math. 137]

$$s_3{}^2 - \left\{ \frac{\sqrt{k^2 - k_{y_1}{}^2}\sqrt{\left(\sqrt{k^2 - k_{y_1}{}^2} + \sqrt{k^2 - k_{y_2}{}^2}\right)^2 - (k_{x_1} + is_3)^2}}{\sqrt{k^2 - k_{y_1}{}^2} + \sqrt{k^2 - k_{y_2}{}^2}} \right\}^2$$

$$- \left\{ \frac{\sqrt{k^2 - k_{y_2}{}^2}\sqrt{\left(\sqrt{k^2 - k_{y_1}{}^2} + \sqrt{k^2 - k_{y_2}{}^2}\right)^2 - (k_{x_1} + is_3)^2}}{\sqrt{k^2 - k_{y_1}{}^2} + \sqrt{k^2 - k_{y_2}{}^2}} \right\}^2$$

$$+ 2k^2 - k_{x_1}{}^2 - k_{y_1}{}^2 - k_{y_2}{}^2 = 0$$

$$\cdots (2-6-11)$$

By expanding and simplifying the square term in expression (2-6-11), expression (2-6-12) below is obtained.
[Math. 138]

$$s_3{}^2 + \frac{(2k^2 - k_{y_1}{}^2 - k_{y_2}{}^2)(k_{x_1} + is_3)^2}{(\sqrt{k^2 - k_{y_1}{}^2} + \sqrt{k^2 - k_{y_2}{}^2})^2} - k_{x_1}{}^2 = 0$$

$$\cdots (2-6-12)$$

Moreover, expression (2-6-12) is summarized to obtain expression (2-6-13) below.
[Math. 139]

$$\left(s_3\sqrt{k^2 - k_{y_1}{}^2} + ik_{x_1}\sqrt{k^2 - k_{y_2}{}^2}\right)\left(s_3\sqrt{k^2 - k_{y_2}{}^2} + ik_{x_1}\sqrt{k^2 - k_{y_1}{}^2}\right) = 0$$

$$\cdots (2-6-13)$$

There are two solutions to expression (2-6-13). However, a solution to expression (2-6-13) is supposed to agree with the solution in the case of the plane boundary described in the previous chapter. Thus, expression (2-6-14) below is supposed to be selected as the solution in accordance with expression (2-5-16).
[Math. 140]

$$s_3 = \frac{-ik_{x_1}\sqrt{k^2 - k_{y_2}{}^2}}{\sqrt{k^2 - k_{y_1}{}^2}}$$

$$\cdots (2-6-14)$$

In summary, the scattering field function is obtained as given by expression (2-6-15) below.
[Math. 141]

$$\varphi(x_1, y_1, x_2, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} b(k_{x_1}, k_{y_1}, k_{y_2}, k) e^{s_3 x_2} e^{s_4 z_1} e^{s_5 z_2} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} a(k_{x_1} + is_3, k_{y_1}, k_{y_2}, k)$$

$$\cdot e^{s_3 x_2} e^{s_4 z_1} e^{s_5 z_2} \frac{d(k_{x_1} + is_3)}{dk_{x_1}} dk_{x_1} dk_{y_1} dk_{y_2}$$

$$s_3 = \frac{-ik_{x_1}\sqrt{k^2 - k_{y_2}^2}}{\sqrt{k^2 - k_{y_1}^2}}$$

$$s_4 = \frac{i\sqrt{k^2 - k_{y_1}^2}\sqrt{\left(\sqrt{k^2 - k_{y_1}^2} + \sqrt{k^2 - k_{y_2}^2}\right)^2 - (k_{x_1} + is_3)^2}}{\sqrt{k^2 - k_{y_1}^2} + \sqrt{k^2 - k_{y_2}^2}}$$

$$s_5 = \frac{i\sqrt{k^2 - k_{y_2}^2}\sqrt{\left(\sqrt{k^2 - k_{y_1}^2} + \sqrt{k^2 - k_{y_2}^2}\right)^2 - (k_{x_1} + is_3)^2}}{\sqrt{k^2 - k_{y_1}^2} + \sqrt{k^2 - k_{y_2}^2}}$$

$$\cdots (2-6-15)$$

Moreover, by converting the variable $k_{x1}$ to $k_x$ in expression (2-6-15), expression (2-6-16) below is obtained.
[Math. 142]

$$s_3 = \frac{-ik_x\sqrt{k^2 - k_{y_2}^2}}{\sqrt{k^2 - k_{y_1}^2} + \sqrt{k^2 - k_{y_2}^2}}$$

$$s_4 = \frac{i\sqrt{k^2 - k_{y_1}^2}\sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$s_5 = \frac{i\sqrt{k^2 - k_{y_2}^2}\sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$\cdots (2-6-16)$$

Next, connecting measurement data $\Phi(x_1, y_1, \text{and } y_2, k)$ with $b(k_{x1}, k_{y1}, k_{y2}, k)$ is examined. The function obtained by Fourier transform of data $\Phi(x_I, y_I, x_I+d, y_J, t)$ measured at points $P_I$ and $P_J$ on the curved plane is expressed as given by expression (2-6-17) below.
[Math. 143]

$$\Phi(x_I, y_I, y_J, k) = \int_{-\infty}^{\infty} e^{-ickt} \varphi(x_I, y_I, x_I + d, y_J, t) dt$$

$$\cdots (2-6-17)$$

The shape of the boundary curved plane, serving as a measurement plane, is expressed as given by expression (2-6-18) below.
[Math. 144]

$$z = f(x, y)$$

$$\cdots (2-6-18)$$

Here, $(x, y)$ represents the coordinates on the plane where $z = 0$. The z coordinates at points $P_I$ and $P_J$ are expressed as given by expression (2-6-19) below.
[Math. 145]

$$z_I = f(x_I, y_I)$$

$$z_J = f(x_J, y_J)$$

$$\cdots (2-6-19)$$

By substituting $x_2 = x_1+d$ in expression (2-6-15), an equation as given by expression (2-6-20) holds true.
[Math. 146]

$$\varphi(x_1, y_1, x_1 + d, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)} a(k_{x_1} + is_3, k_{y_1}, k_{y_2}, k)$$

$$\cdot e^{s_3(x_1+d)} e^{s_4 z_1} e^{s_5 z_2} \frac{d(k_{x_1} + is_3)}{dk_{x_1}} dk_{x_1} dk_{y_1} dk_{y_2}$$

$$\cdots (2-6-20)$$

Expression (2-6-20) described above is expressed given by as expression (2-6-21) below using data $\Phi$ obtained by measurement conducted on the boundary.
[Math. 147]

$$\Phi(x_I, y_I, y_J, z_I, z_J, k)\delta(x_1 - x_I)\delta(y_1 - y_I)\delta(y_2 - y_J)$$

$$= \frac{1}{(2\pi)^3} \int\limits_{-\infty}^{\infty}\int\limits_{-\infty}^{\infty}\int\limits_{-\infty}^{\infty} e^{-i(k_{x_1}x_1 + k_{y_1}y_1 + k_{y_2}y_2)} a_{I,J}(k_{x_1} + is_3, k_{y_1}, k_{y_2}, k)$$

$$\cdot e^{s_3(x_1+d)}e^{s_4 z_I}e^{s_5 z_J}\frac{d(k_{x_1} + is_3)}{dk_{x_1}}dk_{x_1}dk_{y_1}dk_{y_2}$$

$$\cdots (2-6-21)$$

Here, $\Phi(x_1, y_I, y_J, z_I, z_J, k)$ represents the measurement data on transmission point $(x_I, y_I, z_I)$, reception point $(x_I +d, y_J, z_J)$, and wave number k. Expression (2-6-22) below is obtained by Fourier transform of both sides of expression (2-6-21).
[Math. 148]

$$\iiint e^{i(k_{x_1}'x_1 + k_{y_1}'y_1 + k_{y_2}'y_2)}\Phi(x_I, y_I, y_J, z_I, z_J, k)$$

$$\cdot \delta(x_1 - x_I)\delta(y_1 - y_I)\delta(y_2 - y_J)dx_1 dy_1 dy_2$$

$$= \frac{1}{(2\pi)^3}\iiint e^{i(k_{x_1}'x_1 + k_{y_1}'y_1 + k_{y_2}'y_2)}\int\limits_{-\infty}^{\infty}\int\limits_{-\infty}^{\infty}\int\limits_{-\infty}^{\infty} e^{-i(k_{x_1}x_1 + k_{y_1}y_1 + k_{y_2}y_2)}a_{I,J}(k_{x_1} + is_3, k_{y_1}, k_{y_2}, k)$$

$$\cdot e^{s_3(x_1+d)}e^{s_4 z_I}e^{s_5 z_J}\frac{d(k_{x_1} + is_3)}{dk_{x_1}}dk_{x_1}dk_{y_1}dk_{y_2}dx_1 dy_1 dy_2$$

$$\cdots (2-6-22)$$

Then, expression (2-6-23) below is obtained as a result of integration of expression (2-6-22) with respect to $x_1$, $y_1$, and $y_2$.
[Math. 149]

$$\Phi(x_I, y_I, y_J, z_I, z_J, k)e^{i(k_{x_1}'x_I + k_{y_1}'y_I + k_{y_2}'y_J)}$$

$$= \int_{-\infty}^{\infty}\int_{-\infty}^{\infty}\int_{-\infty}^{\infty} \delta(k_{x_1} + is_3 - k_{x_1}')\delta(k_{y_1} - k_{y_1}')\delta(k_{y_2} - k_{y_2}')$$

$$\cdot a_{I,J}(k_{x_1} + is_3, k_{y_1}, k_{y_2}, k)e^{s_3 d}e^{s_4 z_I}e^{s_5 z_J}\frac{d(k_{x_1} + is_3)}{dk_{x_1}}dk_{x_1}dk_{y_1}dk_{y_2}$$

$$= a_{I,J}(k_{x_1}', k_{y_1}', k_{y_2}', k)e^{s_3'd}e^{s_4'z_I}e^{s_5'z_J}$$

$$s_3' = \frac{-ik_{x_1}'\sqrt{k^2 - k_{y_2}'^2}}{\sqrt{k^2 - k_{y_1}'^2} + \sqrt{k^2 - k_{y_2}'^2}}$$

$$\cdot\cdot\cdot (2-6-23)$$

The result of expression (2-6-23) is summarized to obtain expression (2-6-24) below.
[Math. 150]

$$a_{I,J}(k_x, k_{y_1}, k_{y_2}, k) = \Phi(x_I, y_I, y_J, z_I, z_J, k)e^{i(k_x x_I + k_{y_1}y_I + k_{y_2}y_J)}e^{-s_3 d}e^{-s_4 z_1}e^{-s_5 z_2}$$

$$s_3 = \frac{-ik_x\sqrt{k^2 - k_{y_2}^2}}{\sqrt{k^2 - k_{y_1}^2} + \sqrt{k^2 - k_{y_2}^2}}$$

$$\cdot\cdot\cdot (2-6-24)$$

From the sum of all sets of I and J with respect to expression (2-6-24), expression (2-6-25) below is obtained.
[Math. 151]

$$a(k_x, k_{y_1}, k_{y_2}, k)$$

$$= \sum_{I,J} a_{I,J}(k_x, k_{y_1}, k_{y_2}, k)$$

$$= \sum_{I,J} \Phi(x_I, y_I, y_J, z_I, z_J, k)e^{i(k_x x_I + k_{y_1}y_I + k_{y_2}y_J)}e^{-s_3 d}e^{-s_4 z_I}e^{-s_5 z_J}$$

$$\cdot\cdot\cdot (2-6-25)$$

From expressions (2-6-15) and (2-6-25), the scattering field function is obtained as given by expression (2-6-26) below.
[Math. 152]

$$\varphi(x_1, y_1, x_2, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{-ik_{x_2}x_2} \sum_{I,J} \Phi(x_I, y_I, y_J, z_I, z_J, k)$$

$$\cdot e^{i(k_x x_I + k_{y_1}y_I + k_{y_2}y_J)} e^{-s_3 d} e^{-s_4 z_I} e^{-s_5 z_J} e^{s_4 z_1} e^{s_5 z_2} \frac{d(k_x + is_3)}{dk_{x_1}} dk_{x_1} dk_{y_1} dk_{y_2}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$s_3 = -i k_{x_2}$$

$$\cdots (2-6-26)$$

The imaging function is obtained by applying $x_2 = x_1 = x$, $y_1 = y_2 = y$, and $z_1 = z_2 = z$ to expression (2-6-26) and integrating the expression with respect to k. Next, improving the equation of the imaging function is examined so that the result can be obtained from Fourier transform that enables high-speed computation. Basic variables are $k_x$, $k_{y1}$, $k_{y2}$, and $k_z$, and the other variables are positively expressed using the basic variables. The imaging function is obtained through the following procedure.

First, expression (2-6-27) below is obtained by applying $x_2 = x_1 = x$, $y_1 = y_2 = y$, and $z_1 = z_2 = z$ to expression (2-6-26).

[Math. 153]

$$\varphi(x, y, x, y, z, z, k)$$

$$= \frac{1}{(2\pi)^3} \int_{-\infty}^{\infty} \int_{-\infty}^{\infty} \int_{-\infty}^{\infty} e^{-i(k_x x + k_{y_1}y + k_{y_2}y)} e^{-s_3 d} e^{s_4 z} e^{s_5 z} \sum_{I,J} \left\{ \Phi(x_I, y_I, y_J, z_I, z_J, k) \right.$$

$$\left. \cdot e^{i(k_x x_I + k_{y_1}y_I + k_{y_2}y_J)} e^{-s_4 z_I} e^{-s_5 z_J} \right\} dk_x dk_{y_1} dk_{y_2}$$

$$s_3 = \frac{-ik_x \sqrt{k^2 - k_{y_i}^2}}{\sqrt{k^2 - k_{y_i}^2} + \sqrt{k^2 - k_{y_i}^2}}$$

$$\cdots (2-6-27)$$

Imaging function $\rho$ is obtained by integration with respect to k as given by expression (2-6-28) below.

[Math. 154]

$$\rho(x,y,z) = \int_0^\infty \varphi(x,y,x,y,z,z,k)dk$$

$$= \frac{1}{(2\pi)^3} \int_0^\infty dk \int_{-\infty}^\infty \int_{-\infty}^\infty \int_{-\infty}^\infty e^{-i(k_x x + k_{y_1} y + k_{y_2} y)} e^{-s_3 d} e^{ik_z z} \sum_{I,J} \Big\{ \Phi(x_I, y_I, y_J, z_I, z_J, k)$$

$$\cdot e^{i(k_x x_I + k_{y_1} y_I + k_{y_2} y_J)} e^{-s_4 z_I} e^{-s_5 z_J} \Big\} dk_x dk_{y_1} dk_{y_2}$$

$$= \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)} e^{-s_3 d} e^{ik_z z} \sum_{I,J} \Big\{ \Phi(x_I, y_I, y_J, z_I, z_J, k)$$

$$\cdot e^{i(k_x x_I + k_{y_1} y_I + k_{y_2} y_J)} e^{-s_4 z_I} e^{-s_5 z_J} \Big\} \left( \frac{dk}{dk_z} \right) dk_x dk_{y_1} dk_{y_2} dk_z$$

$$s_3 = \frac{-ik_x \sqrt{k^2 - k_{y_2}^{\,2}}}{\sqrt{k^2 - k_{y_1}^{\,2}} + \sqrt{k^2 - k_{y_2}^{\,2}}}$$

$$\cdots (2-6-28)$$

This computation uses expression (2-6-29) below.
[Math. 155]

$$k = \frac{1}{2}\sqrt{k_x^2 + k_z^2 + 2(k_{y_1}^2 + k_{y_2}^2) + \frac{(k_{y_1}^2 - k_{y_2}^2)^2}{k_x^2 + k_z^2}}$$

$$\frac{dk}{dk_z} = \frac{k_z\left\{1 - \frac{(k_{y_1}^2 - k_{y_2}^2)^2}{(k_x^2 + k_z^2)^2}\right\}}{2\sqrt{k_x^2 + k_z^2 + 2(k_{y_1}^2 + k_{y_2}^2) + \frac{(k_{y_1}^2 - k_{y_2}^2)^2}{k_x^2 + k_z^2}}}$$

$$s_3 = \frac{-ik_x\left(\sqrt{k_x^2 + k_z^2} - \frac{k_{y_2}^2 - k_{y_1}^2}{\sqrt{k_x^2 + k_z^2}}\right)}{2\sqrt{k_x^2 + k_z^2}}$$

$$s_4 = \frac{ik_z\left(\sqrt{k_x^2 + k_z^2} + \frac{k_{y_2}^2 - k_{y_1}^2}{\sqrt{k_x^2 + k_z^2}}\right)}{2\sqrt{k_x^2 + k_z^2}}$$

$$s_5 = \frac{ik_z\left(\sqrt{k_x^2 + k_z^2} - \frac{k_{y_2}^2 - k_{y_1}^2}{\sqrt{k_x^2 + k_z^2}}\right)}{2\sqrt{k_x^2 + k_z^2}}$$

$$\cdots (2-6-29)$$

In the case where a plurality of rows of receiving array antennas are used, the imaging function may be derived using a merging of a plurality of scattering field functions corresponding to the plurality of rows of receiving array antennas. For example, the imaging function may be derived by merging a plurality of scattering field functions into a single scattering field function and performing a limit operation on the scattering field function. Each of the scattering field functions may be the scattering field function expressed by expression (2-6-26), and the merging may be linear addition.

<3. Directional Antennas>

In this chapter, a scattering field theory using directional antennas will be described.

<3-1. Array Antenna Arranged on a Plane>

In Chapter 2, as seen in expression (2-1-1), non-directional antennas are used for both transmission and reception. However, directional antennas may be used for radar or the like for objects in the air. For example, a single directional antenna includes a plurality of antenna elements, and the plurality of antenna elements operate at essentially the same phase. In a phased array as well, the phases are essentially aligned. This allows the directional antenna to be designed to increase the aperture and improve the directivity.

By introducing such a directional antenna into scattering field theory, it becomes possible to distinguish the condition of scattering in the far field with high accuracy. Hereinafter, introducing directional antennas into scattering field theory is examined based on the example in Chapter 2, Section 5.

FIG. 8 is a conceptual diagram showing a semi-two-dimensional array antenna including a plurality of directional antennas arranged on a plane. In this example, the semi-two-dimensional array antenna is configured by two linear array antennas including single-row transmitting array antenna TA and single-row receiving array antenna RA. The x coordinate of transmitting array antenna TA is expressed as $x_1$, the x coordinate of receiving array antenna RA is expressed as $x_2$, and the distance in the x-axis direction between transmitting array antenna TA and receiving array antenna RA is expressed as d.

Transmitting array antenna TA includes n transmitting antennas $T_1$, ..., $T_n$. Receiving array antenna RA includes n receiving antennas $R_1$, ..., $R_n$. Each of the n transmitting antennas $T_1$, ..., $T_n$ may include a plurality of transmitting antenna elements. Each of the n receiving antennas $R_1$, ..., $R_n$ may include a plurality of receiving antenna elements. Each of the n transmitting antennas $T_1$, ..., $T_n$ may also be referred to as transmitters. Each of n receiving antennas $R_1$, ..., $R_n$ may also be referred to as receivers.

In Section 5 of Chapter 2, the scattering field function is expressed as given by expression (3-1-1) below according to expression (2-5-17).

[Math. 156]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{-ik_{x_2}x_2} b(k_{x_1}, k_{y_1}, k_{y_2}, k) e^{s_4 z} dk_{x_1} dk_{y_1} dk_{y_2}$$

$$k_{x_2} = \frac{k_{x_1}\sqrt{k^2 - k_{y_2}^2}}{\sqrt{k^2 - k_{y_1}^2}}$$

$$s_3 = -ik_{x_2}$$

$$s_4 = i\sqrt{(\sqrt{k^2 - k_{y_1}^2} + \sqrt{k^2 - k_{y_2}^2})^2 - (k_{x_1} + is_3)^2}$$

$$\cdots (3-1-1)$$

Here, kernel function $b(k_{x1}, k_{y1}, k_{y2}, k)$ is assumed to be determined from the measurement results. If the above expression is used as is, a scattering field function and an imaging function similar to those in Section 5 of Chapter 2, where a non-directional antenna is assumed, are obtained. However, the measurement results in the case where a directional antenna is used differ from the measurement results in the case where a non-directional antenna is used. In the scattering field function and the imaging function similar to those in Section 5 of Chapter 2, where a non-directional antenna is assumed, accurate information cannot be obtained from the measurement results with a directional antenna.

The size of the directional antenna is sufficiently large compared to the wavelength of the electromagnetic waves normally used. Therefore, a directional antenna is not regarded as an infinitesimal point, but has a finite size. For simplification, a rectangle of $(2a \times 2b)$ is used as the shape of the antenna. Here, the size and shape of the antenna correspond to the size and shape of the transmission area or reception area of the antenna. Here, scattering data measured with an antenna having a finite size is examined. Note that in the scattering field theory of Chapter 2, it is assumed that the antenna is an omnidirectional point antenna.

FIG. 9 is a conceptual diagram showing a transmitting antenna and a receiving antenna that have a finite size. As illustrated in FIG. 9, the transmitting antenna and the receiving antenna have a finite size and a rectangular shape. The transmitting antenna transmits radio waves in the z-axis direction, and the receiving antenna receives radio waves from the z-axis direction. In FIG. 9, $(\xi, \eta)$ corresponds to the displacement vector of the transmission position $(x_1, y_1)$. Similarly, $(u, v)$ corresponds to the displacement vector of the reception position $(x_2, y_2)$.

In expression (3-1-1), variables related to the transmission position and reception position are replaced as given by expression (3-1-2) below.

[Math. 157]

$$x_1 \rightarrow x_1 + \xi \qquad y_1 \rightarrow y_1 + \eta$$

$$x_2 \rightarrow x_2 + u \qquad y_2 \rightarrow y_2 + v$$

$$\cdots (3-1-2)$$

The scattering field function is replaced as in expression (3-1-3) below from expression (3-1-1) in accordance with the replacement of variables.
[Math. 158]

$$\varphi(x_1 + \xi, y_1 + \eta, x_2 + u, y_2 + v, z, k)$$

$$= \frac{1}{(2\pi)^3} \int_{-\infty}^{\infty} \int_{-\infty}^{\infty} \int_{-\infty}^{\infty} e^{-i\{k_{x_1}(x_1+\xi)+k_{y_1}(y_1+\eta)+k_{y_2}(y_2+v)\}} e^{-ik_{x_2}(x_2+u)}$$

$$\cdot b(k_{x_1}, k_{y_1}, k_{y_2}, k) e^{s_4 z} dk_{x_1} dk_{y_1} dk_{y_2}$$

$$\cdots (3-1-3)$$

Expression (3-1-4) is obtained by integrating both sides of expression (3-1-3) over the interior of the transmitting and receiving antennas.
[Math. 159]

$$\Phi(x_1, y_1, x_2, y_2, z, k)$$

$$= \iint_T \iint_R \varphi(x_1 + \xi, y_1 + \eta, x_2 + u, y_2 + v, z, k) d\xi d\eta du dv$$

$$= \frac{1}{(2\pi)^3} \int_{-\infty}^{\infty} \int_{-\infty}^{\infty} \int_{-\infty}^{\infty} \left[ \iint_T \iint_R e^{-i\{k_{x_1}(x_1+\xi)+k_{y_1}(y_1+\eta)+k_{y_2}(y_2+v)\}} e^{-ik_{x_2}(x_2+u)} d\xi d\eta du dv \right]$$

$$\cdot b(k_{x_1}, k_{y_1}, k_{y_2}, k) e^{s_4 z} dk_{x_1} dk_{y_1} dk_{y_2}$$

$$\cdots (3-1-4)$$

Integration range T is -a $\leq \xi \leq$ a and -b $\leq \eta \leq$ b, and the integration range R is -a $\leq$ u $\leq$ a and -b $\leq$ v $\leq$ b. The integration result is obtained as given by expression (3-1-5) below.
[Math. 160]

$$\Phi(x_1, y_1, x_2, y_2, z, k)$$

$$= \iint_T \iint_R \varphi(x_1 + \xi, y_1 + \eta, x_2 + u, y_2 + v, z, k) d\xi d\eta du dv$$

$$= \frac{1}{(2\pi)^3} \int_{-\infty}^{\infty} \int_{-\infty}^{\infty} \int_{-\infty}^{\infty} \left[ \iint_T \iint_R e^{-i\{k_{x_1}(x_1+\xi)+k_{y_1}(y_1+\eta)+k_{y_2}(y_2+v)\}} e^{-ik_{x_2}(x_2+u)} d\xi d\eta du dv \right]$$

$$\cdot b(k_{x_1}, k_{y_1}, k_{y_2}, k) e^{S_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_{x_1}x_1+k_{y_1}y_1+k_{y_2}y_2)} e^{-ik_{x_2}x_2}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot b(k_{x_1}, k_{y_1}, k_{y_2}, k) e^{S_4 z} dk_{x_1} dk_{y_1} dk_{y_2}$$

$$\cdots (3-1-5)$$

Here, the integrand includes function f representing antenna directivity as given by expression (3-1-6) below.
[Math. 161]

$$f(k_{x_1}, k_{y_1}) f(k_{x_2}, k_{y_2}) = \frac{2\sin(k_{x_1}a)}{k_{x_1}} \frac{2\sin(k_{y_1}b)}{k_{y_1}} \cdot \frac{2\sin(k_{x_2}a)}{k_{x_2}} \frac{2\sin(k_{y_2}b)}{k_{y_2}}$$

$$\cdots (3-1-6)$$

The above function f is affected by constants a and b indicating antenna size. For example, the larger constants a and b indicating antenna size, the more likely the integration result of function f with respect to $k_{x1}$, $k_{y1}$, $k_{x1}$, and $k_{y1}$ is to converge to 0 even if the integration ranges of $k_{x1}$, $k_{y1}$, $k_{x1}$, and $k_{y1}$ are small. Stated differently, the larger constants a and b indicating antenna size, the higher the directivity.
Next, determining kernel function b($k_{x1}$, $k_{y1}$, $k_{y2}$, k) is examined. This kernel function is a function related to a non-directional antenna and cannot be strictly determined from results measured with a directional antenna having a finite size. Here, results measured with a directional antenna having a finite size are used as an approximate value of results obtained with a non-directional antenna. More specifically, results measured with a directional antenna having a finite size are used as an approximate value of results obtained when ξ, η, u, and v are 0.
In this case, it is assumed that the array antenna has the transmission position fixed at $x_1$ = 0 and the reception position fixed at $x_2$ = $x_1$ + d. Measurement data $\Phi(y_1, y_2, k)$ is obtained at $x_1$ = 0 and z = 0, and satisfies the equation given by expression (3-1-7) below.
[Math. 162]

$$\delta(x_1) \Phi(y_1, y_2, k)$$

$$= \frac{1}{(2\pi)^3} \int_{-\infty}^{\infty} \int_{-\infty}^{\infty} \int_{-\infty}^{\infty} e^{-i(k_{x_1}x_1+k_{y_1}y_1+k_{y_2}y_2)} e^{-ik_{x_2}(x_1+d)} b(k_{x_1}, k_{y_1}, k_{y_2}, k) dk_{x_1} dk_{y_1} dk_{y_2}$$

$$\cdots (3-1-7)$$

By converting variable $k_{x1}$ to $k_x$, expression (3-1-8) below is obtained.
[Math. 163]

$$\delta(x_1)\Phi(y_1, y_2, k)$$

$$= \frac{1}{(2\pi)^3} \int_{-\infty}^{\infty}\int_{-\infty}^{\infty}\int_{-\infty}^{\infty} e^{-i(k_x x_1 + k_{y_1} y_1 + k_{y_2} y_2)} e^{-i k_{x_2} d} b(k_{x_1}, k_{y_1}, k_{y_2}, k)\left(\frac{dk_{x_1}}{dk_x}\right) dk_x dk_{y_1} dk_{y_2}$$

$$\cdots (3-1-8)$$

By inverse Fourier transforming both sides of expression (3-1-8), expression (3-1-9) below is obtained.
[Math. 164]

$$\iiint e^{i(k_x' x_1 + k_{y_1}' y_1 + k_{y_2}' y_2)} \delta(x_1)\Phi(y_1, y_2, k) dx_1 dy_1 dy_2$$

$$= \frac{1}{(2\pi)^3} \iiint e^{i(k_x' x_1 + k_{y_1}' y_1 + k_{y_2}' y_2)} \int_{-\infty}^{\infty}\int_{-\infty}^{\infty}\int_{-\infty}^{\infty} e^{-i(k_x x_1 + k_{y_1} y_1 + k_{y_2} y_2)}$$

$$\cdot e^{-i k_{x_2} d} b(k_{x_1}, k_{y_1}, k_{y_2}, k)\left(\frac{dk_{x_1}}{dk_x}\right) dk_x dk_{y_1} dk_{y_2} dx_1 dy_1 dy_2$$

$$\tilde{\Phi}(k_{y_1}', k_{y_2}', k) = \int_{-\infty}^{\infty}\int_{-\infty}^{\infty}\int_{-\infty}^{\infty} \delta(k_x - k_x')\delta(k_{y_1} - k_{y_1}')\delta(k_{y_2} - k_{y_2}')$$

$$\cdot e^{-i k_{x_2} d} b(k_{x_1}, k_{y_1}, k_{y_2}, k)\left(\frac{dk_{x_1}}{dk_x}\right) dk_x dk_{y_1} dk_{y_2}$$

$$\tilde{\Phi}(k_{y_1}', k_{y_2}', k) = e^{-i k_{x_2}' d} b(k_{x_1}', k_{y_1}', k_{y_2}', k)\left(\frac{dk_{x_1}}{dk_x}\right)'$$

$$\cdots (3-1-9)$$

By removing the symbol (') from expression (3-1-9), expression (3-1-10) below is obtained.
[Math. 165]

$$b(k_{x_1}, k_{y_1}, k_{y_2}, k) = e^{i k_{x_2} d} \tilde{\Phi}(k_{y_1}, k_{y_2}, k)\left(\frac{dk_x}{dk_{x_1}}\right)$$

$$\cdots (3-1-10)$$

The scattering field function considering directivity is derived as given by expression (3-1-11) below.
[Math. 166]

$$\Phi(x_1, y_1, x_2, y_2, z, k)$$

$$= \iint_T \iint_R \varphi(x_1 + \xi, y_1 + \eta, x_2 + u, y_2 + v, z, k) d\xi d\eta du dv$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)} e^{-i k_{x_2} x_2} e^{s_4 z}$$

$$\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}$$

$$\cdot e^{i k_{x_2} d} \tilde{\Phi}(k_{y_1}, k_{y_2}, k) dk_x dk_{y_1} dk_{y_2}$$

$$k_{x_2} = is_3 = \frac{k_{x_1} \sqrt{k^2 - k_{y_2}^2}}{\sqrt{k^2 - k_{y_1}^2}} = \frac{k_x \sqrt{k^2 - k_{y_2}^2}}{\sqrt{k^2 - k_{y_1}^2} + \sqrt{k^2 - k_{y_2}^2}}$$

$$k_x = k_{x_1} + is_3$$

$$k_z = -is_4 = \sqrt{(\sqrt{k^2 - k_{y_1}^2} + \sqrt{k^2 - k_{y_2}^2})^2 - (k_{x_1} + is_3)^2}$$

$$\cdots (3 - 1 - 1 1)$$

By applying $x_{2 \to} x_1 = x$ and $y_{2 \to} y_1 = y$ to expression (3-1-11) and integrating with respect to k, the imaging function is obtained as given by expression (3-1-12) below.
[Math. 167]

$$\rho(x,y,z)$$

$$= \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)} e^{ik_z z}$$

$$\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}$$

$$\cdot e^{ik_{x_2} d} \tilde{\Phi}(k_{y_1}, k_{y_2}, k) dk_x dk_{y_1} dk_{y_2} dk$$

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$\cdots (3-1-12)$$

When a directional antenna is used, it becomes possible to transmit a wave to a distant object and to receive a scattered wave from the distant object. It becomes possible to image a distant object with high accuracy in accordance with the scattering field function and imaging function as described above.

For example, a plurality of directional antennas may be fixedly arranged on the ground in a semi-two-dimensional array. A flying object above the plurality of directional antennas may be imaged. For example, in this case, a wide-range spatial cross section along a direction directly above the plurality of directional antennas may be imaged with high accuracy. Accordingly, a distant flying object passing through such a spatial cross section may be imaged.

<3-2. Array Antenna Arranged on a Slope>

Next, it is assumed that the array antenna is arranged on a slope, and each antenna included in the array antenna faces the z-axis direction. In this regard, an example using a non-directional antenna is shown in Section 6 of Chapter 2.

FIG. 10 is a conceptual diagram showing a semi-two-dimensional array antenna including a plurality of directional antennas arranged on a slope. In this example, the semi-two-dimensional array antenna is configured by two linear array antennas including single-row transmitting array antenna TA and single-row receiving array antenna RA.

The x coordinate of transmitting array antenna TA is expressed as $x_1$, the x coordinate of receiving array antenna RA is expressed as $x_2$, and the distance in the x-axis direction between transmitting array antenna TA and receiving array antenna RA is expressed as d. The z coordinate of transmitting array antenna TA is expressed as $z_1$, and the z coordinate of receiving array antenna RA is expressed as $z_2$. In the example of FIG. 10, each coordinate is defined as $x_1 = 0$, $x_2 = d$, $z_1 = h_1$, and $z_2 = h_2$.

Transmitting array antenna TA includes n transmitting antennas $T_1$, ..., $T_n$. Receiving array antenna RA includes n receiving antennas $R_1$, ..., $R_n$. Each of the n transmitting antennas $T_1$, ..., $T_n$ may include a plurality of transmitting antenna elements. Each of the n receiving antennas $R_1$, ..., $R_n$ may include a plurality of receiving antenna elements. Each of the n transmitting antennas $T_1$, ..., $T_n$ may also be referred to as transmitters. Each of n receiving antennas $R_1$, ..., $R_n$ may also be referred to as receivers.

In Section 6 of Chapter 2, the scattering field function is expressed as given by expression (3-2-1) below according to expression (2-6-15).

[Math. 168]

$$\varphi(x_1, y_1, x_2, y_2, z_1, z_2, k)$$

$$= \frac{1}{(2\pi)^3} \int_{-\infty}^{\infty}\int_{-\infty}^{\infty}\int_{-\infty}^{\infty} e^{-i(k_{x_1}x_1 + k_{y_1}y_1 + k_{y_2}y_2)} b(k_{x_1}, k_{y_1}, k_{y_2}, k) e^{s_3 x_2} e^{s_4 z_1} e^{s_5 z_2} dk_{x_1} dk_{y_1} dk_{y_2}$$

$$s_3 = \frac{-ik_{x_1}\sqrt{k^2 - k_{y_2}^2}}{\sqrt{k^2 - k_{y_1}^2}} = \frac{-ik_x\sqrt{k^2 - k_{y_2}^2}}{\sqrt{k^2 - k_{y_1}^2} + \sqrt{k^2 - k_{y_2}^2}}$$

$$s_4 = ik_{z_1} = \frac{i\sqrt{k^2 - k_{y_1}^2}\sqrt{\left(\sqrt{k^2 - k_{y_1}^2} + \sqrt{k^2 - k_{y_2}^2}\right)^2 - (k_{x_1} + is_3)^2}}{\sqrt{k^2 - k_{y_1}^2} + \sqrt{k^2 - k_{y_2}^2}}$$

$$s_5 = ik_{z_2} = \frac{i\sqrt{k^2 - k_{y_2}^2}\sqrt{\left(\sqrt{k^2 - k_{y_1}^2} + \sqrt{k^2 - k_{y_2}^2}\right)^2 - (k_{x_1} + is_3)^2}}{\sqrt{k^2 - k_{y_1}^2} + \sqrt{k^2 - k_{y_2}^2}}$$

$$\cdots (3-2-1)$$

Here, kernel function b($k_{x1}$, $k_{y1}$, $k_{y2}$, k) is assumed to be determined from the measurement results. If the above expression is used as is, a scattering field function and an imaging function similar to those in Section 6 of Chapter 2, where a non-directional antenna is assumed, are obtained. However, the measurement results in the case where a directional antenna is used differ from the measurement results in the case where a non-directional antenna is used. In the scattering field function and the imaging function similar to those in Section 6 of Chapter 2, where a non-directional antenna is assumed, accurate information cannot be obtained from the measurement results with a directional antenna.

The size of the directional antenna is sufficiently large compared to the wavelength of the electromagnetic waves normally used. Therefore, a directional antenna is not regarded as an infinitesimal point, but has a finite size. For simplification, a rectangle of (2a × 2b) is used as the shape of the antenna. Here, the size and shape of the antenna correspond to the size and shape of the transmission area or reception area of the antenna. Here, scattering data measured with an antenna having a finite size is examined. Note that in the scattering field theory of Chapter 2, it is assumed that the antenna is an omnidirectional point antenna.

Like the example explained with reference to FIG. 9 in the previous section, the transmitting antenna and the receiving antenna have a finite size and a rectangular shape. The transmitting antenna transmits radio waves in the z-axis direction, and the receiving antenna receives radio waves from the z-axis direction.

In expression (3-2-1), variables related to the transmission position and reception position are replaced as given by expression (3-2-2) below.
[Math. 169]

$$x_1 \rightarrow x_1 + \xi \qquad y_1 \rightarrow y_1 + \eta$$
$$x_2 \rightarrow x_2 + u \qquad y_2 \rightarrow y_2 + v$$
$$\cdots (3-2-2)$$

The scattering field function is replaced as in expression (3-2-3) below from expression (3-2-1) in accordance with the replacement of variables.
[Math. 170]

$$\varphi(x_1+\xi, y_1+\eta, x_2+u, y_2+v, z_1, z_2, k)$$

$$= \frac{1}{(2\pi)^3} \int_{-\infty}^{\infty}\int_{-\infty}^{\infty}\int_{-\infty}^{\infty} e^{-i\{k_{x_1}(x_1+\xi)+k_{y_1}(y_1+\eta)+k_{y_2}(y_2+v)\}} e^{s_3(x_2+u)}$$

$$\cdot b(k_{x_1}, k_{y_1}, k_{y_2}, k) e^{s_4 z_1} e^{s_5 z_2} dk_{x_1} dk_{y_1} dk_{y_2}$$

$$\cdots (3-2-3)$$

Expression (3-2-4) is obtained by integrating both sides of expression (3-2-3) over the interior of the transmitting and receiving antennas.
[Math. 171]

$$\Phi(x_1, y_1, x_2, y_2, z_1, z_2, k)$$

$$= \frac{1}{(2\pi)^3} \int_{-\infty}^{\infty}\int_{-\infty}^{\infty}\int_{-\infty}^{\infty} \left[ \iint_T \iint_R e^{-i\{k_{x_1}(x_1+\xi)+k_{y_1}(y_1+\eta)+k_{y_2}(y_2+v)\}} e^{s_3(x_2+u)} d\xi d\eta du dv \right]$$

$$\cdot b(k_{x_1}, k_{y_1}, k_{y_2}, k) e^{s_4 z_1} e^{s_5 z_2} dk_{x_1} dk_{y_1} dk_{y_2}$$

$$\cdots (3-2-4)$$

Integration range T is $-a \le \xi \le a$ and $-b \le \eta \le b$, and the integration range R is $-a \le u \le a$ and $-b \le v \le b$. The integration result is obtained as given by expression (3-2-5) below.
[Math. 172]

$$\Phi(x_1, y_1, x_2, y_2, z_1, z_2, k)$$

$$= \frac{1}{(2\pi)^3} \int_{-\infty}^{\infty}\int_{-\infty}^{\infty}\int_{-\infty}^{\infty} e^{-i\left(k_{x_1}x_1+k_{y_1}y_1+k_{y_2}y_2\right)} e^{s_3 x_2}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot b(k_{x_1}, k_{y_1}, k_{y_2}, k) e^{s_4 z_1} e^{s_5 z_2} dk_{x_1} dk_{y_1} dk_{y_2}$$

$$\cdots (3-2-5)$$

Here, the integrand includes function f representing antenna directivity as given by expression (3-2-6) below.
[Math. 173]

$$f(k_{x_1}, k_{y_1}) f(k_{x_2}, k_{y_2}) = \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdots (3-2-6)$$

Next, determining kernel function $b(k_{x1}, k_{y1}, k_{y2}, k)$ is examined. This kernel function is a function related to a non-directional antenna and cannot be strictly determined from results measured with a directional antenna having a finite size.

Here, results measured with a directional antenna having a finite size are used as an approximate value of results obtained with a non-directional antenna. More specifically, results measured with a directional antenna having a finite size are used as an approximate value of results obtained when $\xi$, $\eta$, u, and v are 0.

In this case, it is assumed that the array antenna has the transmission position fixed at $x_1 = 0$ and the reception position fixed at $x_2 = x_1 + d$. Measurement data $\Phi(y_1, y_2, k)$ is obtained at $x_1 = 0$, and satisfies the equation given by expression (3-2-7) below.

[Math. 174]

$$\delta(x_1)\Phi(y_1, y_2, k)$$
$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)}$$
$$\cdot e^{-ik_{x_2}(x_1+d)} b(k_{x_1}, k_{y_1}, k_{y_2}, k) e^{s_4 h_1} e^{s_5 h_2} dk_{x_1} dk_{y_1} dk_{y_2}$$
$$\cdots (3-2-7)$$

By converting variable $k_{x1}$ to $k_x$, expression (3-2-8) below is obtained.

[Math. 175]

$$\delta(x_1)\Phi(y_1, y_2, k)$$
$$= \frac{1}{(2\pi)^3} \int_{-\infty}^{\infty} \int_{-\infty}^{\infty} \int_{-\infty}^{\infty} e^{-i(k_x x_1 + k_{y_1}y_1 + k_{y_2}y_2)}$$
$$\cdot e^{-ik_{x_2}d} b(k_{x_1}, k_{y_1}, k_{y_2}, k) e^{s_4 h_1} e^{s_5 h_2} \left(\frac{dk_{x_1}}{dk_x}\right) dk_x dk_{y_1} dk_{y_2}$$
$$\cdots (3-2-8)$$

By inverse Fourier transforming both sides of expression (3-2-8), expression (3-2-9) below is obtained.

[Math. 176]

$$\iiint e^{i(k_x'x_1 + k_{y_1}'y_1 + k_{y_2}'y_2)} \delta(x_1)\Phi(y_1, y_2, k)dx_1dy_1dy_2$$

$$= \frac{1}{(2\pi)^3} \iiint e^{i(k_x'x_1 + k_{y_1}'y_1 + k_{y_2}'y_2)} \int_{-\infty}^{\infty}\int_{-\infty}^{\infty}\int_{-\infty}^{\infty} e^{-i(k_xx_1 + k_{y_1}y_1 + k_{y_2}y_2)}$$

$$\cdot e^{-ik_{x_2}d} b(k_{x_1}, k_{y_1}, k_{y_2}, k)e^{s_4h_1}e^{s_5h_2}\left(\frac{dk_{x_1}}{dk_x}\right)dk_xdk_{y_1}dk_{y_2}dx_1dy_1dy_2$$

$$\tilde{\Phi}(k_{y_1}', k_{y_2}', k) = \int_{-\infty}^{\infty}\int_{-\infty}^{\infty}\int_{-\infty}^{\infty} \delta(k_x - k_x')\delta(k_{y_1} - k_{y_1}')\delta(k_{y_2} - k_{y_2}')$$

$$\cdot e^{-ik_{x_2}d} b(k_{x_1}, k_{y_1}, k_{y_2}, k)e^{s_4h_1}e^{s_5h_2}\left(\frac{dk_{x_1}}{dk_x}\right)dk_xdk_{y_1}dk_{y_2}$$

$$\tilde{\Phi}(k_{y_1}', k_{y_2}', k) = e^{-ik_{x_2}'d} b(k_{x_1}', k_{y_1}', k_{y_2}', k)e^{s_4'h_1}e^{s_5'h_2}\left(\frac{dk_{x_1}}{dk_x}\right)'$$

$$\cdot \cdot \cdot (3-2-9)$$

By removing the symbol (') from expression (3-2-9), expression (3-2-10) below is obtained.
[Math. 177]

$$b(k_{x_1}, k_{y_1}, k_{y_2}, k) = e^{ik_{x_2}d}e^{-s_4h_1}e^{-s_5h_2}\tilde{\Phi}(k_{y_1}, k_{y_2}, k)\left(\frac{dk_x}{dk_{x_1}}\right)$$

$$\cdot \cdot \cdot (3-2-10)$$

The scattering field function considering directivity is derived as given by expression (3-2-11) below.
[Math. 178]

$$\Phi(x_1, y_1, x_2, y_2, z_1, z_2, k)$$

$$= \frac{1}{(2\pi)^3} \int_{-\infty}^{\infty} \int_{-\infty}^{\infty} \int_{-\infty}^{\infty} e^{-i\left(k_{x_1}x_1 + k_{y_1}y_1 + k_{y_2}y_2\right)} e^{-ik_{x2}x_2} e^{s_4 z_1} e^{s_5 z_2}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot e^{ik_{x_2}d} e^{-s_4 h_1} e^{-s_5 h_2} \tilde{\Phi}(k_{y_1}, k_{y_2}, k) dk_x dk_{y_1} dk_{y_2}$$

$$k_{x_2} = is_3 = \frac{k_{x_1}\sqrt{k^2 - k_{y_2}^2}}{\sqrt{k^2 - k_{y_1}^2}} = \frac{k_x \sqrt{k^2 - k_{y_2}^2}}{\sqrt{k^2 - k_{y_1}^2} + \sqrt{k^2 - k_{y_2}^2}}$$

$$k_x = k_{x_1} + is_3$$

$$k_{z_1} = -is_4 = \frac{\sqrt{k^2 - k_{y_1}^2}\sqrt{\left(\sqrt{k^2 - k_{y_1}^2} + \sqrt{k^2 - k_{y_2}^2}\right)^2 - (k_{x_1} + is_3)^2}}{\sqrt{k^2 - k_{y_1}^2} + \sqrt{k^2 - k_{y_2}^2}}$$

$$k_{z_2} = -is_5 = \frac{\sqrt{k^2 - k_{y_2}^2}\sqrt{\left(\sqrt{k^2 - k_{y_1}^2} + \sqrt{k^2 - k_{y_2}^2}\right)^2 - (k_{x_1} + is_3)^2}}{\sqrt{k^2 - k_{y_1}^2} + \sqrt{k^2 - k_{y_2}^2}}$$

$$\cdots (3-2-11)$$

By applying $x_2 \to x_1 = x$, $y_2 \to y_1 = y$, and $z_1 \to z_2 = z$ to expression (3-2-11) and integrating with respect to k, the imaging function is obtained as given by expression (3-2-12) below.
[Math. 179]

$$\rho(x, y, z)$$

$$= \frac{1}{(2\pi)^3} \int_0^{\infty} \int_{-\infty}^{\infty} \int_{-\infty}^{\infty} \int_{-\infty}^{\infty} e^{-i\left(k_x x + k_{y_1}y + k_{y_2}y\right)} e^{s_4 z} e^{s_5 z}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot e^{ik_{x_2}d} e^{-ik_{z_1}h_1} e^{-ik_{z_2}h_2} \tilde{\Phi}(k_{y_1}, k_{y_2}, k) dk_x dk_{y_1} dk_{y_2} dk$$

$$\cdots (3-2-12)$$

This makes it possible to image an object with high accuracy using a plurality of directional antennas arranged on a curved surface, even in cases where it is difficult to arrange a plurality of directional antennas on a plane.

<3-3. Rotating Directional Antenna>

This section further describes the scattering field theory for a case where the directional antenna shown in the previous section rotates mechanically or electrically, and the direction of directivity for transmission and reception is changed.

For example, a directional antenna mechanically rotating corresponds to the directional antenna physically rotating as a solid object. For example, a directional antenna electrically rotating corresponds to changing the direction of directivity as if the directional antenna is rotating by controlling the transmission or reception timing so that the directional antenna operates as a phased array antenna.

FIG. 11 is a conceptual diagram showing the rotation of the antenna. More specifically, FIG. 11 shows the mechanical or electrical rotation of the antenna about the x-axis. By the antenna mechanically or electrically rotating, the transmission position and the reception position change.

FIG. 12 is a conceptual diagram showing the matrix representation of mechanical or electrical rotation about the x-axis. When the antenna mechanically or electrically rotates by angle $\alpha$ about the x-axis, a point $(\xi, \eta, 0)$ on the antenna surface is transformed as given by expression (3-3-1) below.
[Math. 180]

$$\begin{pmatrix} 1 & 0 & 0 \\ 0 & \cos\alpha & -\sin\alpha \\ 0 & \sin\alpha & \cos\alpha \end{pmatrix} \begin{pmatrix} \xi \\ \eta \\ 0 \end{pmatrix} = \begin{pmatrix} \xi \\ \eta\cos\alpha \\ \eta\sin\alpha \end{pmatrix}$$

$$\cdot\cdot\cdot(3-3-1)$$

Accordingly, in this case, the integrand term of the scattering field function changes as given by expression (3-3-2) below.
[Math. 181]

$$e^{-i\left(k_{x_1}x_1+k_{y_1}y_1+k_{y_2}y_2\right)}e^{s_3x_2}e^{s_4z_1}e^{s_5z_2} \implies$$

$$e^{-i\left\{k_{x_1}(x_1+\xi)+k_{y_1}(y_1+\eta\cos\alpha)+k_{y_2}(y_2+v\cos\alpha)\right\}}e^{-ik_{x_2}(x_2+u)}e^{ik_{z_1}(z_1+\eta\sin\alpha)}e^{ik_{z_2}(z_2+v\sin\alpha)}$$

$$= e^{-i\left\{k_{x_1}x_1+k_{y_1}y_1+k_{y_2}y_2\right\}}e^{-ik_{x_2}x_2}e^{ik_{z_1}z_1}e^{ik_{z_2}z_2}$$

$$\cdot\, e^{-ik_{x_1}\xi}e^{-ik_{y_1}\eta\cos\alpha+ik_{z_1}\eta\sin\alpha}e^{-ik_{x_2}u}e^{-ik_{y_2}v\cos\alpha+ik_{z_2}v\sin\alpha}$$

$$\cdot\cdot\cdot(3-3-2)$$

From expression (3-3-2), the function representing directivity is obtained as given by expression (3-3-3) below.
[Math. 182]

$$f_1(k_{x_1},k_{y_1},k_{z_1}) = \frac{2\sin\left(a(k_{x_1})\right)}{k_{x_1}}\frac{2\sin\left(b(-k_{y_1}\cos\alpha+k_{z_1}\sin\alpha)\right)}{-k_{y_1}\cos\alpha+k_{z_1}\sin\alpha}$$

$$f_2(k_{x_2},k_{y_2},k_{z_2}) = \frac{2\sin\left(a(k_{x_2})\right)}{k_{x_2}}\frac{2\sin\left(b(-k_{y_2}\cos\alpha+k_{z_2}\sin\alpha)\right)}{-k_{y_2}\cos\alpha+k_{z_2}\sin\alpha}$$

$$\cdot\cdot\cdot(3-3-3)$$

FIG. 13 is a conceptual diagram showing the matrix representation of mechanical or electrical rotation about the y-axis. When the antenna mechanically or electrically rotates by angle β about the y-axis, a point (ξ, η, 0) on the antenna surface is transformed as given by expression (3-3-4) below.
[Math. 183]

$$
\begin{pmatrix} \cos\beta & 0 & \sin\beta \\ 0 & 1 & 0 \\ -\sin\beta & 0 & \cos\beta \end{pmatrix}\begin{pmatrix} \xi \\ \eta \\ 0 \end{pmatrix} = \begin{pmatrix} \xi\cos\beta \\ \eta \\ -\xi\sin\beta \end{pmatrix}
$$

$$\cdots (3-3-4)$$

Accordingly, in this case, the integrand term of the scattering field function changes as given by expression (3-3-5) below.
[Math. 184]

$$
e^{-i\left(k_{x_1}x_1+k_{y_1}y_1+k_{y_2}y_2\right)}e^{s_3 x_2}e^{s_4 z_1}e^{s_5 z_2} \Rightarrow
$$

$$
e^{-i\left\{k_{x_1}(x_1+\xi\cos\beta)+k_{y_1}(y_1+\eta)+k_{y_2}(y_2+v)\right\}}e^{s_3(x_2+u\cos\beta)}e^{s_4 z_1}e^{s_5 z_2}
$$

$$
= e^{-i\left\{k_{x_1}x_1+k_{y_1}y_1+k_{y_2}y_2\right\}}e^{s_3 x_2}e^{s_4 z_1}e^{s_5 z_2}e^{-ik_{x_1}\xi\cos\beta-ik_{y_1}\eta}e^{-ik_{x_2}u\cos\beta-ik_{y_2}v}
$$

$$\cdots (3-3-5)$$

From expression (3-3-5), the function representing directivity is obtained as given by expression (3-3-6) below.
[Math. 185]

$$
f_1(k_{x_1},k_{y_1},k_{z_1}) = \frac{2\sin(a(-k_{x_1}\cos\beta))}{-k_{x_1}\cos\beta}\frac{2\sin(bk_{y_1})}{k_{y_1}}
$$

$$
f_2(k_{x_2},k_{y_2},k_{z_2}) = \frac{2\sin(a(-k_{x_2}\cos\beta))}{-k_{x_2}\cos\beta}\frac{2\sin(bk_{y_2})}{k_{y_2}}
$$

$$\cdots (3-3-6)$$

The composition of mechanical or electrical rotation by angle α about the x-axis and mechanical or electrical rotation by angle β about the y-axis is expressed as given by expression (3-3-7) below.
[Math. 186]

$$\begin{pmatrix} 1 & 0 & 0 \\ 0 & \cos\alpha & -\sin\alpha \\ 0 & \sin\alpha & \cos\alpha \end{pmatrix} \begin{pmatrix} \cos\beta & 0 & \sin\beta \\ 0 & 1 & 0 \\ -\sin\beta & 0 & \cos\beta \end{pmatrix}$$

$$= \begin{pmatrix} \cos\beta & 0 & \sin\beta \\ \sin\alpha\sin\beta & \cos\alpha & -\sin\alpha\cos\beta \\ -\cos\alpha\sin\beta & \sin\alpha & \cos\alpha\cos\beta \end{pmatrix}$$

$$\cdots (3-3-7)$$

By this composition, a point $(\xi, \eta, 0)$ in the antenna plane is transformed as given by expression (3-3-8) below.
[Math. 187]

$$\begin{pmatrix} \cos\beta & 0 & \sin\beta \\ \sin\alpha\sin\beta & \cos\alpha & -\sin\alpha\cos\beta \\ -\cos\alpha\sin\beta & \sin\alpha & \cos\alpha\cos\beta \end{pmatrix} \begin{pmatrix} \xi \\ \eta \\ 0 \end{pmatrix} = \begin{pmatrix} \xi\cos\beta \\ \xi\sin\alpha\sin\beta + \eta\cos\alpha \\ -\xi\cos\alpha\sin\beta + \eta\sin\alpha \end{pmatrix}$$

$$\cdots (3-3-8)$$

Accordingly, the integrand term of the scattering field function changes as given by expression (3-3-9) below.
[Math. 188]

$$e^{-i\left(k_{x_1}x_1 + k_{y_1}y_1 + k_{y_2}y_2\right)} e^{s_3 x_2} e^{s_4 z_1} e^{s_5 z_2} \implies$$

$$e^{-i\left\{k_{x_1}(x_1 + \xi\cos\beta) + k_{y_1}(y_1 + \xi\sin\alpha\sin\beta + \eta\cos\alpha) + k_{y_2}(y_2 + u\sin\alpha\sin\beta + v\cos\alpha)\right\}}$$

$$\cdot e^{ik_{x_2}(x_2 + u\cos\beta)} e^{ik_{z_1}(z_1 - \xi\cos\alpha\sin\beta + \eta\sin\alpha)} e^{ik_{z_2}(z_2 - u\cos\alpha\sin\beta + v\sin\alpha)}$$

$$= e^{-i\left\{k_{x_1}x_1 + k_{y_1}y_1 + k_{y_2}y_2\right\}} e^{s_3 x_2} e^{s_4 z_1} e^{s_5 z_2}$$

$$\cdot e^{-ik_{x_1}\xi\cos\beta - ik_{z_1}\xi\cos\alpha\sin\beta - ik_{y_1}\eta\cos\alpha + ik_{z_1}\eta\sin\alpha}$$

$$\cdot e^{-ik_{x_2}u\cos\beta - ik_{z_2}u\cos\alpha\sin\beta - ik_{y_2}v\cos\alpha + ik_{z_2}v\sin\alpha}$$

$$\cdots (3-3-9)$$

From expression (3-3-9), the function representing directivity is obtained as given by expression (3-3-10) below.
[Math. 189]

$$f_1(k_{x_1}, k_{y_1}, k_{z_1})$$

$$= \frac{2\sin(a(-k_{x_1}\cos\beta - k_{z_1}\cos\alpha\sin\beta))}{-k_{x_1}\cos\beta - k_{z_1}\cos\alpha\sin\beta} \frac{2\sin(b(-k_{y_1}\cos\alpha + k_{z_1}\sin\alpha))}{-k_{y_1}\cos\alpha + k_{z_1}\sin\alpha}$$

$$f_2(k_{x_2}, k_{y_2}, k_{z_2})$$

$$= \frac{2\sin(a(-k_{x_2}\cos\beta - k_{z_2}\cos\alpha\sin\beta))}{-k_{x_2}\cos\beta - k_{z_2}\cos\alpha\sin\beta} \frac{2\sin(b(-k_{y_2}\cos\alpha + k_{z_2}\sin\alpha))}{-k_{y_2}\cos\alpha + k_{z_2}\sin\alpha}$$

$$\cdots (3-3-10)$$

In the array antenna arrangement of the previous section, regardless of whether the mechanical or electrical rotation of the antenna is as described above, the scattering field function is expressed as given by expression (3-3-11) below.
[Math. 190]

$$\Phi(x_1, y_1, x_2, y_2, z_1, z_2, k)$$

$$= \frac{1}{(2\pi)^3} \int_{-\infty}^{\infty}\int_{-\infty}^{\infty}\int_{-\infty}^{\infty} e^{-i(k_{x_1}x_1 + k_{y_1}y_1 + k_{y_2}y_2)} e^{-ik_{x_2}x_2} e^{s_4 z_1} e^{s_5 z_2}$$

$$\cdot \left\{ f_1(k_{x_1}, k_{y_1}, k_{z_1}) f_2(k_{x_2}, k_{y_2}, k_{z_2}) \right\}$$

$$\cdot e^{ik_{x_2}d} e^{-s_4 h_1} e^{-s_5 h_2} \tilde{\Phi}(k_{y_1}, k_{y_2}, k) dk_x dk_{y_1} dk_{y_2}$$

$$\cdots (3-3-11)$$

The imaging function is expressed as given by expression (3-3-12) below.
[Math. 191]

$$\rho(x, y, z)$$

$$= \frac{1}{(2\pi)^3} \int_{0}^{\infty}\int_{-\infty}^{\infty}\int_{-\infty}^{\infty}\int_{-\infty}^{\infty} e^{-i(k_x x + k_{y_1}y + k_{y_2}y)} e^{s_4 z} e^{s_5 z}$$

$$\cdot \left\{ f_1(k_{x_1}, k_{y_1}, k_{z_1}) f_2(k_{x_2}, k_{y_2}, k_{z_2}) \right\}$$

$$\cdot e^{ik_{x_2}d} e^{-ik_{z_1}h_1} e^{-ik_{z_2}h_2} \tilde{\Phi}(k_{y_1}, k_{y_2}, k) dk_x dk_{y_1} dk_{y_2} dk$$

$$\cdots (3-3-12)$$

When the directional antenna is mechanically or electrically rotated, it becomes possible to transmit a wave to a distant object and to receive a scattered wave from the distant object in an adaptively determined direction. Accordingly, it becomes possible to image a distant object with high accuracy in an adaptively determined direction.

<3-4. Mechanical or Electrical Rotational Scanning>

FIG. 14 is a conceptual diagram showing the mechanical or electrical rotational scanning. For example, a directional array antenna scans space by mechanically or electrically rotating each antenna.

When a rotation angle of the antenna is $(\alpha, \beta)$, the scattering data is expressed as $\Phi(y_1, y_2, k, \alpha, \beta)$. The Fourier transform with respect to $y_1$ and $y_2$ is expressed as follows.

[Math. 192]

$$\tilde{\Phi}(k_{y_1}, k_{y_2}, k, \alpha, \beta)$$

The directivity functions at that antenna angle are expressed as $f_1(k_{x1}, k_{y1}, k_{z1}, \alpha, \beta)$ and $f_2(k_{x2}, k_{y2}, k_{z2}, \alpha, \beta)$. When these symbols are used, the scattering field function is expressed as given by expression (3-4-1) below.

[Math. 193]

$$\Phi(x_1, y_1, x_2, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{-ik_{x_2}x_2} e^{s_4 z_1} e^{s_5 z_2}$$

$$\cdot \left\{ \sum_{\alpha} \sum_{\beta} f_1(k_{x_1}, k_{y_1}, k_{z_1}, \alpha, \beta) \cdot f_2(k_{x_2}, k_{y_2}, k_{z_2}, \alpha, \beta) \cdot \tilde{\Phi}(k_{y_1}, k_{y_2}, k, \alpha, \beta) \right\}$$

$$\cdot e^{ik_{x_2}d} e^{-s_4 h_1} e^{-s_5 h_2} dk_x dk_{y_1} dk_{y_2}$$

$$\cdots (3-4-1)$$

The imaging function is expressed as given by expression (3-4-2) below.

[Math. 194]

$$\rho(x, y, z)$$

$$= \frac{1}{(2\pi)^3} \int_{0}^{\infty} \int_{-\infty}^{\infty} \int_{-\infty}^{\infty} \int_{-\infty}^{\infty} e^{-i(k_x x + k_{y_1} y + k_{y_2} y)} e^{s_4 z} e^{s_5 z}$$

$$\cdot \left\{ \sum_{\alpha} \sum_{\beta} f_1(k_{x_1}, k_{y_1}, k_{z_1}, \alpha, \beta) \cdot f_2(k_{x_2}, k_{y_2}, k_{z_2}, \alpha, \beta) \cdot \tilde{\Phi}(k_{y_1}, k_{y_2}, k, \alpha, \beta) \right\}$$

$$\cdot e^{ik_{x_2}d} e^{-ik_{z_1}h_1} e^{-ik_{z_2}h_2} dk_x dk_{y_1} dk_{y_2} dk$$

$$\cdots (3-4-2)$$

By mechanical or electrical rotational scanning, it becomes possible to transmit a wave to a distant object in various directions and to receive a scattered wave from the distant object. Accordingly, it becomes possible to image a distant object with high accuracy in various directions.

<3-5. Variation>

In this chapter, the plurality of transmitting antennas and the plurality of receiving antennas have the same size. However, the plurality of transmitting antennas and the plurality of receiving antennas may have different sizes from each other.

In this chapter, the plurality of transmitting antennas and the plurality of receiving antennas have a rectangular shape. However, the plurality of transmitting antennas and the plurality of receiving antennas may have shapes different from a rectangular shape. The plurality of transmitting antennas and the plurality of receiving antennas may have different shapes from each other.

In this chapter, the positions of the plurality of transmitting antennas and the plurality of receiving antennas are fixed, but they may be moved. Accordingly, data corresponding to various positions can be obtained.

In this chapter, the plurality of transmitting antennas and the plurality of receiving antennas are arranged in a semi-two-dimensional array. However, the plurality of transmitting antennas and the plurality of receiving antennas may be arranged in an array different from a semi-two-dimensional array.

In this chapter, the plurality of transmitting antennas are arranged in a single row, and the plurality of receiving antennas are arranged in a single row. However, the plurality of transmitting antennas may be arranged in a plurality of rows, and the plurality of receiving antennas may be arranged in a plurality of rows. For example, a plurality of receiving antenna rows may be arranged for a single transmitting antenna row, or a plurality of transmitting antenna rows may be arranged for a single receiving antenna row.

In this case, the imaging function may be derived by merging of a plurality of scattering field functions that correspond respectively to a plurality of combinations of transmitting array antennas and receiving array antennas. For example, the imaging function may be derived by merging a plurality of scattering field functions into a single scattering field function and performing a limit operation on the scattering field function. Each of the scattering field functions may be any of the scattering field functions given in this chapter, and the merging may be linear addition.

Alternatively, the plurality of transmitting antenna arrays and the plurality of receiving antenna arrays may be arranged alternately. With respect to the direction perpendicular to the rows (i.e., the x-axis direction), data corresponding to various positions may be obtained without moving the antennas.

In this chapter, the number of transmitting antennas included in a single transmitting antenna row is the same as the number of receiving antennas included in a single receiving antenna row. However, the number of transmitting antennas included in a single transmitting antenna row may be different from the number of receiving antennas included in a single receiving antenna row.

In Sections 3 and 4 of this chapter, the plurality of transmitting antennas and the plurality of receiving antennas mechanically or electrically rotate at the same rotation angle. However, the plurality of transmitting antennas and the plurality of receiving antennas may mechanically or electrically rotate at different rotation angles from each other.

Even in the above variation, the scattering field function and the imaging function can be derived based on a theory of the same kind as the theory described above.

<4. Configuration and Operations of Imaging Device>

Based on the contents described above, the configuration and operations of an imaging device for imaging an object in a measurement area using measurement data of scattered waves will be described hereinafter.

The waves used for measuring scattered waves as used herein may, for example, be radio waves or may be other waves such as microwaves, millimeter waves, or terahertz waves. The waves may also be light or sound. The measurement area may be a region in the air, and the object may be a flying object. The object in the measurement area has a physical characteristic that is different from those of the surrounding media. Specifically, the physical characteristic is a physical characteristic that corresponds to the reflectance of the waves. In the case where radio waves are used as the waves, the physical characteristic may be the dielectric constant.

FIG. 15 is a basic schematic diagram of the imaging device according to the present embodiment. Imaging device 100 shown in FIG. 15 includes a plurality of transmitters 101, a plurality of receivers 102, and information processing circuit 103. Imaging device 100 may further include display 104.

Each transmitter 101 is a circuit that transmits waves. More specifically, each transmitter 101 has a transmission area and transmits waves from the transmission area to the measurement area. Each transmitter 101 may be a transmitting antenna or may include a plurality of transmitting elements such as a plurality of transmitting antenna elements.

Each receiver 102 is a circuit that receives scattered waves. More specifically, each receiver 102 has a reception area and receives scattered waves from the measurement area in the reception area. Each receiver 102 may be a receiving antenna or may include a plurality of receiving elements such as a plurality of receiving antenna elements.

Each of the transmission area and the reception area has a finite size. The finite size may be the same for the plurality of transmitters 101 and the plurality of receivers 102. Each of the transmission area and the reception area may have a rectangular shape. The plurality of transmitters 101 and the plurality of receivers 102 may be arranged in a semi-two-dimensional array.

Information processing circuit 103 is a circuit that performs information processing. More specifically, information processing circuit 103 obtains measurement data of scattered waves, and images an object in the measurement area using the measurement data of the scattered waves. For example, information processing circuit 103 may perform computational processing indicated by the theory described above when imaging the object using the measurement data.

Information processing circuit 103 may also be a computer or a processor of a computer. Information processing circuit 103 may perform information processing by reading out a program from memory and executing the program. Alternatively, information processing circuit 103 may be a dedicated circuit that images an object in the measurement area in accordance with measurement data.

Information processing circuit 103 may be capable of communicating with the plurality of transmitters 101 and the plurality of receivers 102. Information processing circuit 103 may control the operation of the plurality of transmitters 101 and the plurality of receivers 102. Information processing circuit 103 may obtain position information and measurement data from the plurality of transmitters 101 and the plurality of receivers 102.

In order to image the object, information processing circuit 103 may generate an image that indicates the object. Information processing circuit 103 may output the image indicating the object on display 104 or the like. Alternatively, information processing circuit 103 may output the image indicating the object to a printer (not illustrated in the drawings). As another alternative, information processing circuit 103 may transmit the image as electronic data to a different device (not illustrated in the drawings) via wired or wireless communication.

Display 104 is a display device such as a liquid crystal display. Note that display 104 is merely an arbitrary element and is not an essential element. Display 104 may be an external device that is not included in the configuration of imaging device 100.

FIG. 16 is a flowchart showing basic operations of imaging device 100 shown in FIG. 15. More specifically, the operations shown in FIG. 16 are performed by the elements of imaging device 100 shown in FIG. 15 such as the plurality of transmitters 101, the plurality of receivers 102, and information processing circuit 103.

First, each transmitter 101 transmits waves from the transmission area to the measurement area (S101). Each receiver 102 receives scattered waves from the measurement area in the reception area (S102).

Next, information processing circuit 103 derives the scattering field function using the measurement data (S103). Here, the scattering field function is a function that receives the transmission position of the wave and the reception position of the scattered wave as input and outputs the amount of the scattered wave at the reception position, and is a function that reflects the respective finite sizes of the transmission area and the reception area.

Information processing circuit 103 derives the imaging function using the scattering field function (S104). The imaging function is a function that receives an imaging target position as input and outputs an image intensity at the imaging target position, and is a function defined based on an amount output from the scattering field function in response to inputting the imaging target position into the scattering field function as the transmission and reception positions.

Finally, information processing circuit 103 images the object in the measurement area using the imaging function (S105).

This allows imaging device 100 to derive the condition of scattering in the measurement area using the measurement data. Accordingly, imaging device 100 is capable of imaging the object in the measurement area with high accuracy. Imaging device 100 is capable of transmitting a wave to a distant object and receiving a scattered wave from the distant object in accordance with the directivity of the transmission area and reception area having finite sizes. Accordingly, imaging device 100 is capable of imaging a distant object in a wide measurement area with high accuracy.

For example, the above finite size may be the same for the plurality of transmitters 101 and the plurality of receivers 102. This allows imaging device 100 to apply the same computational processing in the plurality of transmitters 101 and the plurality of receivers 102. Accordingly, imaging device 100 is capable of avoiding complication of computational processing.

For example, each of the transmission area and the reception area may be a rectangular area. This allows imaging device 100 to perform computational processing corresponding to simple shapes. Accordingly, imaging device 100 is capable of avoiding complication of computational processing.

For example, the plurality of transmitters 101 may be arranged along a straight line. The plurality of receivers 102 may also be arranged along a different straight line that is parallel to the straight line along which the plurality of transmitters 101 are arranged. The distance between the straight line along which transmitters 101 are aligned and the straight line along which receivers 102 are arranged may be reflected in the scattering field function.

In this way, imaging device 100 is capable of obtaining enough measurement data in accordance with a variety of combinations of the plurality of transmitters 101 arranged in a semi-two-dimensional manner and the plurality of receivers 102. Since there is spacing between the plurality of transmitters 101 and the plurality of receivers 102, imaging device 100 is capable of efficiently transmitting waves to the measurement area and efficiently receiving scattered waves from the measurement area.

By using the scattering field function derived in accordance with the measurement data on scattered waves and the distance between the plurality of transmitters 101 and the plurality of receivers 102, imaging device 100 is capable of imaging the object with high accuracy.

For example, the scattering field function may be expressed as shown below.

[Math. 195]

$$\Phi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i\left(k_{x_1}x_1 + k_{y_1}y_1 + k_{y_2}y_2\right)} e^{-ik_{x_2}x_2} e^{ik_z z}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot e^{ik_{x_2}d} \tilde{\Phi}(k_{y_1}, k_{y_2}, k) dk_x dk_{y_1} dk_{y_2}$$

Here, $x_1$ and $y_1$ represent the x-coordinate and y-coordinate of the transmission position. $x_2$ and $y_2$ represent the x-coordinate and y-coordinate of the reception position. Here, z represents the z-coordinate of the transmission position and the reception position. Moreover, k represents the wave number of the wave. Moreover, $k_x$, $k_{y1}$, and $k_{y2}$ represent integration variables. Moreover, d represents the above-mentioned distance.

Also,

[Math. 196]

$$\tilde{\Phi}(k_{y_1}, k_{y_2}, k)$$

represents the measurement data Fourier transformed with respect to $y_1$ and $y_2$.

Moreover, $k_{x1}$, $k_{x2}$, and $k_z$ are defined by the following.

[Math. 197]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_z = \sqrt{\left(\sqrt{k^2 - k_{y_1}^2} + \sqrt{k^2 - k_{y_2}^2}\right)^2 - k_x^2}$$

Moreover, a represents 1/2 of the above-mentioned finite size in the x-axis direction. Moreover, b represents 1/2 of the above-mentioned finite size in the y-axis direction.

This allows imaging device 100 to image the object with high accuracy by using the scattering field function when the transmission position and the reception position have the same z coordinate.

For example, the imaging function may be expressed as shown below.

[Math. 198]

$$\rho(x,y,z)$$

$$= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_z z}$$

$$\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}$$

$$\cdot e^{ik_{x_2} d} \tilde{\Phi}(k_{y_1}, k_{y_2}, k) dk_x dk_{y_1} dk_{y_2} dk$$

Here, x, y, and z input to the imaging function represent the x-coordinate, y-coordinate, and z-coordinate of the imaging target position.

This allows imaging device 100 to image the object with high accuracy by using the imaging function when the transmission position and the reception position have the same z coordinate.

For example, the scattering field function may be expressed as shown below.

[Math. 199]

$$\Phi(x_1, y_1, x_2, y_2, z_1, z_2, k)$$

$$= \frac{1}{(2\pi)^3} \int_{-\infty}^\infty \int_{-\infty}^\infty \int_{-\infty}^\infty e^{-i\left(k_{x_1} x_1 + k_{y_1} y_1 + k_{y_2} y_2\right)} e^{-ik_{x_2} x_2} e^{ik_{z_1} z_1} e^{ik_{z_2} z_2}$$

$$\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}$$

$$\cdot e^{ik_{x_2} d} e^{-ik_{z_1} h_1} e^{-ik_{z_2} h_2} \tilde{\Phi}(k_{y_1}, k_{y_2}, k) dk_x dk_{y_1} dk_{y_2}$$

Here, $x_1$, $y_1$, and $z_1$ represent the x-coordinate, y-coordinate, and z-coordinate of the transmission position. Moreover, $x_2$, $y_2$, and $z_2$ represent the x-coordinate, y-coordinate, and z-coordinate of the reception position. Moreover, k represents the wave number of the wave. Moreover, $k_x$, $k_{y1}$, and $k_{y2}$ represent integration variables. Moreover, d represents the above-mentioned distance in the x-axis direction. Moreover, $h_1$ represents the z-coordinate of the transmission position corresponding to the measurement data. Moreover, $h_2$ represents the z-coordinate of the reception position corresponding to the measurement data.

Also,

[Math. 200]

$$\tilde{\Phi}(k_{y_1}, k_{y_2}, k)$$

represents the measurement data Fourier transformed with respect to $y_1$ and $y_2$.

Moreover, $k_{x1}$, $k_{x2}$, $k_{z1}$, and $k_{z2}$ are defined by the following.

[Math. 201]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_{z_1} = \frac{\sqrt{k^2 - k_{y_1}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$k_{z_2} = \frac{\sqrt{k^2 - k_{y_2}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

Moreover, a represents 1/2 of the above-mentioned finite size in the x-axis direction. Moreover, b represents 1/2 of the above-mentioned finite size in the y-axis direction.

This allows imaging device 100 to image the object with high accuracy by using the scattering field function when the transmission position and the reception position may have different z coordinates.

For example, the imaging function may be expressed as shown below.

[Math. 202]

$$\rho(x, y, z)$$

$$= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_{z_1} z} e^{ik_{z_2} z}$$

$$\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}$$

$$\cdot e^{ik_{x_2} d} e^{-ik_{z_1} h_1} e^{-ik_{z_2} h_2} \tilde{\Phi}(k_{y_1}, k_{y_2}, k) dk_x dk_{y_1} dk_{y_2} dk$$

Here, x, y, and z input to the imaging function represent the x-coordinate, y-coordinate, and z-coordinate of the imaging target position.

This allows imaging device 100 to image the object with high accuracy by using the imaging function when the transmission position and the reception position may have different z coordinates.

For example, each transmitter 101 may change the normal direction of the surface of the transmission area by mechanically or electrically rotating the transmission area. Moreover, each receiver 102 may change the normal direction of the surface of the reception area by mechanically or electrically rotating the reception area. Information processing circuit 103 may image the object in the measurement area using the measurement data after the rotation of the transmission area and the reception area.

In this way, imaging device 100 is capable of changing the normal direction of the surface of each of the transmission area and the reception area. Accordingly, imaging device 100 is capable of changing the direction of directivity of each of the transmission area and the reception area. Accordingly, imaging device 100 is capable of changing the direction of directivity and imaging a distant object in that direction.

For example, the scattering field function may be expressed as shown below.

[Math. 203]

$$\Phi(x_1, y_1, x_2, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{-ik_{x_2}x_2} e^{ik_{z_1}z_1} e^{ik_{z_2}z_2}$$

$$\cdot \left\{ f_1(k_{x_1}, k_{y_1}, k_{z_1}) f_2(k_{x_2}, k_{y_2}, k_{z_2}) \right\}$$

$$\cdot e^{ik_{x_2}d} e^{-ik_{z_1}h_1} e^{-ik_{z_2}h_2} \tilde{\Phi}(k_{y_1}, k_{y_2}, k) dk_x dk_{y_1} dk_{y_2}$$

Here, $x_1$, $y_1$, and $z_1$ represent the x-coordinate, y-coordinate, and z-coordinate of the transmission position. Moreover, $x_2$, $y_2$, and $z_2$ represent the x-coordinate, y-coordinate, and z-coordinate of the reception position. Moreover, k represents the wave number of the wave. Moreover, $k_x$, $k_{y1}$, and $k_{y2}$ represent integration variables. Moreover, d represents the above-mentioned distance in the x-axis direction. Moreover, $h_1$ represents the z-coordinate of the transmission position corresponding to the measurement data. Moreover, $h_2$ represents the z-coordinate of the reception position corresponding to the measurement data.

Also,

[Math. 204]

$$\tilde{\Phi}(k_{y_1}, k_{y_2}, k)$$

represents the measurement data Fourier transformed with respect to $y_1$ and $y_2$.

Moreover, $k_{x1}$, $k_{x2}$, $k_{z1}$, and $k_{z2}$ are defined by the following.

[Math. 205]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_{z_1} = \frac{\sqrt{k^2 - k_{y_1}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$k_{z_2} = \frac{\sqrt{k^2 - k_{y_2}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

Moreover, $f_1$ and $f_2$ are defined by the following.

[Math. 206]

$$f_1(k_{x_1}, k_{y_1}, k_{z_1})$$
$$= \frac{2\sin(a(-k_{x_1}\cos\beta - k_{z_1}\cos\alpha\sin\beta))}{-k_{x_1}\cos\beta - k_{z_1}\cos\alpha\sin\beta} \frac{2\sin(b(-k_{y_1}\cos\alpha + k_{z_1}\sin\alpha))}{-k_{y_1}\cos\alpha + k_{z_1}\sin\alpha}$$

$$f_2(k_{x_2}, k_{y_2}, k_{z_2})$$
$$= \frac{2\sin(a(-k_{x_2}\cos\beta - k_{z_2}\cos\alpha\sin\beta))}{-k_{x_2}\cos\beta - k_{z_2}\cos\alpha\sin\beta} \frac{2\sin(b(-k_{y_2}\cos\alpha + k_{z_2}\sin\alpha))}{-k_{y_2}\cos\alpha + k_{z_2}\sin\alpha}$$

Moreover, a represents 1/2 of the above-mentioned finite size in the x-axis direction. Moreover, b represents 1/2 of the above-mentioned finite size in the y-axis direction. Moreover, $\alpha$ represents the rotation angle for mechanical or electrical rotation of the transmission area and the reception area about the x-axis. Moreover, $\beta$ represents the rotation angle for mechanical or electrical rotation of the transmission area and the reception area about the y-axis.

This allows imaging device 100 to image the object with high accuracy by using the scattering field function when it is capable of changing the direction of directivity.

For example, the imaging function may be expressed as shown below.

[Math. 207]

$$\rho(x,y,z)$$

$$= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_{z_1} z} e^{ik_{z_2} z}$$

$$\cdot \left\{ f_1(k_{x_1}, k_{y_1}, k_{z_1}) f_2(k_{x_2}, k_{y_2}, k_{z_2}) \right\}$$

$$\cdot e^{ik_{x_2}d} e^{-ik_{z_1}h_1} e^{-ik_{z_2}h_2} \tilde{\Phi}(k_{y_1}, k_{y_2}, k) dk_x dk_{y_1} dk_{y_2} dk$$

Here, x, y, and z input to the imaging function represent the x-coordinate, y-coordinate, and z-coordinate of the imaging target position.

This allows imaging device 100 to image the object with high accuracy by using the imaging function when it is capable of changing the direction of directivity.

For example, each transmitter 101 may change the normal direction of the surface of the transmission area to a plurality of directions by mechanically or electrically rotating the transmission area at a plurality of rotation angles. Moreover, each receiver 102 may change the normal direction of the surface of the reception area to a plurality of directions by mechanically or electrically rotating the reception area at a plurality of rotation angles. Information processing circuit 103 may image the object in the measurement area using the measurement data for a plurality of rotation angles for mechanical or electrical rotation.

In this way, imaging device 100 is capable of changing the normal direction of the surface of each of the transmission area and the reception area to a plurality of directions. Accordingly, imaging device 100 is capable of changing the direction of directivity of each of the transmission area and the reception area to a plurality of directions. Accordingly, imaging device 100 is capable of changing the direction of directivity to a plurality of directions and imaging a distant object in a plurality of directions.

For example, the scattering field function may be expressed as shown below.

[Math. 208]

$$\Phi(x_1, y_1, x_2, y_2, z_1, z_2, k)$$

$$= \frac{1}{(2\pi)^3} \int_{-\infty}^\infty \int_{-\infty}^\infty \int_{-\infty}^\infty e^{-i\left(k_{x_1} x_1 + k_{y_1} y_1 + k_{y_2} y_2\right)} e^{-ik_{x_2} x_2} e^{ik_{z_1} z_1} e^{ik_{z_2} z_2}$$

$$\cdot \left\{ \sum_\alpha \sum_\beta f_1(k_{x_1}, k_{y_1}, k_{z_1}, \alpha, \beta) \cdot f_2(k_{x_2}, k_{y_2}, k_{z_2}, \alpha, \beta) \cdot \tilde{\Phi}(k_{y_1}, k_{y_2}, k, \alpha, \beta) \right\}$$

$$\cdot e^{ik_{x_2}d} e^{-ik_{z_1}h_1} e^{-ik_{z_2}h_2} dk_x dk_{y_1} dk_{y_2}$$

Here, $x_1$, $y_1$, and $z_1$ represent the x-coordinate, y-coordinate, and z-coordinate of the transmission position. Moreover, $x_2$, $y_2$, and $z_2$ represent the x-coordinate, y-coordinate, and z-coordinate of the reception position. Moreover, k represents the wave number of the wave. Moreover, $k_x$, $k_{y1}$, and $k_{y2}$ represent integration variables. Moreover, d represents the above-mentioned distance in the x-axis direction. Moreover, $h_1$ represents the z-coordinate of the transmission position corresponding to the measurement data. Moreover, $h_2$ represents the z-coordinate of the reception position corresponding to the measurement data.

Also,

[Math. 209]

$$\tilde{\Phi}(k_{y_1}, k_{y_2}, k, \alpha, \beta)$$

represents the measurement data Fourier transformed with respect to $y_1$ and $y_2$.

Moreover, $k_{x1}$, $k_{x2}$, $k_{z1}$, and $k_{z2}$ are defined by the following.

[Math. 210]

$$k_{x_1} = \frac{k_x \sqrt{k^2 - k_{y_1}^{\,2}}}{\sqrt{k^2 - k_{y_1}^{\,2}} + \sqrt{k^2 - k_{y_2}^{\,2}}}$$

$$k_{x_2} = \frac{k_x \sqrt{k^2 - k_{y_2}^{\,2}}}{\sqrt{k^2 - k_{y_1}^{\,2}} + \sqrt{k^2 - k_{y_2}^{\,2}}}$$

$$k_{z_1} = \frac{\sqrt{k^2 - k_{y_1}^{\,2}} \sqrt{\left(\sqrt{k^2 - k_{y_1}^{\,2}} + \sqrt{k^2 - k_{y_2}^{\,2}}\right)^2 - k_x^{\,2}}}{\sqrt{k^2 - k_{y_1}^{\,2}} + \sqrt{k^2 - k_{y_2}^{\,2}}}$$

$$k_{z_2} = \frac{\sqrt{k^2 - k_{y_2}^{\,2}} \sqrt{\left(\sqrt{k^2 - k_{y_1}^{\,2}} + \sqrt{k^2 - k_{y_2}^{\,2}}\right)^2 - k_x^{\,2}}}{\sqrt{k^2 - k_{y_1}^{\,2}} + \sqrt{k^2 - k_{y_2}^{\,2}}}$$

Moreover, $f_1$ and $f_2$ are defined by the following.

[Math. 211]

$$f_1(k_{x_1}, k_{y_1}, k_{z_1}, \alpha, \beta)$$
$$= \frac{2\sin(a(-k_{x_1}\cos\beta - k_{z_1}\cos\alpha\sin\beta))}{-k_{x_1}\cos\beta - k_{z_1}\cos\alpha\sin\beta} \frac{2\sin(b(-k_{y_1}\cos\alpha + k_{z_1}\sin\alpha))}{-k_{y_1}\cos\alpha + k_{z_1}\sin\alpha}$$

$$f_2(k_{x_2}, k_{y_2}, k_{z_2}, \alpha, \beta)$$
$$= \frac{2\sin(a(-k_{x_2}\cos\beta - k_{z_2}\cos\alpha\sin\beta))}{-k_{x_2}\cos\beta - k_{z_2}\cos\alpha\sin\beta} \frac{2\sin(b(-k_{y_2}\cos\alpha + k_{z_2}\sin\alpha))}{-k_{y_2}\cos\alpha + k_{z_2}\sin\alpha}$$

Moreover, a represents 1/2 of the above-mentioned finite size in the x-axis direction. Moreover, b represents 1/2 of the above-mentioned finite size in the y-axis direction. Moreover, $\alpha$ represents the rotation angle for mechanical or electrical rotation of the transmission area and the reception area about the x-axis. Moreover, $\beta$ represents the rotation angle for mechanical or electrical rotation of the transmission area and the reception area about the y-axis.

This allows imaging device 100 to image the object with high accuracy by using the scattering field function when it is capable of changing the direction of directivity to a plurality of directions.

For example, the imaging function may be expressed as shown below.

[Math. 212]

$$
\rho(x,y,z)
$$

$$
= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_{z_1} z} e^{ik_{z_2} z}
$$

$$
\cdot \left\{ \sum_\alpha \sum_\beta f_1(k_{x_1}, k_{y_1}, k_{z_1}, \alpha, \beta) \cdot f_2(k_{x_2}, k_{y_2}, k_{z_2}, \alpha, \beta) \cdot \tilde{\Phi}(k_{y_1}, k_{y_2}, k, \alpha, \beta) \right\}
$$

$$
\cdot e^{ik_{x_2} d} e^{-ik_{z_1} h_1} e^{-ik_{z_2} h_2} dk_x dk_{y_1} dk_{y_2} dk
$$

Here, x, y, and z input to the imaging function represent the x-coordinate, y-coordinate, and z-coordinate of the imaging target position.

This allows imaging device 100 to image the object with high accuracy by using the imaging function when it is capable of changing the direction of directivity to a plurality of directions.

For example, the wave may be a microwave. This allows imaging device 100 to inhibit attenuation of the wave by moisture in the measurement area.

For example, other elements, expressions, variables, and so on described in the present embodiment are applicable as appropriate to the plurality of transmitters 101, the plurality of receivers 102, information processing circuit 103, the scattering field function, the imaging function, and so on described above as to the basic configuration and the basic operations. The scattering field function, the imaging function, and so on given in the present embodiment may be modified and applied as appropriate. For example, it is possible to use a mathematical expression that represents substantially the same content as that given by the mathematical expression described above, or to use any other mathematical expression derived based on the theory described above.

(Additional Comments)

While some aspects of the imaging device have been described thus far with reference to the embodiment, the modes of the imaging device are not limited to this embodiment. Any modification conceivable by those skilled in the art may be made to the embodiment, and a plurality of elements according to the embodiment may be combined arbitrarily. For example, processing that is executed by a specific element according to the embodiment may be executed by a different element, instead of the specific element. Moreover, a sequence of a plurality of processes may be changed, or a plurality of processes may be executed in parallel.

The imaging method including steps executed by each element of the imaging device may be executed by any arbitrary device or system. For example, part or all of the imaging method may be executed by a computer that includes, for example, a processor, memory, and an input/output circuit. At this time, a program for causing the computer to execute the imaging method may be executed by the computer to execute the imaging method.

The above-described program may be recorded on a non-transitory computer-readable recording medium.

Each element of the imaging device may be configured by dedicated hardware or by general-purpose hardware that executes the above-described program or the like, or may be configured by a combination of them. The general-purpose hardware may be configured by, for example, memory that records the program and a general-purpose processor that reads out and executes the program from the memory. The memory as used herein may, for example, be semiconductor memory or a hard disk, and the general-purpose processor may, for example, be a CPU.

The dedicated hardware may be configured by, for example, memory and a dedicated processor. For example, the dedicated processor may execute the imaging method described above with reference to the memory for recording measurement data.

Each element of the imaging device may be an electric circuit. These electric circuits may be configured as a single electric circuit as a whole, or each may be a different electric circuit. These electric circuits may correspond to dedicated hardware or general-purpose hardware that executes the above-described program or the like.

The imaging device is not limited to being a physically integrated device, and may include a plurality of sub-devices arranged in a distributed manner. The imaging device may also be referred to as an imaging system.

[Industrial Applicability]

One aspect of the present disclosure is useful in an imaging device that images an object in a measurement area using measurement data of scattered waves, and is applicable to an exploration system or the like that explores a distant object in a wide measurement area.

[Reference Signs List]

100 imaging device
101 transmitter
102 receiver
103 information processing circuit
104 display

**Claims**

1.  An imaging device comprising:

    a plurality of transmitters each of which includes a transmission area and transmits a wave from the transmission area to a measurement area;
    a plurality of receivers each of which includes a reception area and receives, in the reception area, a scattered wave of the wave from the measurement area; and
    an information processing circuit that images an object in the measurement area using measurement data of the scattered wave, wherein
    each of the transmission area and the reception area has a finite size, and
    the information processing circuit:

    derives, using the measurement data, a scattering field function that receives a transmission position of the wave and a reception position of the scattered wave as input and outputs an amount of the scattered wave at the reception position, the finite size being reflected in the scattering field function;
    derives an imaging function that receives an imaging target position as input and outputs an image intensity at the imaging target position, and is defined based on an amount output from the scattering field function in response to inputting the imaging target position into the scattering field function as the transmission position and the reception position; and
    images the object in the measurement area using the imaging function.

2.  The imaging device according to claim 1, wherein
    the finite size is same for the plurality of transmitters and the plurality of receivers.

3.  The imaging device according to claim 1 or 2, wherein
    each of the transmission area and the reception area is a rectangular area.

4.  The imaging device according to claim 1 or 2, wherein

    the plurality of transmitters are arranged along a straight line,
    the plurality of receivers are arranged along a straight line that is different from and parallel to the straight line along which the plurality of transmitters are arranged, and
    a distance between the straight line along which the plurality of transmitters are arranged and the straight line along which the plurality of receivers are arranged is reflected in the scattering field function.

5.  The imaging device according to claim 4, wherein
    the scattering field function is expressed as:

[Math. 1]

$$\Phi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i\left(k_{x_1}x_1 + k_{y_1}y_1 + k_{y_2}y_2\right)} e^{-ik_{x_2}x_2} e^{ik_z z}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot e^{ik_{x_2}d} \tilde{\Phi}(k_{y_1}, k_{y_2}, k) dk_x dk_{y_1} dk_{y_2}$$

where $x_1$ and $y_1$ respectively represent an x-coordinate and a y-coordinate of the transmission position, $x_2$ and $y_2$ respectively represent an x-coordinate and a y-coordinate of the reception position, z represents a z-coordinate of the transmission position and the reception position, k represents a wavenumber of the wave, $k_x$, $k_{y1}$, and $k_{y2}$ represent integration variables, and d represents the distance,

[Math. 2]

$$\tilde{\Phi}(k_{y_1}, k_{y_2}, k)$$

represents the measurement data Fourier transformed with respect to $y_1$ and $y_2$, and $k_{x1}$, $k_{x2}$, and $k_z$ are defined by:

[Math. 3]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_z = \sqrt{\left(\sqrt{k^2 - k_{y_1}^2} + \sqrt{k^2 - k_{y_2}^2}\right)^2 - k_x^2}$$

where a represents 1/2 of the finite size in an x-axis direction, and b represents 1/2 of the finite size in a y-axis direction.

6. The imaging device according to claim 5, wherein the imaging function is expressed as:

[Math. 4]

$$\rho(x,y,z)$$

$$= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_z z}$$

$$\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}$$

$$\cdot e^{ik_{x_2} d} \tilde{\Phi}(k_{y_1}, k_{y_2}, k) dk_x dk_{y_1} dk_{y_2} dk$$

where x, y, and z input to the imaging function respectively represent an x-coordinate, a y-coordinate, and a z-coordinate of the imaging target position.

7. The imaging device according to claim 4, wherein the scattering field function is expressed as:

[Math. 5]

$$\Phi(x_1, y_1, x_2, y_2, z_1, z_2, k)$$

$$= \frac{1}{(2\pi)^3} \int_{-\infty}^\infty \int_{-\infty}^\infty \int_{-\infty}^\infty e^{-i\left(k_{x_1} x_1 + k_{y_1} y_1 + k_{y_2} y_2\right)} e^{-ik_{x_2} x_2} e^{ik_{z_1} z_1} e^{ik_{z_2} z_2}$$

$$\cdot \left\{ \frac{2\sin(k_{x_1} a)}{k_{x_1}} \frac{2\sin(k_{y_1} b)}{k_{y_1}} \frac{2\sin(k_{x_2} a)}{k_{x_2}} \frac{2\sin(k_{y_2} b)}{k_{y_2}} \right\}$$

$$\cdot e^{ik_{x_2} d} e^{-ik_{z_1} h_1} e^{-ik_{z_2} h_2} \tilde{\Phi}(k_{y_1}, k_{y_2}, k) dk_x dk_{y_1} dk_{y_2}$$

where $x_1$, $y_1$, and $z_1$ respectively represent an x-coordinate, a y-coordinate, and a z-coordinate of the transmission position, $x_2$, $y_2$, and $z_2$ respectively represent an x-coordinate, a y-coordinate, and a z-coordinate of the reception position, k represents a wavenumber of the wave, $k_x$, $k_{y1}$, and $k_{y2}$ represent integration variables, d represents the distance in an x-axis direction, $h_1$ represents a z-coordinate of the transmission position corresponding to the measurement data, and $h_2$ represents a z-coordinate of the reception position corresponding to the measurement data,

[Math. 6]

$$\tilde{\Phi}(k_{y_1}, k_{y_2}, k)$$

represents the measurement data Fourier transformed with respect to $y_1$ and $y_2$, and $k_{x1}$, $k_{x2}$, $k_{z1}$, and $k_{z2}$ are defined by:

[Math. 7]

$$k_{x_1} = \frac{k_x\sqrt{k^2 - k_{y_1}^2}}{\sqrt{k^2 - k_{y_1}^2} + \sqrt{k^2 - k_{y_2}^2}}$$

$$k_{x_2} = \frac{k_x\sqrt{k^2 - k_{y_2}^2}}{\sqrt{k^2 - k_{y_1}^2} + \sqrt{k^2 - k_{y_2}^2}}$$

$$k_{z_1} = \frac{\sqrt{k^2 - k_{y_1}^2}\sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$k_{z_2} = \frac{\sqrt{k^2 - k_{y_2}^2}\sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

where a represents 1/2 of the finite size in an x-axis direction, and b represents 1/2 of the finite size in a y-axis direction.

8. The imaging device according to claim 7, wherein the imaging function is expressed as:

[Math. 8]

$$\rho(x, y, z)$$

$$= \frac{1}{(2\pi)^3}\int_0^\infty \int_{-\infty}^\infty \int_{-\infty}^\infty \int_{-\infty}^\infty e^{-i\left(k_x x + k_{y_1} y + k_{y_2} y\right)} e^{ik_{z_1}z} e^{ik_{z_2}z}$$

$$\cdot \left\{ \frac{2\sin(k_{x_1}a)}{k_{x_1}} \frac{2\sin(k_{y_1}b)}{k_{y_1}} \frac{2\sin(k_{x_2}a)}{k_{x_2}} \frac{2\sin(k_{y_2}b)}{k_{y_2}} \right\}$$

$$\cdot e^{ik_{x_2}d} e^{-ik_{z_1}h_1} e^{-ik_{z_2}h_2} \tilde{\Phi}(k_{y_1}, k_{y_2}, k) dk_x dk_{y_1} dk_{y_2} dk$$

where x, y, and z input to the imaging function respectively represent an x-coordinate, a y-coordinate, and a z-coordinate of the imaging target position.

9. The imaging device according to claim 4, wherein

each of the plurality of transmitters changes a normal direction of a surface of the transmission area by mechanically or electrically rotating the transmission area,
each of the plurality of receivers changes a normal direction of a surface of the reception area by mechanically or electrically rotating the reception area, and

the information processing circuit images the object in the measurement area using the measurement data after rotation of the transmission area and the reception area.

10. The imaging device according to claim 9, wherein
the scattering field function is expressed as:

[Math. 9]

$$\Phi(x_1, y_1, x_2, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{-ik_{x_2}x_2} e^{ik_{z_1}z_1} e^{ik_{z_2}z_2}$$

$$\cdot \left\{ f_1(k_{x_1}, k_{y_1}, k_{z_1}) f_2(k_{x_2}, k_{y_2}, k_{z_2}) \right\}$$

$$\cdot e^{ik_{x_2}d} e^{-ik_{z_1}h_1} e^{-ik_{z_2}h_2} \tilde{\Phi}(k_{y_1}, k_{y_2}, k) dk_x dk_{y_1} dk_{y_2}$$

where $x_1$, $y_1$, and $z_1$ respectively represent an x-coordinate, a y-coordinate, and a z-coordinate of the transmission position, $x_2$, $y_2$, and $z_2$ respectively represent an x-coordinate, a y-coordinate, and a z-coordinate of the reception position, k represents a wavenumber of the wave, $k_x$, $k_{y1}$, and $k_{y2}$ represent integration variables, d represents the distance in an x-axis direction, $h_1$ represents a z-coordinate of the transmission position corresponding to the measurement data, and $h_2$ represents a z-coordinate of the reception position corresponding to the measurement data,

[Math. 10]

$$\tilde{\Phi}(k_{y_1}, k_{y_2}, k)$$

represents the measurement data Fourier transformed with respect to $y_1$ and $y_2$, $k_{x1}$, $k_{x2}$, $k_{z1}$, and $k_{z2}$ are defined by:

[Math. 11]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_{z_1} = \frac{\sqrt{k^2 - k_{y_1}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$k_{z_2} = \frac{\sqrt{k^2 - k_{y_2}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

and $f_1$ and $f_2$ are defined by:

[Math. 12]

$$f_1(k_{x_1}, k_{y_1}, k_{z_1})$$

$$= \frac{2\sin(a(-k_{x_1}\cos\beta - k_{z_1}\cos\alpha\sin\beta))}{-k_{x_1}\cos\beta - k_{z_1}\cos\alpha\sin\beta} \frac{2\sin(b(-k_{y_1}\cos\alpha + k_{z_1}\sin\alpha))}{-k_{y_1}\cos\alpha + k_{z_1}\sin\alpha}$$

$$f_2(k_{x_2}, k_{y_2}, k_{z_2})$$

$$= \frac{2\sin(a(-k_{x_2}\cos\beta - k_{z_2}\cos\alpha\sin\beta))}{-k_{x_2}\cos\beta - k_{z_2}\cos\alpha\sin\beta} \frac{2\sin(b(-k_{y_2}\cos\alpha + k_{z_2}\sin\alpha))}{-k_{y_2}\cos\alpha + k_{z_2}\sin\alpha}$$

where a represents 1/2 of the finite size in an x-axis direction, b represents 1/2 of the finite size in a y-axis direction, $\alpha$ represents a rotation angle for mechanical or electrical rotation of the transmission area and the reception area about an x-axis, and $\beta$ represents a rotation angle for mechanical or electrical rotation of the transmission area and the reception area about a y-axis.

**11.** The imaging device according to claim 10, wherein the imaging function is expressed as:

[Math. 13]

$$\rho(x,y,z)$$
$$= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_{z_1} z} e^{ik_{z_2} z}$$
$$\cdot \left\{ f_1(k_{x_1}, k_{y_1}, k_{z_1}) f_2(k_{x_2}, k_{y_2}, k_{z_2}) \right\}$$
$$\cdot e^{ik_{x_2} d} e^{-ik_{z_1} h_1} e^{-ik_{z_2} h_2} \tilde{\Phi}(k_{y_1}, k_{y_2}, k) dk_x dk_{y_1} dk_{y_2} dk$$

where x, y, and z input to the imaging function respectively represent an x-coordinate, a y-coordinate, and a z-coordinate of the imaging target position.

12. The imaging device according to claim 4, wherein

each of the plurality of transmitters changes a normal direction of a surface of the transmission area to a plurality of directions by mechanically or electrically rotating the transmission area at a plurality of rotation angles, each of the plurality of receivers changes a normal direction of a surface of the reception area to the plurality of directions by mechanically or electrically rotating the reception area at the plurality of rotation angles, and the information processing circuit images the object in the measurement area using the measurement data for the plurality of rotation angles for mechanical or electrical rotation.

13. The imaging device according to claim 12, wherein the scattering field function is expressed as:

[Math. 14]

$$\Phi(x_1, y_1, x_2, y_2, z_1, z_2, k)$$
$$= \frac{1}{(2\pi)^3} \int_{-\infty}^\infty \int_{-\infty}^\infty \int_{-\infty}^\infty e^{-i\left(k_{x_1} x_1 + k_{y_1} y_1 + k_{y_2} y_2\right)} e^{-ik_{x_2} x_2} e^{ik_{z_1} z_1} e^{ik_{z_2} z_2}$$
$$\cdot \left\{ \sum_\alpha \sum_\beta f_1(k_{x_1}, k_{y_1}, k_{z_1}, \alpha, \beta) \cdot f_2(k_{x_2}, k_{y_2}, k_{z_2}, \alpha, \beta) \cdot \tilde{\Phi}(k_{y_1}, k_{y_2}, k, \alpha, \beta) \right\}$$
$$\cdot e^{ik_{x_2} d} e^{-ik_{z_1} h_1} e^{-ik_{z_2} h_2} dk_x dk_{y_1} dk_{y_2}$$

where $x_1$, $y_1$, and $z_1$ respectively represent an x-coordinate, a y-coordinate, and a z-coordinate of the transmission position, $x_2$, $y_2$, and $z_2$ respectively represent an x-coordinate, a y-coordinate, and a z-coordinate of the reception position, k represents a wavenumber of the wave, $k_x$, $k_{y1}$, and $k_{y2}$ represent integration variables, d represents the distance in an x-axis direction, $h_1$ represents a z-coordinate of the transmission position corresponding to the measurement data, and $h_2$ represents a z-coordinate of the reception position corresponding to the measurement data,

[Math. 15]

$$\tilde{\Phi}(k_{y_1}, k_{y_2}, k, \alpha, \beta)$$

represents the measurement data Fourier transformed with respect to $y_1$ and $y_2$, $k_{x1}$, $k_{x2}$, $k_{z1}$, and $k_{z2}$ are defined by:

[Math. 16]

$$k_{x_1} = \frac{k_x \sqrt{k^2 - k_{y_1}^2}}{\sqrt{k^2 - k_{y_1}^2} + \sqrt{k^2 - k_{y_2}^2}}$$

$$k_{x_2} = \frac{k_x \sqrt{k^2 - k_{y_2}^2}}{\sqrt{k^2 - k_{y_1}^2} + \sqrt{k^2 - k_{y_2}^2}}$$

$$k_{z_1} = \frac{\sqrt{k^2 - k_{y_1}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

$$k_{z_2} = \frac{\sqrt{k^2 - k_{y_2}^2} \sqrt{\left(\sqrt{k^2 - k_{y_1}^2} + \sqrt{k^2 - k_{y_2}^2}\right)^2 - k_x^2}}{\sqrt{k^2 - k_{y_1}^2} + \sqrt{k^2 - k_{y_2}^2}}$$

and $f_1$ and $f_2$ are defined by:

[Math. 17]

$$f_1(k_{x_1}, k_{y_1}, k_{z_1}, \alpha, \beta)$$

$$= \frac{2\sin(a(-k_{x_1}\cos\beta - k_{z_1}\cos\alpha\sin\beta))}{-k_{x_1}\cos\beta - k_{z_1}\cos\alpha\sin\beta} \frac{2\sin(b(-k_{y_1}\cos\alpha + k_{z_1}\sin\alpha))}{-k_{y_1}\cos\alpha + k_{z_1}\sin\alpha}$$

$$f_2(k_{x_2}, k_{y_2}, k_{z_2}, \alpha, \beta)$$

$$= \frac{2\sin(a(-k_{x_2}\cos\beta - k_{z_2}\cos\alpha\sin\beta))}{-k_{x_2}\cos\beta - k_{z_2}\cos\alpha\sin\beta} \frac{2\sin(b(-k_{y_2}\cos\alpha + k_{z_2}\sin\alpha))}{-k_{y_2}\cos\alpha + k_{z_2}\sin\alpha}$$

where a represents 1/2 of the finite size in an x-axis direction, b represents 1/2 of the finite size in a y-axis direction, $\alpha$ represents a rotation angle for mechanical or electrical rotation of the transmission area and the reception area about an x-axis, and $\beta$ represents a rotation angle for mechanical or electrical rotation of the transmission area and the reception area about a y-axis.

**14.** The imaging device according to claim 13, wherein
the imaging function is expressed as:

[Math. 18]

$$
\rho(x, y, z)
$$

$$
= \frac{1}{(2\pi)^3} \int_0^\infty \int_{-\infty}^\infty \int_{-\infty}^\infty \int_{-\infty}^\infty e^{-i\left(k_x x + k_{y_1} y + k_{y_2} y\right)} e^{ik_{z_1} z} e^{ik_{z_2} z}
$$

$$
\cdot \left\{ \sum_\alpha \sum_\beta f_1(k_{x_1}, k_{y_1}, k_{z_1}, \alpha, \beta) \cdot f_2(k_{x_2}, k_{y_2}, k_{z_2}, \alpha, \beta) \cdot \tilde{\Phi}(k_{y_1}, k_{y_2}, k, \alpha, \beta) \right\}
$$

$$
\cdot e^{ik_{x_2} d} e^{-ik_{z_1} h_1} e^{-ik_{z_2} h_2} dk_x dk_{y_1} dk_{y_2} dk
$$

where x, y, and z input to the imaging function respectively represent an x-coordinate, a y-coordinate, and a z-coordinate of the imaging target position.

**15.** An imaging method comprising:

transmitting, by a plurality of transmitters each of which includes a transmission area, a wave from the transmission area of each of the plurality of transmitters to a measurement area;
receiving, by a plurality of receivers each of which includes a reception area, a scattered wave of the wave from the measurement area, in the reception area of each of the plurality of receivers; and
imaging an object in the measurement area using measurement data of the scattered wave, wherein
each of the transmission area and the reception area has a finite size, and
the imaging of the object in the measurement area includes:

deriving, using the measurement data, a scattering field function that receives a transmission position of the wave and a reception position of the scattered wave as input and outputs an amount of the scattered wave at the reception position, the finite size being reflected in the scattering field function;
deriving an imaging function that receives an imaging target position as input and outputs an image intensity at the imaging target position, and is defined based on an amount output from the scattering field function in response to inputting the imaging target position into the scattering field function as the transmission position and the reception position; and
imaging the object in the measurement area using the imaging function.

# FIG. 1

EP 4 628 933 A1

# FIG. 2

# FIG. 3

$P(\xi, \eta, \zeta)$

$\rho_1$

$\rho_2$

Profile curve S

$P_1(x, y_1, z_1)$
$z_1 = f(y_1)$

$P_2(x, y_2, z_2)$
$z_2 = f(y_2)$

z

y

FIG. 4

# FIG. 5

FIG. 6

FIG. 7

# FIG. 8

EP 4 628 933 A1

# FIG. 9

Transmitting antenna with finite size

Receiving antenna with finite size

EP 4 628 933 A1

# FIG. 10

Transmitting array antenna TA

$T_n$

$T_2$

$T_1$

$y_1$

2b

2a

$z_1=h_1$

$z_2=h_2$

$x_1=0$

$x_2=d$

$R_n$

$y_2$

$R_2$

$R_1$

Receiving array antenna RA

FIG. 11

# FIG. 12

Rotation by angle α about x-axis

$$R_x(\alpha) = \begin{pmatrix} 1 & 0 & 0 \\ 0 & \cos\alpha & -\sin\alpha \\ 0 & \sin\alpha & \cos\alpha \end{pmatrix}$$

# FIG. 13

Rotation by angle β about y-axis

$$R_y(\beta) = \begin{pmatrix} \cos\beta & 0 & \sin\beta \\ 0 & 1 & 0 \\ -\sin\beta & 0 & \cos\beta \end{pmatrix}$$

# FIG. 14

Rotational scanning based on
rotation angle α about x-axis and
rotation angle β about y-axis

Transmitting
array antenna
TA

$T_n$

$T_2$

$T_1$

$y_1$

2b

2a

$z_1 = h_1$

$R_n$

$y_2$

$R_2$

$R_1$

Receiving array
antenna RA

$z_2 = h_2$

$x_1 = 0$

$x_2 = d$

z

y

x

# FIG. 15

# FIG. 16

## INTERNATIONAL SEARCH REPORT

International application No.

**PCT/JP2023/040268**

| A. | CLASSIFICATION OF SUBJECT MATTER |
|---|---|

*G01S 13/89*(2006.01)i; *G01S 7/02*(2006.01)i
FI:  G01S13/89; G01S7/02 210

According to International Patent Classification (IPC) or to both national classification and IPC

| B. | FIELDS SEARCHED |
|---|---|

Minimum documentation searched (classification system followed by classification symbols)

G01S7/00 - G01S7/42; G01S13/00 - G01S13/95; G01N22/00 - G01N22/04; A61B10/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/053971 A1 (INTEGRAL GEOMETRY SCIENCE INCORPORATED) 25 March 2021 (2021-03-25)<br>entire text, all drawings | 1-15 |
| A | WO 2017/057524 A1 (NATIONAL UNIVERSITY CORPORATION KOBE UNIVERSITY, INTEGRAL GEOMETRY SCIENCE INCORPORATED) 06 April 2017 (2017-04-06)<br>entire text, all drawings | 1-15 |
| A | JP 2022-108434 A (UNIVERSITY OF ELECTRO-COMMUNICATIONS, FUJI ELECTRIC COMPANY, LIMITED) 26 July 2022 (2022-07-26)<br>entire text, all drawings | 1-15 |
| A | JP 2022-509551 A (MITSUBISHI ELECTRIC CORPORATION) 20 January 2022 (2022-01-20)<br>entire text, all drawings | 1-15 |
| A | US 2019/0339380 A1 (DUKE UNIVERSITY) 07 November 2019 (2019-11-07)<br>entire text, all drawings | 1-15 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2023/040268** |

| Patent document cited in search report | | | Publication date (day/month/year) | Patent family member(s) | | | Publication date (day/month/year) |
|---|---|---|---|---|---|---|---|
| WO | 2021/053971 | A1 | 25 March 2021 | US | 2022/0319067 | A1 | |
| | | | | entire text, all drawings | | | |
| | | | | EP | 4033228 | A1 | |
| | | | | CN | 114390908 | A | |
| | | | | KR | 10-2022-0062270 | A | |
| | | | | AU | 2020348001 | A1 | |
| | | | | CA | 3153233 | A1 | |
| | | | | IL | 290774 | A | |
| | | | | TW | 202115738 | A | |
| WO | 2017/057524 | A1 | 06 April 2017 | US | 2018/0308259 | A1 | |
| | | | | entire text, all drawings | | | |
| | | | | EP | 3358338 | A1 | |
| | | | | CN | 108139340 | A | |
| | | | | DK | 3358338 | T3 | |
| | | | | PT | 3358338 | T | |
| | | | | PL | 3358338 | T3 | |
| | | | | ES | 2918590 | T3 | |
| | | | | HU | E059413 | T2 | |
| JP | 2022-108434 | A | 26 July 2022 | (Family: none) | | | |
| JP | 2022-509551 | A | 20 January 2022 | US | 2020/0271577 | A1 | |
| | | | | entire text, all drawings | | | |
| | | | | WO | 2020/174743 | A1 | |
| | | | | CN | 113454686 | A | |
| US | 2019/0339380 | A1 | 07 November 2019 | WO | 2017/223386 | A1 | |
| | | | | entire text, all drawings | | | |

Form PCT/ISA/210 (patent family annex) (January 2015)

**REFERENCES CITED IN THE DESCRIPTION**

**Patent documents cited in the description**

- JP S6266145 A
- WO 2014125815 A
- WO 2015136936 A
- WO 2021020387 A
- WO 2021053971 A